(19) Europäisches Patentamt / European Patent Office / Office européen des brevets

(11) **EP 4 024 198 A1**

(12) # EUROPEAN PATENT APPLICATION
published in accordance with Art. 153(4) EPC

(43) Date of publication:
**06.07.2022 Bulletin 2022/27**

(21) Application number: **20859106.5**

(22) Date of filing: **14.07.2020**

(51) International Patent Classification (IPC):
$G06F\ 7/483$ $^{(2006.01)}$  $G06N\ 3/063$ $^{(2006.01)}$
$G06F\ 17/10$ $^{(2006.01)}$  $G06F\ 17/16$ $^{(2006.01)}$

(52) Cooperative Patent Classification (CPC):
**G06F 7/483; G06F 17/10; G06F 17/16; G06N 3/063**

(86) International application number:
**PCT/JP2020/027324**

(87) International publication number:
**WO 2021/039164 (04.03.2021 Gazette 2021/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.08.2019 JP 2019154141**

(71) Applicant: **Sony Group Corporation
Tokyo 108-0075 (JP)**

(72) Inventors:
• **TAKAGI, Satoshi**
  **Tokyo 108-0075 (JP)**
• **KIYOTA, Koji**
  **Tokyo 108-0075 (JP)**
• **HORIE, Hirotaka**
  **Tokyo 108-0075 (JP)**

(74) Representative: **2SPL Patentanwälte PartG mbB
Landaubogen 3
81373 München (DE)**

(54) **INFORMATION PROCESSING DEVICE, INFORMATION PROCESSING SYSTEM, AND INFORMATION PROCESSING METHOD**

(57)   A processing load related to an inner product operation is further reduced and a quantization granularity of a weigh coefficient is guaranteed. An information processing apparatus according to an embodiment includes: a product-sum operation circuit (200) configured to execute a product-sum operation on the basis of a plurality of input values quantized by power expression and a plurality of weigh coefficients quantized by power expression corresponding to the respective input values, in which an exponent of each of the input values is expressed by a fraction having a predetermined divisor in a denominator, an exponent of each of the weigh coefficients is expressed by a fraction having the divisor in a denominator, the product-sum operation circuit executes the product-sum operation using a plurality of addition multipliers based on a remainder when a value obtained by adding a numerator related to the exponent of each of the input values and a numerator related to the exponent of each of the weigh coefficients is divided as a dividend, and each of the addition multipliers is a floating-point number with an exponent part having a radix of 2.

FIG.34

EP 4 024 198 A1

**Description**

Field

The present disclosure relates to an information processing apparatus, an information processing system, and an information processing method.

Background

In recent years, a neural network which is a mathematical model imitating a mechanism of a cranial nervous system has attracted attention. In addition, various methods for reducing the processing load of an operation in the neural network have been proposed. For example, Non Patent Literature 1 describes a method of reducing a processing load by binarizing a weigh coefficient. In addition, Non Patent Literature 2 describes a method of converting multiplication into addition by converting an input signal into a log domain.

Citation List

Non Patent Literature

Non Patent Literature 1: Matthieu Courbariaux and two others, "BinaryConnect: Training Deep Neural Networks with binary weights during propagations", [online], November 2, 2015, arXiv, [searched on March 22, 2017], Internet <URL: https://arxiv.org/pdf/1511.00363.pdf>

Non Patent Literature 2: Daisuke Miyashita and two others, "Convolutional Neural Networks using Logarithmic Data Representation", [online], March 3, 2016, arXiv, [searched on March 22, 2017], Internet <URL: https://arxiv.org/pdf/1603.01025.pdf>

Summary

Technical Problem

However, in the method described in Non Patent Literature 1, since binarization using +1 or -1 is performed, it is assumed that the quantization granularity becomes rough as the number of dimensions of the weigh coefficient increases. In addition, although the method described in Non Patent Literature 2 has a predetermined effect in avoiding multiplication, it is assumed that there is more room for reducing the processing load.

Therefore, the present disclosure proposes new and improved information processing apparatus, information processing system, and information processing method capable of further reducing the processing load related to an inner product operation and guaranteeing the quantization granularity of the weigh coefficient. Solution to Problem

To solve the above-described problem, an information processing apparatus according to one aspect of the present disclosure comprises: a product-sum operation circuit configured to execute a product-sum operation on the basis of a plurality of input values quantized by power expression and a plurality of weigh coefficients quantized by power expression corresponding to the respective input values, wherein an exponent of each of the input values is expressed by a fraction having a predetermined divisor in a denominator, an exponent of each of the weigh coefficients is expressed by a fraction having the divisor in a denominator, the product-sum operation circuit executes the product-sum operation using a plurality of addition multipliers based on a remainder when a value obtained by adding a numerator related to the exponent of each of the input values and a numerator related to the exponent of each of the weigh coefficients is divided as a dividend, and each of the addition multipliers is a floating-point number with an exponent part having a radix of 2.

Brief Description of Drawings

FIG. 1 is a conceptual diagram for explaining an outline of elementary operations in a neural network according to a related technology of the present disclosure.
FIG. 2 is a schematic diagram for explaining an inner product operation of an input vector and a weight vector according to the related technology of the present disclosure.

FIG. 3 is a diagram for explaining a weight vector binary-quantized in a two-dimensional space according to the related technology of the present disclosure.

FIG. 4 is a diagram for explaining a weight vector quaternary-quantized in a two-dimensional space according to the related technology of the present disclosure.

FIG. 5 is a diagram for explaining variations in granularity of weight vectors in a three-dimensional space according to the related technology of the present disclosure.

FIG. 6 is a diagram for explaining variations in granularity of weight vectors in an N-dimensional space according to the related technology of the present disclosure.

FIG. 7 is an example of a functional block diagram of an information processing apparatus according to a base technology.

FIG. 8 is an example of a circuit block diagram of a product-sum operation circuit included in an information processing apparatus according to the base technology.

FIG. 9 is an example of offset notations related to address information held in an address table according to the base technology.

FIG. 10 is a diagram illustrating a processing image of an information processing method according to the base technology.

FIG. 11 is a diagram for explaining a quantization granularity $\Delta\theta$ according to the base technology.

FIG. 12 is a graph illustrating a maximum value of a quantization granularity $\Delta\theta$ according to $\alpha$ according to the base technology.

FIG. 13 is a diagram for explaining a maximum power according to the base technology.

FIG. 14 is a diagram illustrating an example of the number of times of multiplication with respect to the number of inputs N according to the base technology.

FIG. 15 is a diagram illustrating an example of the number of times of multiplication with respect to the number of inputs N according to the base technology.

FIG. 16 is an example of a product-sum operation circuit in a case where a weight vector according to a development example of the base technology is quantized.

FIG. 17 is an example of a product-sum operation circuit in a case where both a weight vector and an input vector according to a development example of the base technology are quantized.

FIG. 18 is an example of a product-sum operation circuit in a case where both a weight vector and an input vector according to a development example of the base technology are quantized.

FIG. 19 is a diagram illustrating a network structure of a ResNet used in a comparison experiment according to a development example of the base technology.

FIG. 20 is a diagram illustrating a ResNet network configuration not including a Max Pooling layer according to a development example of the base technology.

FIG. 21 is a diagram illustrating a ResNet network configuration including a Max Pooling layer according to a development example of the base technology.

FIG. 22 is a diagram illustrating a comparison result of image recognition rates according to a development example of the base technology.

FIG. 23 is an example of a product-sum operation circuit in a case where both a weight vector and an input vector are quantized according to a development example of the base technology.

FIG. 24 is a diagram illustrating a relationship between an index and a table value according to a first embodiment.

FIG. 25 is a diagram illustrating another relationship between an index and a table value according to the first embodiment.

FIG. 26 is a diagram in which table values expressed by powers of 2 and table values in linear expression according to the first embodiment are plotted on the same graph.

FIG. 27 is a circuit diagram illustrating a schematic configuration example of a product-sum operation circuit according to a first specific example of the first embodiment.

FIG. 28 is a circuit diagram illustrating a schematic configuration example of a product-sum operation circuit according to a second specific example of the first embodiment.

FIG. 29 is a diagram illustrating an example of rounding of a quantizer according to a second embodiment.

FIG. 30 is a block diagram illustrating a schematic configuration example of a neural network circuit as a comparative example.

FIG. 31 is a block diagram illustrating a schematic configuration example of a neural network circuit as another comparative example.

FIG. 32 is a block diagram illustrating a schematic configuration example of a neural network circuit as still another comparative example.

FIG. 33 is a block diagram illustrating a schematic configuration example of a neural network circuit according to the second embodiment.

**EP 4 024 198 A1**

FIG. 34 is a circuit diagram illustrating a schematic configuration example of a product-sum operation circuit according to a third embodiment.

FIG. 35 is a circuit diagram illustrating a schematic configuration example of a quantization circuit according to the third embodiment.

FIG. 36 is a schematic diagram for explaining actuation of general DNN and CNN.

FIG. 37 is a diagram illustrating a coefficient w1 input to a convolution layer of a first layer in FIG. 36.

FIG. 38 is a diagram illustrating a coefficient w2 input to a convolution layer of a second layer in FIG. 36.

FIG. 39 is a diagram illustrating a coefficient w3 input to a convolution layer of the first layer in FIG. 36.

FIG. 40 is a diagram illustrating an input (variable) x0 of a convolutional neural network in FIG. 36.

FIG. 41 is a diagram illustrating an output (variable) x1 from the first layer in FIG. 36.

FIG. 42 is a diagram illustrating an output (variable) x2 from the second layer in FIG. 36.

FIG. 43 is a diagram illustrating an output (variable) x3 from the third layer in FIG. 36.

FIG. 44 is a diagram illustrating an example of a numerical table of powers of 2 according to a fourth embodiment.

FIG. 45 is a diagram illustrating a relationship between an s.e.m format, an s.B.Q format, numeric format information (Numeric Format Information), and a container (Numeric Data Container) according to the fourth embodiment.

FIG. 46 is a diagram illustrating a structure example of a packet of a basic structure (Basic Structure) according to the fourth embodiment.

FIG. 47 is a diagram illustrating a structure example of a packet of a continuous structure (Continue Structure) according to the fourth embodiment.

FIG. 48 is a diagram illustrating a structure example of a packet of an extended structure (Extended Structure) according to the fourth embodiment.

FIG. 49 is a diagram illustrating a structure example of a packet aligned only as Payload according to the fourth embodiment.

FIG. 50 is a diagram illustrating an example of a header of a custom extended structure (Custom Structure) according to the fourth embodiment.

FIG. 51 is a diagram illustrating an example of Payload of a custom extended structure (Custom Structure) according to the fourth embodiment.

FIG. 52 is a diagram illustrating an implementation example of a packet of a basic structure (Basic Structure) according to the fourth embodiment.

FIG. 53 is a diagram illustrating an implementation example of a packet of a continuous structure (Continue Structure) according to the fourth embodiment.

FIG. 54 is a diagram illustrating an implementation example of a packet of an extended structure (Extended Structure) according to the fourth embodiment.

FIG. 55 is a diagram illustrating an implementation example of a packet of only a continuous payload area (Payload) according to the fourth embodiment.

FIG. 56 is a diagram illustrating an implementation example of a packet of a custom structure (Custom Structure) according to the fourth embodiment.

FIG. 57 is a diagram illustrating an implementation example of a packet of only a continuous payload area (Payload) according to the fourth embodiment.

FIG. 58 is a block diagram illustrating a schematic configuration example of a system that processes a byte stream according to the fourth embodiment.

FIG. 59 is a diagram illustrating a simulation result regarding frequency characteristics (gain characteristics) when a quantization method according to the present disclosure is applied to a band-pass filter.

FIG. 60 is a diagram illustrating a simulation result regarding phase characteristics when a quantization method according to the present disclosure is applied to a band-pass filter.

FIG. 61 is a block diagram used for BER evaluation according to the present disclosure.

FIG. 62 is a diagram illustrating a BER evaluation result when BPSK according to the present disclosure is used for a modulation method.

FIG. 63 is an enlarged diagram of data of SNR 7 to 9 dB in FIG. 62.

FIG. 64 is a diagram illustrating a BER evaluation result when QPSK according to the present disclosure is used for a modulation method.

FIG. 65 is an enlarged diagram of data of SNR 10 to 12 dB in FIG. 64.

FIG. 66 is a diagram illustrating a BER evaluation result when 16QAM according to the present disclosure is used for a modulation method.

FIG. 67 is an enlarged diagram of data of SNR 16 to 18 dB in FIG. 66.

FIG. 68 is a diagram illustrating a hardware configuration example according to an embodiment of the present disclosure.

4

Description of Embodiments

An embodiment of the present disclosure will be described below in detail on the basis of the drawings. Note that, in each embodiment described below, the same parts are designated by the same reference numerals, and duplicate description will be omitted.

In addition, the present disclosure will be described according to the item order described below.

1. Base technology
1.1 Background
1.2 Functional configuration example of information processing apparatus 10
1.3 Quantization of weight vector
1.4 Configuration example of product-sum operation circuit
1.5 Quantization during learning
1.6 Effects of base technology
2. Development example of base technology
2.1 Outline
2.2 Quantization of weight vector
2.3 Quantization of both weight vector and input vector
2.4 Effects of development example
3. Conclusion
4. First embodiment
4.1 Problems of base technology
4.2 Example of value table
4.3 Specific example of product-sum operation circuit
4.3.1 First specific example
4.3.2 Second specific example
4.4 Operations and effects
5. Second embodiment
5.1 Problems of base technology
5.2 Specific example of quantization circuit
5.3 Operations and effects
6. Third embodiment
6.1 Problems of base technology
6.2 Specific example of product-sum operation circuit
6.3 Development to quantization method
6.4 Specific example of quantization circuit
6.5 Operations and effects
6.6 Variation examples
6.6.1 First variation example
6.6.2 Second variation example
6.6.3 Third variation example
6.6.4 Fourth variation example
6.6.5 Fifth variation example
6.6.6 Sixth variation example
7. Fourth embodiment
7.1 Problems of base technology
7.2 Specific example of numeric format information
7.2.1 s.e.m format
7.2.2 s.B.Q format
7.3 Management method of actual data: relationship between container and numeric format information
7.4 Byte stream
7.4.1 Byte stream by packets of basic structure (Basic Structure) and continuous structure (Continue Structure)
7.4.2 Byte stream by packet of extended structure

(Extended Structure)

7.4.3 Payload variable length stream by packet header of custom extended structure (Custom Structure)
7.5 Implementation example of byte stream
7.5.1 Implementation example of byte stream of basic structure (Basic Structure) and continuous structure
(Continue Structure)

7.5.2 Implementation example of byte stream of extended structure (Extended Structure)
7.5.3 Implementation example of byte stream of custom structure (Custom Structure)
7.6 Configuration example of processing system of byte stream
7.7 Operations and effects
8. Application example to communication technology
9. Hardware configuration example

1. Base technology

First, a technology as a base of the present disclosure (hereinafter, referred to as a base technology) will be described in detail with reference to the drawings.

1.1 Background

In recent years, a learning method using a neural network such as deep learning has been widely studied. While a learning method using a neural network has high accuracy, a processing load related to operations is large. Therefore, an operation method for effectively reducing the processing load is required.

For this reason, in recent years, for example, an operation method for reducing the amount of operation and the amount of information, such as a binary weight network and XNOR net, has also been proposed.

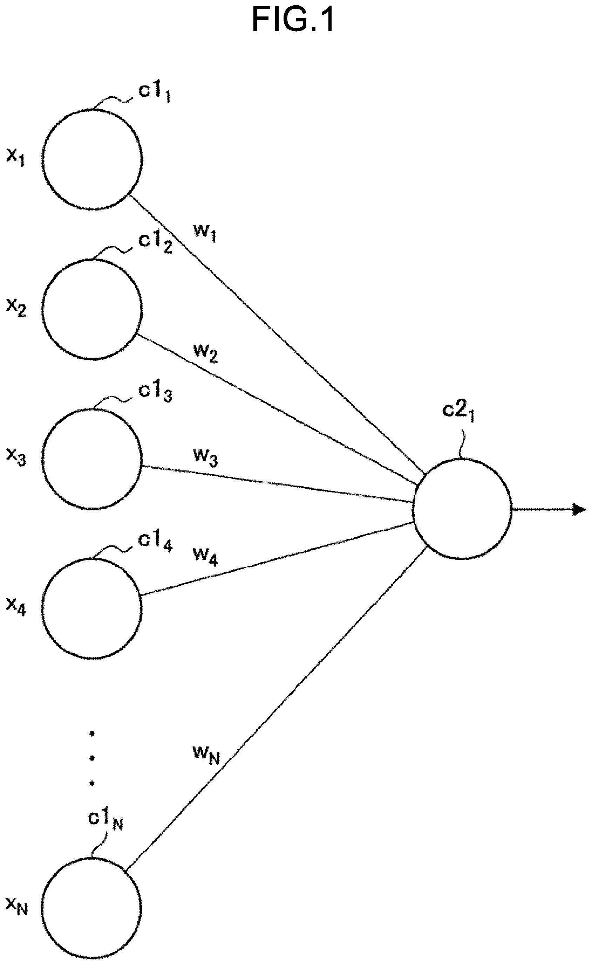

Here, an outline of elementary operations in a general neural network will be described. FIG. 1 is a conceptual diagram for explaining an outline of elementary operations in a neural network. FIG. 1 illustrates two layers constituting a neural network, and cells $c1_1$ to $c1_N$ and cell $c2_1$ belonging to the two layers.

At this time, the input signal (hereinafter, also referred to as an input vector) input to the cell $c2_1$ is determined on the basis of the input vector and the weigh coefficient (hereinafter, also referred to as a weight vector) related to the cells $c1_1$ to $c1_N$ belonging to the lower layers. More specifically, the input vector input to the cell $c2_1$ is a value obtained by adding a bias b to the inner product operation result of the input vectors and the weight vectors related to the cells $c1_1$ to $c1_N$ and further processing the result by an activation function h.

That is, when the input vectors and the weight vectors related to the cells $c1_1$ to $c1_N$ are $x = (x_1, x_2, X_3,... X_N)$ and $w = (W_1 W_2, W_3,... W_N)$, respectively, an input vector z input to the cell $c2_1$ is defined by Formula (1) described below.

$$z = h\left(\sum x_i w_i + b\right) \tag{1}$$

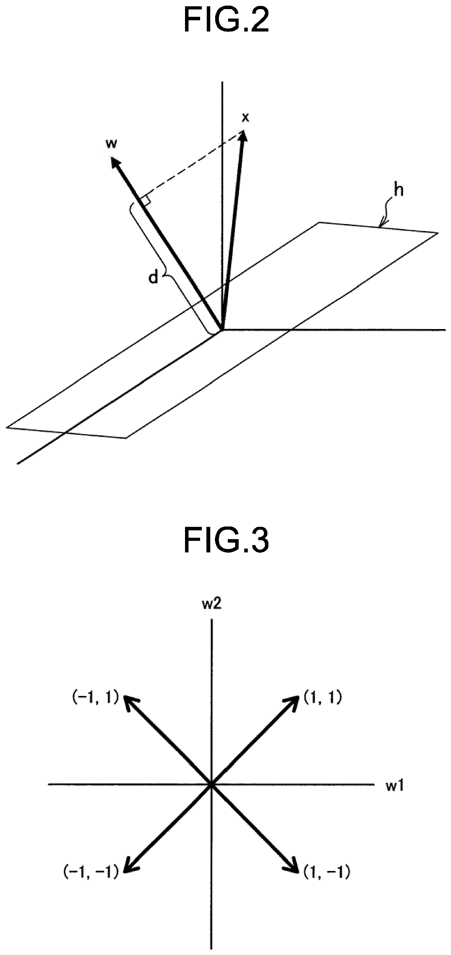

At this time, assuming a hyperplane h with a weight vector w as a normal, an inner product of an input vector x and the weight vector w expressed in N dimensions can be expressed by a value obtained by multiplying a projection distance d obtained by projecting the input vector x to the weight vector w with reference to the hyperplane h by $|w|$ as illustrated in FIG. 2. Here, $|w|$ described above is the norm of the vector w. FIG. 2 is a schematic diagram for explaining an inner product operation of the input vector x and the weight vector w.

Here, in a case where the input vector x and the weight vector w are two-dimensional, when the weight vector w is quantized with a binary value of +1 or -1 as in Non Patent Literature 1, the weight vector w can be expressed as in FIG. 3. FIG. 3 is a diagram for explaining the weight vector w binary-quantized in a two-dimensional space. At this time, the granularity of the weight vector w can be expressed by a rotation angle θ in a plane, and the granularity is 90 degrees as illustrated in FIG. 3.

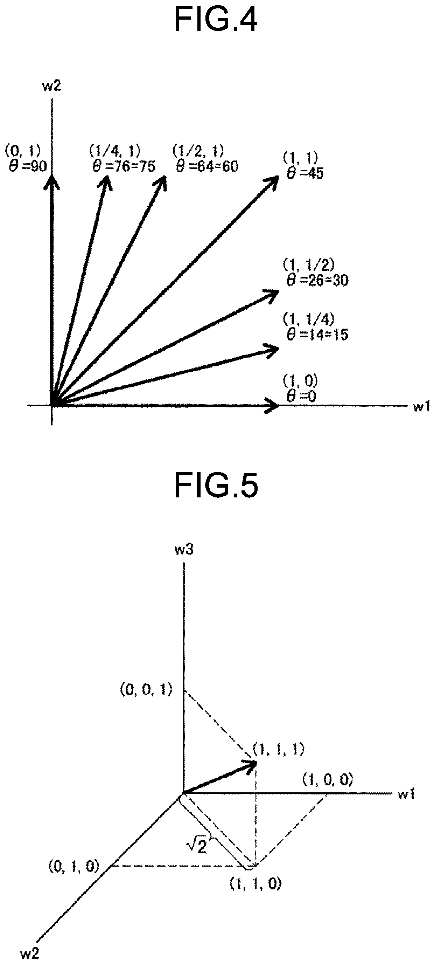

Next, a case where the weight vector w is quantized with four values {0, 1/4, 1/2, 1} will be considered. FIG. 4 is a diagram for explaining the weight vector w quaternary-quantized in a two-dimensional space. In this case, the granularity of the weight vector w, that is, the rotation angle θ is about 15 degrees, and it is possible to guarantee finer granularity as compared with the case of binary quantization.

On the other hand, it is assumed that the granularity of the weight vector w varies more as the number of dimensions increases. FIG. 5 is a diagram for explaining variations in granularity of the weight vector w in a three-dimensional space. For example, as illustrated in FIG. 5, in a case where the quantization of the weight vector w in the plane defined by (1, 1, 0) and (0, 0, 1) is considered, the length of the side in the (1, 1, 0) direction is $\sqrt{2}$ times the length of the side in the (0, 0, 1) direction, and thus, it can be seen that the variation in the granularity at the time of quantization increases.

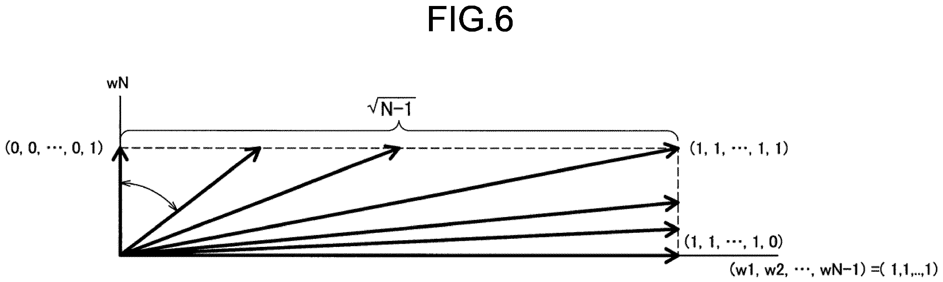

In addition, the variation in granularity as described above, that is, nonuniformity becomes more remarkable as the number of dimensions increases. FIG. 6 is a diagram for explaining variations in granularity of the weight vector w in an N-dimensional space. FIG. 6 illustrates a plane defined by (1, 1,..., 1, 0) and (0, 0,..., 0, 1) in an N-dimensional space. At this time, the length of the side in the (1, 1,..., 1, 0) direction can be expressed by $\sqrt{(N-1)}$ times the length of the side in the (0, 0,..., 0, 1) direction. For example, when N = 100, the length of the side in the 1, 1,..., 1, 0) direction is $\sqrt{99}$ times ( $\approx$ 10 times) the side in the (0, 0,..., 0, 1) direction.

Since the nonuniformity of the granularity related to the weight vector w as described above can cause a reduction in performance of the neural network, a more accurate quantization method has been desired. The technical idea according to the present disclosure has been conceived focusing on the above points, and makes it possible to effectively reduce a processing load while maintaining high approximate accuracy of a weight vector in an N-dimensional space. For this purpose, an information processing apparatus and an information processing method according to the base technology of the present disclosure are characterized by performing an inner product operation using a weight vector quantized on the basis of the granularity in a vector direction in an N-dimensional hyperspherical plane. The information processing apparatus and the information processing method according to the base technology of the present disclosure can achieve both high approximate accuracy and a reduction in processing load by quantizing the weight vector with a granularity that is not too fine and not too coarse. More specifically, the information processing apparatus and the information processing method according to the base technology of the present disclosure may perform an inner product operation using a weight vector expressed by power. Hereinafter, the above features of the information processing apparatus and the information processing method according to the base technology of the present disclosure will be described in detail.

1.2 Functional configuration example of information processing apparatus 10

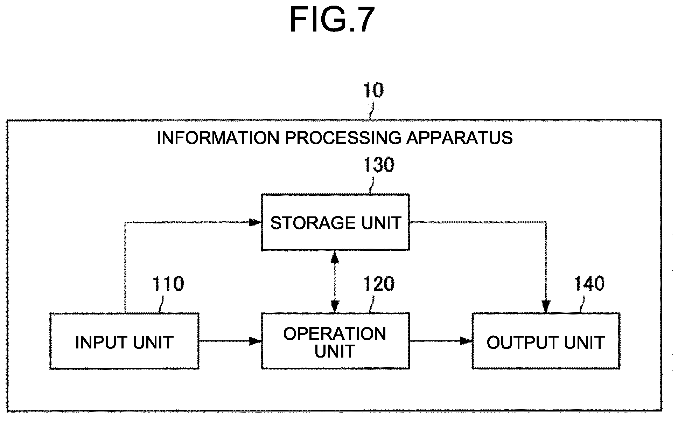

Next, a functional configuration example of the information processing apparatus 10 that realizes the information processing method according to the base technology will be described. FIG. 7 is an example of a functional block diagram of the information processing apparatus 10 according to the base technology. Referring to FIG. 7, the information processing apparatus 10 according to the base technology includes an input unit 110, an operation unit 120, a storage unit 130, and an output unit 140. Hereinafter, the above configuration will be described focusing on the function of the configuration.

(Input unit 110)

The input unit 110 has a function of detecting various input operations by an operation personnel. For this purpose, the input unit 110 may include various apparatuses for detecting the input operations by the operation personnel. The input unit 110 can be realized by, for example, various buttons, a keyboard, a touch panel, a mouse, a switch, and the like.

(Operation unit 120)

The operation unit 120 has a function of calculating an output value by performing an inner product operation based on a plurality of input values and a plurality of weigh coefficients respectively corresponding to the input values. In particular, the operation unit 120 performs an inner product operation related to forward propagation of the neural network. At this time, one of the features of the operation unit 120 is to calculate the output value on the basis of the weigh coefficient quantized on the basis of the granularity in the vector direction on the N-dimensional hyperspherical surface. More specifically, the operation unit 120 may calculate the output value on the basis of the weigh coefficient expressed by power. Features of the inner product operation will be separately described in detail.

(Storage unit 130)

The storage unit 130 has a function of storing programs, data, and the like used in each configuration included in the information processing apparatus 10. The storage unit 130 stores, for example, various parameters used for the neural network.

(Output unit 140)

The output unit 140 has a function of outputting various types of information to the operation personnel. For this purpose, the output unit 140 can be configured to include a display apparatus that outputs visual information. Here, the above display apparatus can be realized by, for example, a cathode ray tube (CRT) display apparatus, a liquid crystal display (LCD) apparatus, an organic light emitting diode (OLED) apparatus, or the like.

The functional configuration example of the information processing apparatus 10 according to the base technology has been described above. Note that the functional configuration example described above is merely an example, and the functional configuration example is not limited to such an example. The information processing apparatus 10 may further include a configuration other than that illustrated in FIG. 1. The information processing apparatus 10 may further include, for example, a communication unit that performs information communication with another information processing terminal. That is, the functional configuration of the information processing apparatus 10 according to the base technology can be flexibly redesigned.

1.3 Quantization of weight vector

Next, the quantization of the weight vector according to the base technology will be described in detail. As described above, the information processing apparatus 10 according to the base technology can keep high uniformity of granularity by performing quantization with the weight vector w expressed by power. At this time, one of the features of the operation unit 120 is to rearrange a plurality of weight vector components $w_i$ in ascending order of value and to normalize the plurality of weight vector components $w_i$ with the weigh coefficient $w_i$ having the largest value. Here, assuming that the weight vector rearranged and normalized is $W_j$, the weight vector $w_j$ is expressed by Formulae (2) to (4) described below.

$$w_j = s_j \alpha^{n_j} \quad (j < N) \tag{2}$$

$$w_N = 1 \tag{3}$$

$$w_j \leq w_{j+1} \tag{4}$$

However, at this time, $\alpha$ in Formula (2) above may be $0 < \alpha < 1$, $s_j$ may be $s_j \in \{-1, 1\}$, and $n_j$ may be $n_j \in \{0, 1, 2,...\}$. That is, the operation unit 120 performs quantization with $n_j$ as an integer. At this time, the inner product operation executed by the operation unit 120 is expressed by Formula (5) described below. Note that K in Formula (5) described below indicates a normalization constant. In addition, it is sufficient if the value of $\alpha$ described above is finally determined to be within the above range in the inner product operation even when Formula (5) described below is appropriately modified. The formulae indicated in the present disclosure are merely examples, and can be flexibly modified.

$$K((...(s_1 x_1 \alpha^{n_1-n_2} + s_2 x_2)\alpha^{n_2-n_3} + s_3 x_3)\alpha^{n_3-n_4} + ...)\alpha^{n_{N-1}} + s_N x_N),$$
$$K \in R \tag{5}$$

Therefore, it is expected that the inner product operation by the operation unit 120 can be processed by N-times addition operations and the number of times of multiplication on the order of $-1/2 \log(N-1)/\log\alpha$.

As described above, one of the features of the information processing method according to the base technology is that the weight vector w is approximated by the expression of a power of $\alpha$, and the weight vectors w are rearranged in ascending order of value. At this time, in the information processing method according to the base technology, quantization of the weight vector w is performed by t-value conversion of the exponent of $\alpha$ according to N.

For example, in the case of N = 100, t = 4 (2 bits), 8 (3 bits), 16 (4 bits), or the like may be adopted in the information processing method according to the base technology. By setting t as described above, many of $n_1$-$n_2$, $n_2$-$n_3$, $n_3$-$n_4$... in Formula (5) described above are quantized with the same value to be 0, and thus the number of times of multiplication can be greatly reduced. In a more specific example, in the case of t = 4 with respect to N = 100, $n_{j-1}$-$n_j$ can take a value other than 0 only four times. Therefore, in the case of the present example, the number of times of multiplication related to the inner product operation is four, and all the remaining is addition, so that the processing load can be effectively reduced.

1.4 Configuration example of product-sum operation circuit

Next, a product-sum operation circuit that realizes an operation method according to the base technology will be described. As described above, in a case where the weight vectors w are quantized by power expression and rearrangement is performed, it is also necessary to rearrange the input vectors x corresponding to the weight vectors w.

Therefore, the information processing apparatus 10 may include a product-sum operation circuit having a table that holds address information of the input vectors x corresponding to the plurality of weight vectors w rearranged in ascending order of value.

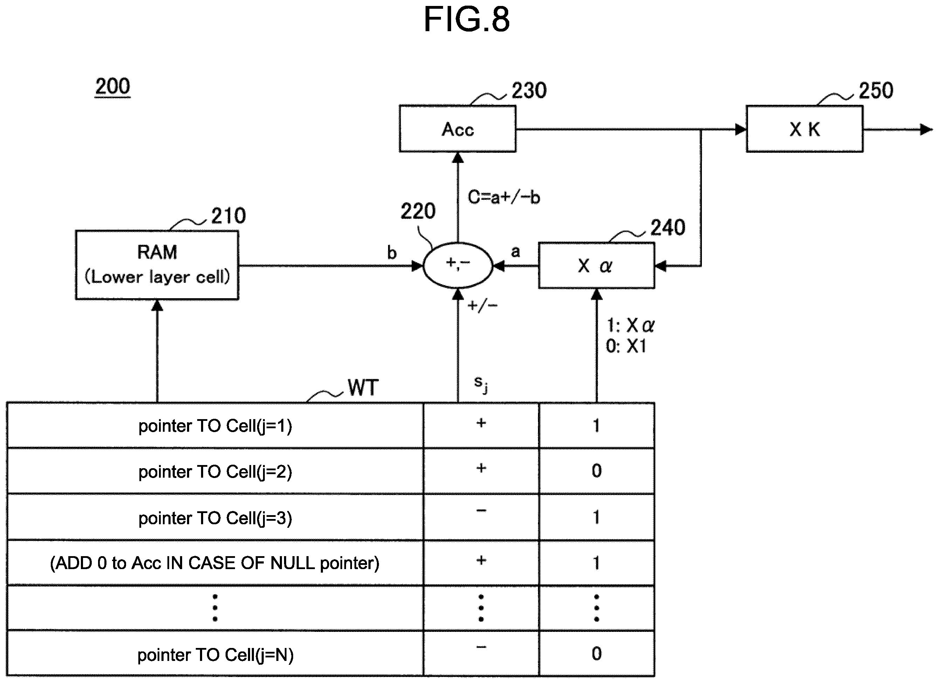

FIG. 8 is an example of a circuit block diagram of a product-sum operation circuit 200 included in the information processing apparatus 10 according to the base technology. As illustrated in FIG. 8, the product-sum operation circuit according to the base technology includes a storage circuit that holds a table WT that holds address information of the input vector x corresponding to the weight vector w, a RAM 210, an addition circuit 220, an accumulator 230, a first multiplication circuit 240 that performs multiplication relating to $\alpha$, and a second multiplication circuit 250 that performs multiplication relating to a normalization constant.

(Address table WT)

The address table WT according to the base technology holds address information of the input vectors x corresponding to the plurality of weight vectors w rearranged in ascending order of value, sign information, and multiplication instruction information. Note that, as illustrated in FIG. 8, the address information described above may include Null Pointer. In this case, 0 is added to the accumulator 230, and the value of the accumulator 230 can be simply multiplied by $\alpha$. In addition, the above-described sign information is information indicating a value corresponding to $S_j$ in Formula (5) described above.

In addition, the multiplication instruction information described above is information instructing processing content by the first multiplication circuit 240. The multiplication instruction information according to the base technology may include, for example, information designating necessity of multiplication. FIG. 8 illustrates an example of a case where the first multiplication circuit 240 does not perform multiplication when the multiplication instruction information is 0 and the first multiplication circuit 240 performs multiplication by $\alpha$ when the multiplication instruction information is 1.

Note that the multiplication instruction information according to the base technology is not limited to the above example, and may include information designating various processing contents. The multiplication instruction information according to the base technology can include, for example, the number of times of multiplication, information designating a shift operation, and the like.

(RAM210)

The RAM 210 outputs an input vector component $x_j$ corresponding to the weight vector component $w_j$ to the addition circuit 220 on the basis of the address information input from the address table WT.

(Addition circuit 220)

The addition circuit 220 executes addition on the basis of the input vector component $x_j$ input from the RAM 210 and the value output from the first multiplication circuit 240. At this time, the addition circuit 220 performs the above addition on the basis of the sign information held in the address table WT.

(Accumulator 230)

The accumulator 230 accumulates an operation result output from the addition circuit 220. The accumulator 230 outputs the accumulated value to the first multiplication circuit 240 and the second multiplication circuit 250. In addition, a reset signal for resetting the accumulated value to 0 is appropriately input to the accumulator 230.

(First multiplication circuit 240)

The first multiplication circuit 240 multiplies the value accumulated by the accumulator 230 by $\alpha$. At this time, as described above, the first multiplication circuit 240 executes the above-described multiplication on the basis of the multiplication instruction information held in the address table WT. The first multiplication circuit 240 outputs the operation result to the addition circuit 220.

(Second multiplication circuit 250)

The second multiplication circuit 250 multiplies the value output from the accumulator 230 by the normalization constant K.

The configuration example of the product-sum operation circuit 200 according to the base technology has been described above. With the product-sum operation circuit 200 according to the base technology, the number of times of multiplication in the inner product operation can be effectively reduced, and the processing load can be reduced.

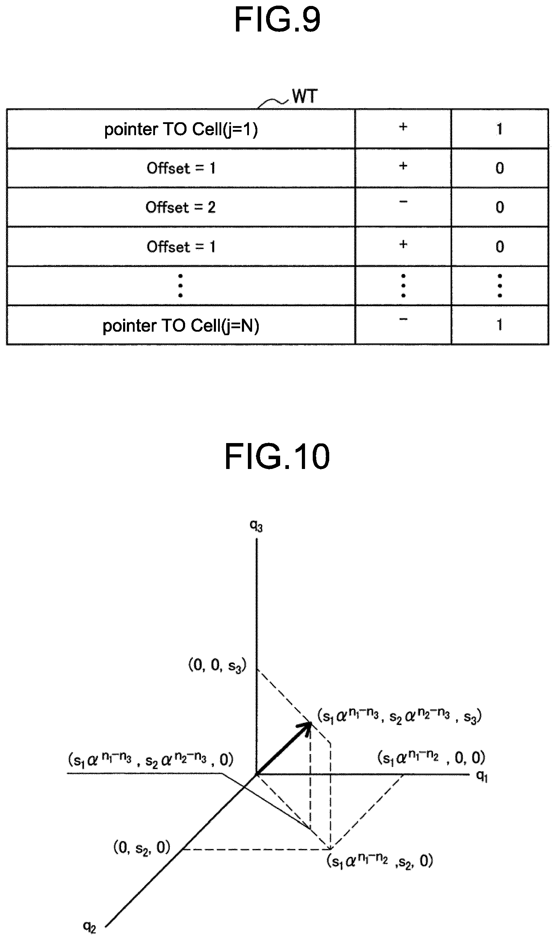

On the other hand, since the capacity of the address table WT increases by holding the address information of the input vectors x, it is also assumed that the power consumption increases. Therefore, as illustrated in FIG. 9, the address table WT may include an offset indicating a relative position between addresses. FIG. 9 is an example of offset notations related to the address information held in the address table WT according to the base technology.

As illustrated in FIG. 9, the address table WT may sort, in order of addresses, addresses in a section in which the value of $n_{j-1}-n_j$ is consecutively 0 in Formula (5) described above, that is, a section in which multiplication is not performed, and hold an offset between the addresses as the address information. With the address table WT described above according to the base technology, it is possible to greatly reduce the amount of information related to address information and effectively reduce power consumption.

Note that the address table WT can take various forms other than the forms illustrated in FIGS. 8 and 9. In the address table WT, for example, the sign information and the multiplication instruction information may not be clearly separated and held, or an address compression method other than the above may be adopted. The address table WT can be flexibly modified according to the configuration of the neural network, the performance of the information processing apparatus 10, and the like.

1.5 Quantization during learning

Next, quantization of the weight vector w at the time of learning according to the base technology will be described. In the information processing method according to the base technology, the update of the weight vector component $w_i$ at the time of learning can be calculated by Formula (6) described below.

$$ n_i = \mathrm{int}\big(\log|w_i / w_{\max}| / \log\alpha\big) \qquad (6) $$

Here, $W_{\max}$ in Formula (6) described above indicates the maximum value of $w_i$. In addition, for integer conversion int, either round-up or round-down, whichever is closer, may be selected. In the information processing method according to the base technology, the above-described address table WT can be generated by rearranging $n_i$ at the time of final learning.

Note that, in a case where $\alpha$ close to 1 is set, it is also possible to adopt a method of performing an operation using a learning algorithm based on a deep neural network (DNN) using a normal floating-point operation and quantizing $w_i$ after completion of learning. That is, in a case where the quantization granularity related to the weight vector w is small, an effect that the recognition accuracy is not deteriorated is expected without modifying the network structure.

1.6 Effects of base technology

Next, effects exerted by the quantization of the weight vector according to the base technology will be described in detail. As described above, in the information processing method according to the base technology, $w_i$ quantized by the power expression is defined as $w_j$ by performing rearrangement in ascending order of value and normalization. At this time, when the rearranged basis vector is $q_j$, the weight vector w is expressed by Formula (7) described below.

$$ \begin{aligned} w &= \sum w_j q_j \\ &= ((...(s_1 q_1 \alpha^{n_1-n_2} + s_2 q_2)\alpha^{n_2-n_3} + s_3 q_3)\alpha^{n_3-n_4} + ...)\alpha^{n_{N-1}} + s_N q_N) \end{aligned} \qquad (7) $$

That is, as illustrated in FIG. 10, the information processing method according to the base technology has a meaning of repeating processing of creating a vector in a plane formed by the weight vector projected in the space spanned by $q_1, q_2,... q_{j-1}$ and $q_j$ and multiplying the vector by $\alpha^{nj-nj+1}$. FIG. 10 is a diagram illustrating a processing image of the information processing method according to the base technology.

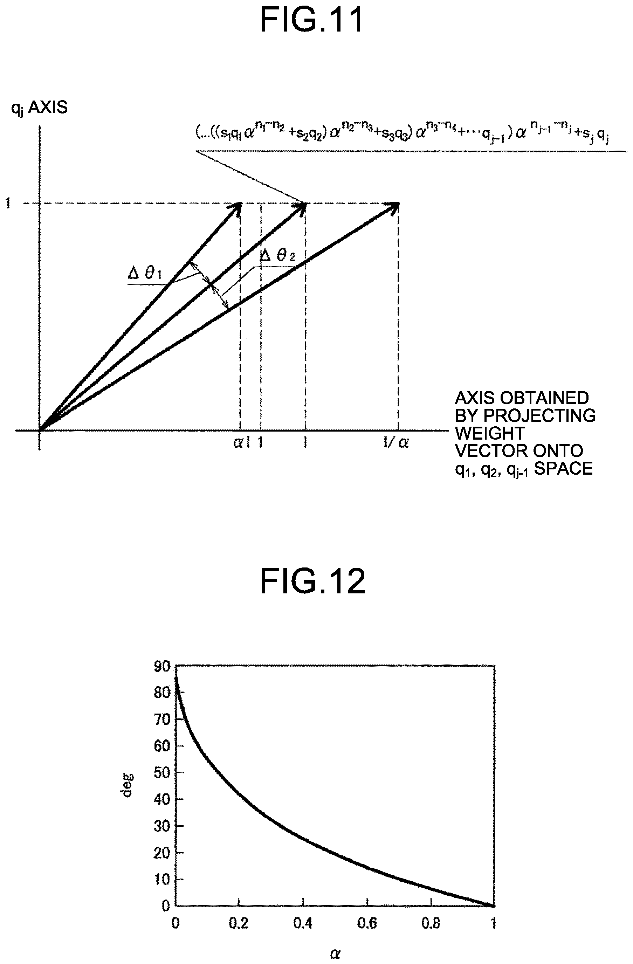

Therefore, in the information processing method according to the base technology, the quantization granularity $\Delta\theta$ of the weight vector can be expressed by Formulae (8) and (9) in the counterclockwise rotation direction and the clockwise rotation direction, respectively, as illustrated in FIG. 11, on the plane spanned by the axis obtained by projecting the weight vector into the $q_1$, $q_2$, ... $q_{j-1}$ space and $q_j$. However, at this time, 1 in Formulae (8) and (9) is defined by Formula (10). FIG. 11 is a diagram for explaining the quantization granularity $\Delta\theta$ according to the base technology. Note that, in FIG. 11, a weight vector projected to a first quadrant is illustrated.

$$\Delta\theta_1 = \tan^{-1}\frac{1}{\alpha l} - \tan^{1}\frac{1}{l} \tag{8}$$

$$\Delta\theta_2 = \tan^{-1}\frac{1}{l} - \tan^{1}\frac{\alpha}{l} \tag{9}$$

$$l = \left\|(...((s_1 q_1 \alpha^{n_1-n_2} + s_2 q_2)\alpha^{n_2-n_3} + s_3 q_3)\alpha^{n_3-n_4} + ...q_{j-1})\alpha^{n_{j-1}-n_j}\right\| \tag{10}$$

In addition, when the quantization granularities $\Delta\theta_1$ and $\Delta\theta_2$ are differentiated by 1 and set to 0, the respective maximum values are defined by Formula (11) described below.

$$\Delta\theta_{1max} = \Delta\theta_{2max} = \tan^{-1}\frac{1}{\sqrt{\alpha}} - \tan^{1}\sqrt{\alpha} \tag{11}$$

FIG. 12 is a graph illustrating a maximum value of the quantization granularity $\Delta\theta$ according to $\alpha$ according to the base technology. As described above, by the information processing method according to the base technology, the quantization granularity is guaranteed in all orthogonal rotation directions in the N-dimensional space.

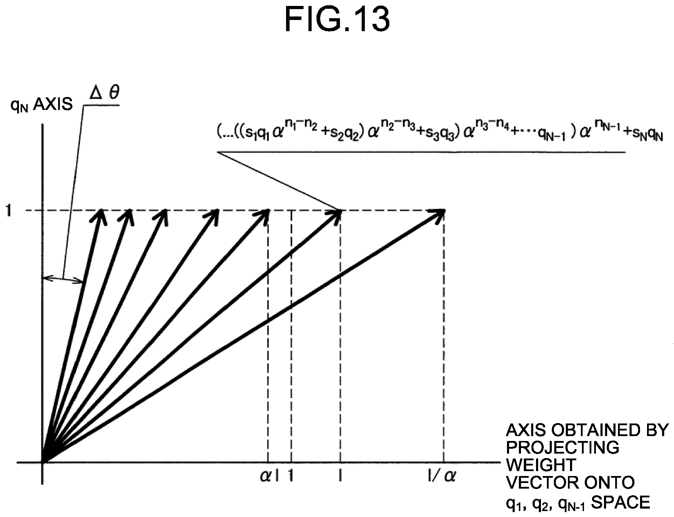

Note that, in a case where the power operation is stopped in the middle, the quantization granularity $\Delta\theta$ is left as illustrated in FIG. 13. FIG. 13 is a diagram for explaining a maximum power according to the base technology. Note that, in FIG. 13, a weight vector projected to a first quadrant is illustrated. At this time, it is sufficient if the maximum power for guaranteeing the quantization granularity $\Delta\theta$ is obtained by adding Formula (13) described below to the minimum m satisfying Formula (12) described below. Therefore, the number of times of multiplication executed by the information processing apparatus 10 can be obtained by Formula (14) described below.

$$\tan^{-1}\alpha^m < \tan^{-1}\frac{1}{\sqrt{\alpha}} - \tan^{-1}\sqrt{\alpha} \tag{12}$$

$$-\frac{1}{2}\frac{\log(N-1)}{\log\alpha} \tag{13}$$

$$\frac{\log\left(\tan\left(\tan^{-1}\frac{1}{\sqrt{\alpha}} - \tan^{-1}\sqrt{\alpha}\right)\right)}{\log\alpha} - \frac{1}{2}\frac{\log(N-1)}{\log\alpha} + 1 \tag{14}$$

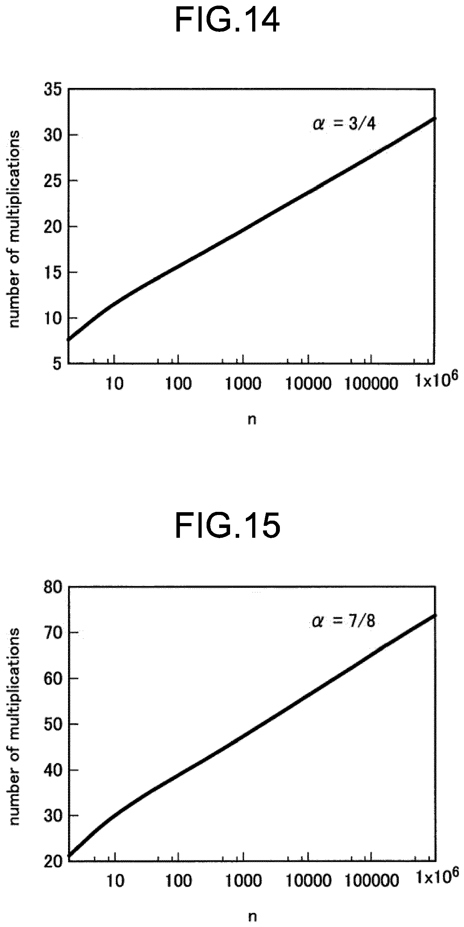

For example, in the case of $\alpha$ = 3/4, the number of times of multiplication with respect to the number of inputs N is determined as in the graph illustrated in FIG. 14. In addition, in the case of $\alpha$ = 7/8, the number of times of multiplication with respect to the number of inputs N is determined as in the graph illustrated in FIG. 15. That is, in the inner product operation by the operation unit 120, it can be said that the number of times of multiplication is determined on the basis of the value of the basis of the weight vector. FIGS. 14 and 15 are diagrams illustrating an example of the number of times of multiplication with respect to the number of inputs N according to the base technology.

As described above, with the information processing apparatus that realizes the information processing method in the base technology, the number of times of multiplication can be greatly reduced in the inner product operation related to forward propagation of the neural network, and power consumption by the product-sum operation circuit 200 can be effectively reduced. In addition, with the information processing apparatus that realizes the information processing method in the base technology, the accuracy of the quantization of the weight vector can be improved, and the effect of improving the recognition accuracy and the approximate accuracy by the neural network is expected as compared with the conventional quantization method using the same number of bits.

2. Development example of base technology

2.1 Outline

Next, a development example of the base technology will be described. In the base technology described above, the method of realizing high approximate accuracy and reducing the number of times of multiplication in the inner product operation on the order of log by expressing the weight vector component $w_j$ by $\alpha^n$ has been described.

However, while the method exemplified in the base technology is effective in a case where the number of dimensions of the inner product space is relatively large, it is also assumed that the effect of reducing the processing load is not sufficient for an inner product operation having a relatively small number of dimensions such as a convolutional neural network (CNN).

Therefore, in the development example of the base technology (hereinafter, simply referred to as the development example), an operation circuit capable of effectively reducing the processing load of the inner product operation even when the number of dimensions of the inner product space is relatively small is proposed.

Specifically, the weight vector component $w_i$ and the input vector component $x_i$ may be expressed as $\alpha^{-n/p}$. At this time, in the case of $\alpha = 2$, a possible value of $\alpha^{-n/p}$ can be expressed as in Table 1 described below.

Table 1

|  | p=1 | p=2 | p=3 | p=4 | p=5 |
|---|---|---|---|---|---|
| n=1 | 0.5 | 0. 707107 | 0.793701 | 0.840896 | 0.870551 |
| n=2 | 0.25 | 0.5 | 0.629961 | 0.707107 | 0. 757858 |
| n=3 | 0.125 | 0.353553 | 0.5 | 0.594604 | 0.659754 |
| n=4 | 0.0625 | 0.25 | 0. 39685 | 0. 5 | 0. 574349 |
| n=5 | 0.03125 | 0.176777 | 0.31498 | 0.420448 | 0.5 |
| n=6 | 0.015625 | 0.125 | 0.25 | 0.353553 | 0. 435275 |
| n=7 | 0.007813 | 0.088388 | 0. 198425 | 0.297302 | 0.378929 |
| n=8 | 0.003906 | 0.0625 | 0. 15749 | 0. 25 | 0.329877 |
| n=9 | 0.001953 | 0.044194 | 0. 125 | 0.210224 | 0.287175 |

Table 1 described above illustrates that the larger the value of p, the smaller the granularity of quantization can be. Therefore, in the development example, by quantizing the weight vector component $w_i$ and the input vector component $x_i$ by $\alpha^{-n/p}$, it is possible to reduce a quantization error as compared with the base technology. In addition, by the operation method of the development example, processing equivalent to the inner product operation described in the base technology can be performed only by the shift operation and the addition, and the processing load in the inner product operation can be effectively reduced.

2.2 Quantization of weight vector

First, a method in a case where only the weight vector w is quantized by $\alpha^{-n/p}$ will be described. Here, a case where an inner product operation is performed by Formula (15) described below with natural numbers: $\alpha = 2$ and $p \in \{1, 2, 3,...\}$. Note that p corresponds to a divisor in the present disclosure. In addition, $w_i$ in Formula (15) described below is expressed by Formula (16) described below. In addition, $s_i$ and $n_i$ in Formula (16) described below are $s_i \in \{-1, 1\}$ and $n_i \in \{0, 1, 2,...\}$, respectively.

$$y = \sum_i x_i w_i \tag{15}$$

$$w_i = s_i 2^{-\frac{n_i}{p}} \qquad\qquad (16)$$

At this time, when w is normalized so as to satisfy $|w_i| \leq 1$ for all $w_i$ and y is subsequently multiplied by a normalization multiplier as necessary, Formula (15) described above can be expressed as Formula (17) described below. In addition, here, $y_r$ is defined by Formula (18) described below.

$$y = \sum_i s_i x_i 2^{-\frac{n_i}{p}}$$

$$= \sum_{r=0}^{p-1}\left[\sum_i s_i x_i 2^{-\left\lfloor\frac{n_i}{p}\right\rfloor}\delta_{r,(n_i \bmod p)}\right]2^{-\frac{r}{p}} \qquad (17)$$

$$y_r = \sum_i s_i x_i 2^{-\left\lfloor\frac{n_i}{p}\right\rfloor}\delta_{r,(n_i \bmod p)} \qquad\qquad (18)$$

Here, when $r \in \{0, 1,..., p-1\}$, $\delta_{i,j} = 1$ if i = j, otherwise 0, $y_r$ can be expressed by a normal fixed-point notation in which a negative number is expressed by a complement of 2. In addition,

$$x_i 2^{-\left\lfloor\frac{n_i}{p}\right\rfloor}$$

in Formula (18) described above can be calculated by shifting $x_i$ in the fixed-point notation in which the negative number is expressed by a complement of 2,

$$\left\lfloor\frac{n_i}{p}\right\rfloor$$

that is, by an integer value int($n_i/p$), to the right as a signed binary. That is, the inner product operation related to the input vector x and the weight vector w can be expressed by Formula (19) described below.

$$y = \sum_{r=0}^{p-1} y_r 2^{-\frac{r}{p}} \qquad\qquad (19)$$

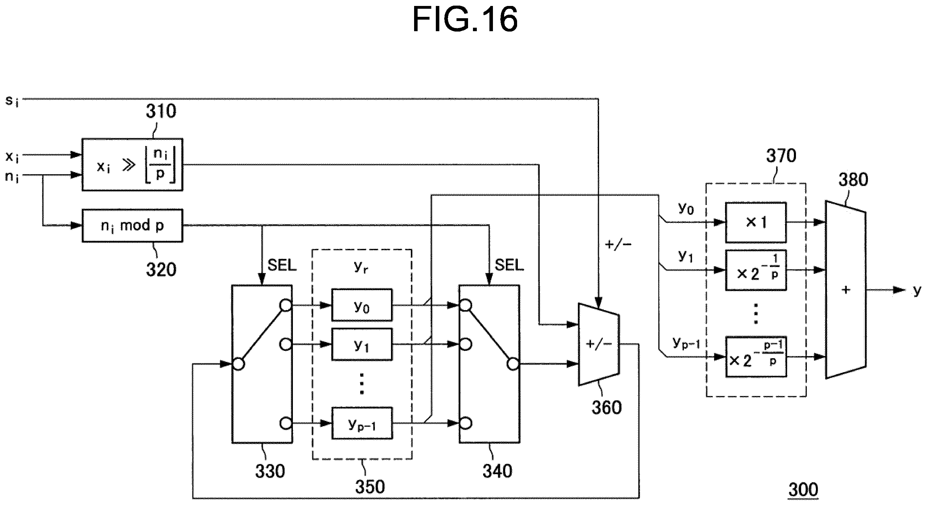

At this time, the inner product operation indicated in Formula (19) described above can be realized by, for example, a product-sum operation circuit 300 illustrated in FIG. 16. FIG. 16 is an example of a product-sum operation circuit in a case where a weight vector according to the development example is quantized.

Referring to FIG. 16, the product-sum operation circuit 300 includes a shift operator 310, a remainder operator 320, selectors 330 and 340, an accumulator group 350, an adder-subtractor 360, a multiplier group 370, and an adder 380.

(Shift operator 310)

The shift operator 310 performs a shift operation based on the input vector component $x_i$ and $n_i$ that are input. Specifically, the shift operator 310 bit-shifts the input vector component $x_i$ to the right by the value of int ($n_i/p$).

(Remainder operator 320)

The remainder operator 320 performs an operation of $n_i$ mod p on the basis of the input $n_i$, and inputs a value of the remainder to the selectors 330 and 340.

(Selectors 330 and 340)

The selectors 330 and 340 select an accumulator to which a circuit is connected among the plurality of accumulators included in the accumulator group 350 on the basis of the operation result by the remainder operator 320. At this time, the selectors 330 and 340 actuate such that accumulator and circuit corresponding to the value of the remainder are connected. For example, when the remainder is 0, the selectors 330 and 340 actuate such that the circuit is coupled with an accumulator $y_0$, and when the remainder is 1, the selectors 330 and 340 actuate such that the circuit is coupled with an accumulator $y_1$.

(Accumulator group 350)

The accumulator group 350 includes a plurality of accumulators each corresponding to the value of the remainder of $n_i$ mod p. That is, accumulator group 350 holds $y_r$ for each value of the remainder.

(Adder-subtractor 360)

The adder-subtractor 360 performs addition and subtraction based on the values of the input $s_i$, the shift operation result, and $y_r$. At this time, as described above, the value of $y_r$ held by the accumulator selected on the basis of the value of the remainder of $n_i$ mod p is input to the adder-subtractor 360. In addition, $y_r$ of the selected accumulator described above is updated on the basis of the operation result by the adder-subtractor 360.

(Multiplier group 370)

The multiplier group 370 multiplies $y_r$ updated for each remainder by the above-described processing by an addition multiplier according to the remainder. For this purpose, the multiplier group 370 includes a plurality of multipliers corresponding to each remainder of $n_i$ mod p. For example, the multiplier group 370 multiplies $y_0$ input from the accumulator group 350 by 1 and multiplies $y_1$ by $2^{-1/p}$.

(Adder 380)

The adder 380 adds the value of $y_r$ calculated for each remainder by the multiplier group 370 and outputs a final operation result y.

The product-sum operation circuit 300 has been described above. As described above, with the product-sum operation circuit 300, $y_r$ is accumulated in an accumulator corresponding to each remainder of $n_i$ mod p, and multiplication is collectively performed at the end, so that the number of times of multiplication can be minimized. Note that, in the example illustrated in FIG. 16, although the sequential calculation is performed for i to update $y_r$, it is also possible to calculate a part or all of the above-described calculation in parallel.

2.3 Quantization of both weight vector and input vector

Next, a method in a case where both the weight vector w and the input vector x are quantized by $\alpha^{-n/p}$ will be described. Here, a case where an inner product operation is performed with natural numbers: $\alpha = 2$ and $p \in \{1, 2, 3,...\}$. Here, the input vector component $x_i$ and the weight vector component $w_i$ are expressed by Formulae (20) and (21) described below, respectively. In addition, in Formulae (20) and (21) described below, $s_{xi}, s_{wi} \in \{-1, 1\}$ and $n_i, m_i \in \{0, 1, 2,...\}$.

$$x_i = s_{x_i} 2^{-\frac{m_i}{p}} \tag{20}$$

$$w_i = s_{w_i} 2^{-\frac{n_i}{p}} \tag{21}$$

Here, when the input vector x and the weight vector w are normalized so as to satisfy $|x_i| \leq 1$ and $|w_i| \leq 1$, respectively, and y is subsequently multiplied by a normalization multiplier as necessary, the inner product operation can be expressed by Formula (22) described below. In addition, here, $y_r$ is defined by Formula (23) described below.

$$y = \sum_i s_{x_i} 2^{-\frac{m_i}{p}} \cdot s_{w_i} 2^{-\frac{n_i}{p}}$$

$$= \sum_i \left( s_{x_i} s_{w_i} \right) 2^{-\frac{(m_i+n_i)}{p}}$$

$$= \sum_{r=0}^{p-1} \left[ \sum_i \left( s_{x_i} s_{w_i} \right) 2^{-\left\lfloor \frac{(m_i+n_i)}{p} \right\rfloor} \delta_{r,((m_i+n_i)\bmod p)} \right] 2^{-\frac{r}{p}} \qquad (22)$$

$$y_i = \sum_i \left( s_{x_i} s_{w_i} \right) 2^{-\left\lfloor \frac{(m_i+n_i)}{p} \right\rfloor} \delta_{r,((m_i+n_i)\bmod p)} \qquad (23)$$

In this case, in the case of r e 0, 1,..., p-1}, $y_r$ can be expressed by a normal fixed-point notation in which a negative number is expressed by a complement of 2. Note that, in the above description, it has been described that p may be a natural number, but p may be expressed by power expression. For example, in the case of p = $2^q$ and q $\in$ {0, 1, 2,...}, it is possible to calculate int(($m_i$ + $n_i$) /p) and($m_i$ + $n_i$) mod p by cutting out bits, and division is unnecessary, so that there is an effect of simplifying the calculation.

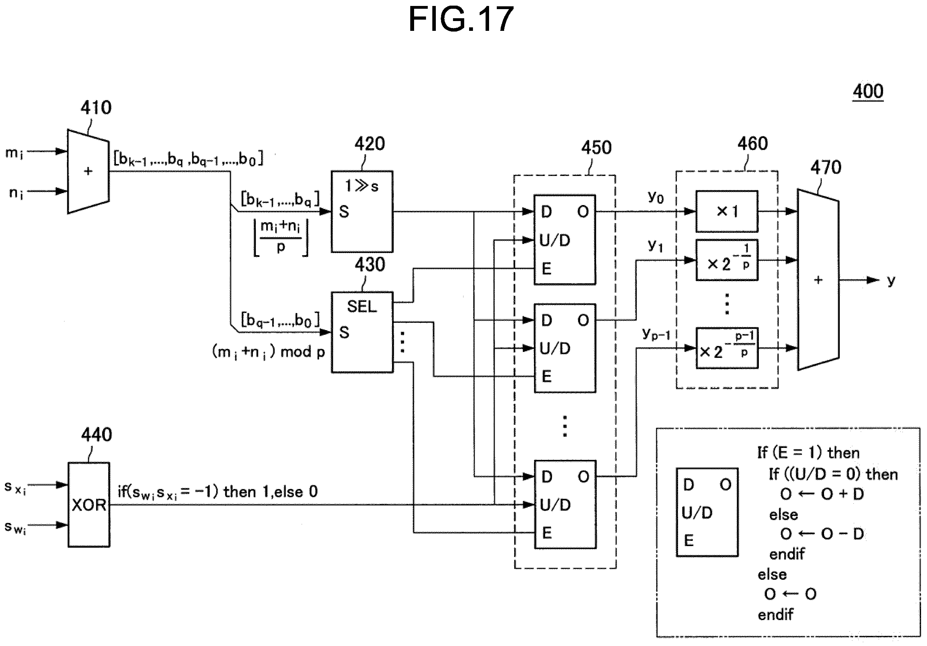

At this time, the inner product operation can be realized by, for example, a product-sum operation circuit 400 illustrated in FIG. 17. FIG. 17 is an example of a product-sum operation circuit in a case where both a weight vector and an input vector according to the development example are quantized.

Referring to FIG. 17, the product-sum operation circuit 400 includes a first adder 410, a shift operator 420, a selector 430, an XOR circuit 440, an accumulator group 450, a multiplier group 460, and a second adder 470.

(First adder 410)

The first adder 410 adds input $m_i$ and $n_i$. At this time, the addition result of $m_i$ and $n_i$ can be expressed as bit array [$b_{k-1}$, ..., $b_q$, $b_{q-1}$, ...$b_0$] as illustrated in the drawing.

(Shift operator 420)

The shift operator 420 performs a right shift operation on 1 expressed by a fixed point by int(($m_i$ + $n_i$)/p) on the basis of the operation result by the first adder 410. At this time, the value of int(($m_i$ + $n_i$)/p) is the value of the high-order bit corresponding to [$b_{k-1}$,..., $b_q$] in the above bit array that is the operation result by the first adder 410. Therefore, the shift operator 420 may perform the shift operation using the value of the high-order bit.

(Selector 430)

The selector 430 selects an adder-subtractor to be caused to execute addition and subtraction from among a plurality of accumulators and adders-subtractors included in the accumulator group 450 on the basis of the value of the remainder of ($m_i$ + $n_i$) mod p, and inputs Enable signal = 1. At this time, since the value of the remainder described above corresponds to [$b_{q-1}$, ..., $b_0$] corresponding to a low-order q bit in the bit array that is the operation result by the first adder 410, the operation can be simplified similarly to the above.

(XOR circuit 440)

The XOR circuit 440 inputs 1 or 0 to each accumulator of the accumulator group 450 on the basis of input $S_{xi}$ and $S_{wi}$. Specifically, the XOR circuit 440 inputs 1 to each accumulator when $S_{wi}S_{xi}$ = -1, and inputs 0 to each accumulator when $S_{wi}S_{xi}$ = +1.

(Accumulator group 450)

The accumulator group 450 includes a plurality of accumulators each corresponding to the value of the remainder

of $(m_i + n_i)$ mod p. In addition, the accumulator group 450 includes a plurality of adders-subtractors (1-bit up-down counters) corresponding to the accumulator.

Here, as illustrated in the lower right of the drawing, each of the above-described adders-subtractors determines whether or not addition or subtraction is necessary on the basis of the Enable signal input from the selector 430. Specifically, only when the input Enable signal is 1, each adder-subtractor adds or subtracts only 1 bit to or from a value 0 held by the corresponding accumulator according to the value of U/D input from the XOR circuit 440. With the accumulator group 450 according to the development example, since the value of $y_r$ can be updated by addition or subtraction of 1 bit to or from the high-order bit, a normal adder-subtractor is unnecessary, enabling a reduction in circuit scale.

(Multiplier group 460)

The multiplier group 460 multiplies $y_r$ updated for each remainder by the above-described processing by a value corresponding to the remainder. For this purpose, the multiplier group 460 includes a plurality of multipliers corresponding to each remainder of $(m_i + n_i)$ mod p. For example, the multiplier group 460 multiplies $y_0$ input from the accumulator group 450 by 1 and multiplies $y_1$ by $2^{-1/p}$.

(Second adder 470)

The second adder 470 adds the value of $y_r$ calculated for each remainder by the multiplier group 460 and outputs a final operation result y.

The product-sum operation circuit 400 has been described above. As described above, with the product-sum operation circuit 400 according to the development example, $y_r$ is accumulated in an accumulator corresponding to each remainder of $(m_i + n_i)$ mod p, and multiplication is collectively performed at the end, so that the number of times of multiplication can be minimized. Note that, in the example illustrated in FIG. 17, although the sequential calculation is performed for i to update $y_r$, it is also possible to calculate a part or all of the above-described calculation in parallel.

In addition, regarding the product-sum operation circuit 400 illustrated in FIG. 17, an example in a case where a plurality of adders-subtractors (1-bit up-down counters) corresponding to the accumulators are mounted in parallel has been described. However, the product-sum operation circuit 400 according to the development example may include a selector and a single adder-subtractor instead of the above configuration, as in the product-sum operation circuit 300 illustrated in FIG. 16. In addition, similarly, a plurality of adders-subtractors can be mounted in parallel on the product-sum operation circuit 300. The configuration of the product-sum operation circuit according to the development example can be appropriately designed so that the circuit scale becomes smaller according to the value of p.

In addition, regarding the product-sum operation circuit 400 illustrated in FIG. 17, the case of selecting the adder-subtractor and the accumulator on the basis of the low-order q bit of $(m_i + n_i)$ has been described. On the other hand, Formula (22) described above can be modified to Formula (24) described below.

$$y = \sum_i \left( s_{x_i} s_{w_i} \right) 2^{-\frac{(m_i+n_i)}{p}}$$

$$= \sum_i \left( s_{x_i} s_{w_i} \right) 2^{-\frac{(m_i+n_i)\bmod p}{p}} 2^{-\left\lfloor \frac{m_i+n_i}{p} \right\rfloor} \tag{24}$$

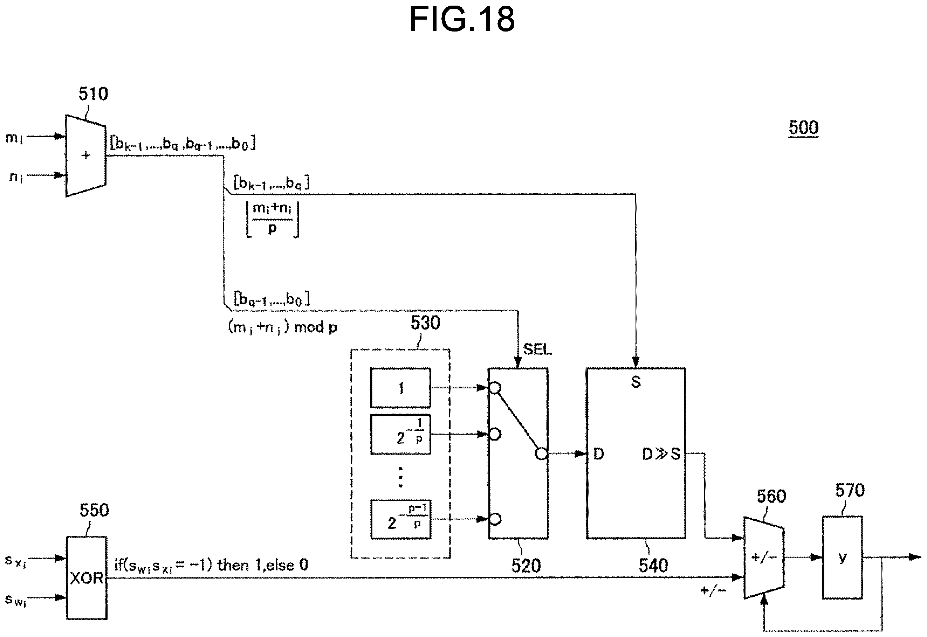

Therefore, the inner product operation can be realized by a single adder-subtractor as in a product-sum operation circuit 500 illustrated in FIG. 18. FIG. 18 is an example of a product-sum operation circuit in a case where both a weight vector and an input vector are quantized according to the development example.

Referring to FIG. 18, the product-sum operation circuit 500 includes an adder 510, a selector 520, a storage circuit group 530, a shift operator 540, an XOR circuit 550, an adder-subtractor 560, and an accumulator 570.

(Adder 510)

The adder 510 adds input $m_i$ and $n_i$. The adder 510 may perform the same actuation as that of the first adder 410 illustrated in FIG. 17.

(Selector 520)

The selector 520 selects a storage circuit to which the circuit is connected among a plurality of storage circuits included in the storage circuit group 530 on the basis of the value of [$b_{q-1}$, ..., $b_0$] corresponding to a low-order q bit.

(Storage circuit group 530)

The storage circuit group 530 includes a plurality of storage circuits each corresponding to the value of the remainder of ($m_i + n_i$) mod p. An addition multiplier corresponding to each remainder is stored in each storage circuit. Note that each storage circuit included in the storage circuit group 530 may be a read-only circuit that holds the addition multiplier as a constant, or may be a rewritable register. When the addition multiplier is stored as a constant in the read-only circuit, there is an advantage that the circuit configuration can be simplified and the power consumption can be reduced.

(Shift operator 540)

The shift operator 540 performs a right shift operation on the addition multiplier stored in the connected storage circuit by the value of the high-order bit corresponding to [$b_{k-1}$,..., $b_q$].

(XOR circuit 550)

The XOR circuit 550 outputs 1 or 0 on the basis of input $S_{xi}$ and $S_{wi}$. The XOR circuit 550 may perform the same actuation as the XOR circuit 440 illustrated in FIG. 17.

(Adder-subtractor 560)

The adder-subtractor 560 repeatedly executes addition or subtraction on y held in the accumulator 570 on the basis of the operation result by the shift operator 540 and the input from the XOR circuit 550.

(Accumulator 570)

The accumulator 570 holds a result y of the inner product operation.
As described above, with the product-sum operation circuit 500 according to the development example, the inner product operation can be realized by the single adder-subtractor 560 and the single accumulator 570, and the circuit scale can be further reduced.
Note that, in the above description, a case where the input vector x and the weight vector w use a common p has been described as an example. However, in the information processing method according to the development example, different p can be used for the input vector x and the weight vector w. In this case, the input vector x and the weight vector w can be expressed by Formulae (25) and (26) described below, respectively.

$$x_i = s_{x_i} 2^{-\frac{m_i}{p_m}} \qquad (25)$$

$$w_i = s_{w_i} 2^{-\frac{n_i}{p_n}} \qquad (26)$$

At this time, when the least common multiple of $p_m$ and $p_n$ is $p_0$, that is, $ap_m = p_0$ and $bp_n = p_0$, the input vector component $x_i$ and the weight vector component $w_i$ are expressed by Formulae (27) and (28) described below, respectively.

$$x_i = s_{x_i} 2^{-\frac{am_i}{p_0}} \qquad (27)$$

$$w_i = s_{w_i} 2^{-\frac{bn_i}{p_0}} \qquad (28)$$

Therefore, by replacing the operation of $m_i + n_i$ with $am_i + bn_i$ and further replacing p with $p_0$, calculation can be performed similarly to the above description even in a case where p is different. In addition, in a case where $p_m$ and $p_n$ are expressed by power, $am_i$ and $bn_i$ can be obtained by shift operation.

Next, a quantization method of the input vector x according to the development example will be described in detail. When both the input vector x and the weight vector w are quantized, the quantization of the weight vector w can be calculated in advance, but the quantization of the input vector x needs to be performed at runtime. For this reason, a method of realizing the quantization of the input vector x by a small-scale operation circuit is demanded.

Here, $|x_i| \leq 1$ is a bit array of $c = [c_{k-1}, \ldots, c_0]$. Note that c is a fixed-point notation in which $c_{k-1}$ corresponds to 1.

At this time, the number of bits of consecutive 0 from msb (most significant bit) of c is set to L. In addition, a bit array obtained by left shifting $c = [c_{k-1}, \ldots, c_0]$ by L bits is d, and the bit array is treated as a fixed point having msb of 0.5.

Next, a minimum r satisfying Formula (29) described below is defined as $r_{min}$. Note that, here is $r \in \{0, \ldots, p-1\}$, but when the minimum r is not found, $r_{min} = p$ may be set. Here, when $m_i$ is defined by Formula (30) described below, $|x_i|$ can be approximated, that is, quantized as Formula (31) described below.

$$d \geq 2^{-\frac{r+1/2}{p}} \tag{29}$$

$$m_i = p(L-1) + r_{min} \tag{30}$$

$$|x_i| \approx 2^{-\frac{m_i}{p}} \tag{31}$$

Note that the above-described calculation can be realized by including a configuration in which the number of bits L of consecutive 0 is counted from msb of c and a configuration in which comparison is performed with a fixed value p times.

## 2.4 Effects of development example

Next, effects exerted by the quantization of the weight vector w and the input vector x according to the development example will be described in detail. Here, in the case of performing quantization with the weight vector component $w_i$ and the input vector component $x_i$ as $\pm 2^{-n/p}$, the recognition rates in the case of using p = 1, that is, the quantization method described in the base technology and the case of using p = 2, that is, the quantization method of the development example are compared.

Specifically, after learning the weight vector w and the input vector x by float, the obtained coefficients were quantized to the nearest quantization points by the respective values of p, and an experiment was performed to compare image recognition rates in a case where inference was performed without relearning.

Note that a CIFAR-10 image set (classification of 10 classes, learning data = 50,000 images, test data = 10,000 images) was adopted as the dataset.

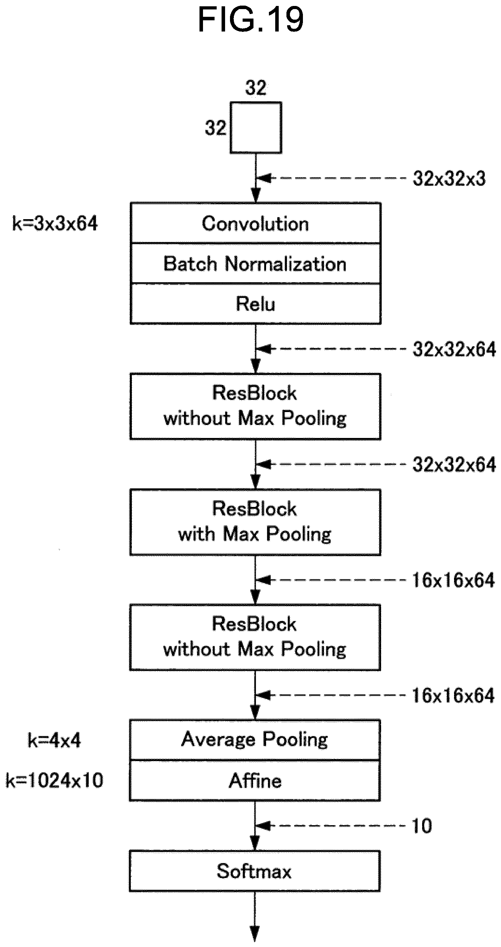

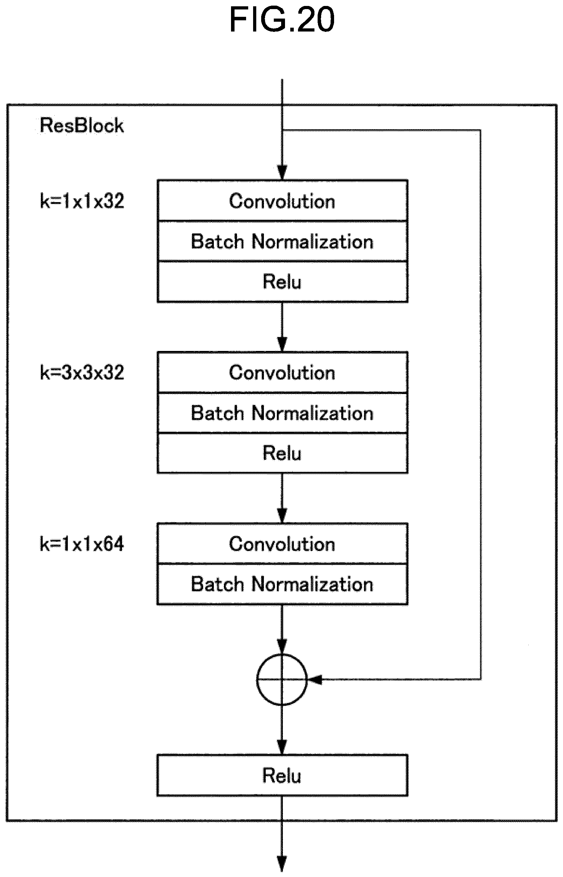

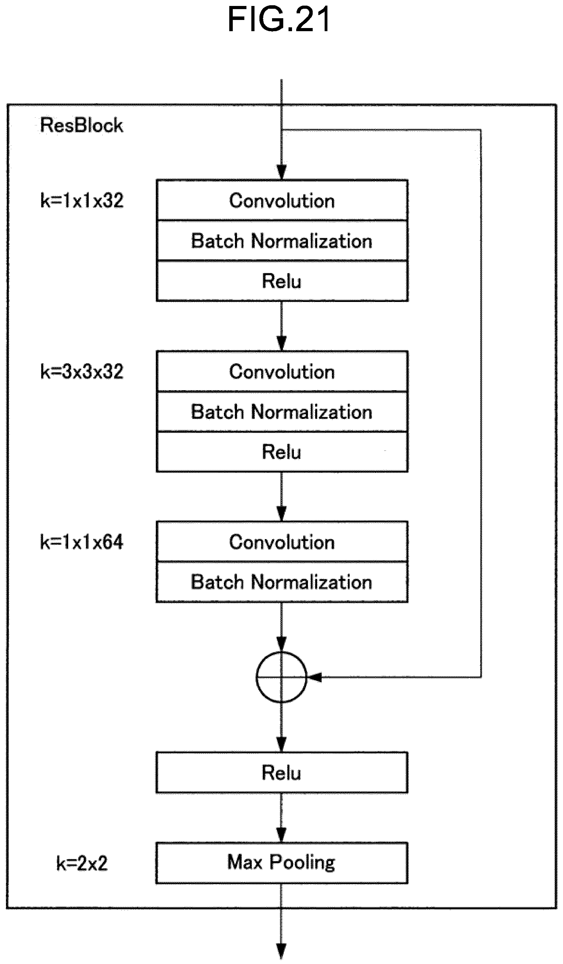

In addition, a ResNet of 11 layers based on ResNet 23 was used as the network. FIG. 19 is a diagram illustrating a network structure of a ResNet used in a comparison experiment according to the development example. In FIG. 19, the input size input to each layer is illustrated on the right side in the drawing, and the kernel size is illustrated on the left side in the drawing. In addition, as illustrated in FIG. 19, the created network includes both a ResBlock not including a Max Pooling layer and a ResBlock including a Max Pooling layer. FIGS. 20 and 21 are diagrams illustrating network configurations of a ResBlock not including the Max Pooling layer and a ResBlock including the Max Pooling layer, respectively.

Next, a quantization method of the weight vector w and the input vector x used in the experiment will be described in detail.

First, data in a case where quantization is performed with p = 1 will be described. Here, 32 values (16 values $\times 2 \pm$) of n = -3 to 12 were used in the quantization of the weight vector w. At this time, possible values of the quantized weight vector component $w_i = \pm (2^{-n})$ are as illustrated in Table 2 described below.

Table 2

| n | -3 | -2 | -1 | 0 | 1 | 2 | 3 | 4 |
|---|---|---|---|---|---|---|---|---|
| $\pm 2^n$ | $\pm 8$ | $\pm 4$ | $\pm 2$ | $\pm 1$ | $\pm 0.5$ | $\pm 0.25$ | $\pm 0.125$ | $\pm 0.0625$ |
| n | 5 | 6 | 7 | 8 | 9 | 10 | 11 | 12 |
| $\pm 2^n$ | $\pm 0.03125$ | $\pm 0.015625$ | $\pm 0.007813$ | $\pm 0.003906$ | $\pm 0.001953$ | $\pm 0.000977$ | $\pm 0.000488$ | $\pm 0.000244$ |

In addition, in the quantization of the input vector x, three different quantization: 16 values (8 values $\times$ 2 $\pm$) of n = -4 to 3, 32 values (16 values $\times$ 2 $\pm$) of n = - 4 to 11, and 64 values (32 values $\times$ 2 $\pm$) of n = -4 to 27 were performed before the input to a Relu block. At this time, possible values of the quantized input vector component $x_i = \pm(2^{-n})$ are as illustrated in Tables 3 to 5 described below.

Table 3

| n | -4 | -3 | -2 | -1 | 0 | 1 | 2 | 3 |
|---|---|---|---|---|---|---|---|---|
| $\pm 2^n$ | $\pm 16$ | $\pm 8$ | $\pm 4$ | $\pm 2$ | $\pm 1$ | $\pm 0.5$ | $\pm 0.25$ | $\pm 0.125$ |

Table 4

| n | -4 | -3 | -2 | -1 | 0 | 1 | 2 | 3 |
|---|---|---|---|---|---|---|---|---|
| $\pm 2^n$ | $\pm 16$ | $\pm 8$ | $\pm 4$ | $\pm 2$ | $\pm 1$ | $\pm 0.5$ | $\pm 0.25$ | $\pm 0.125$ |
| n | 4 | 5 | 6 | 7 | 8 | 9 | 10 | 11 |
| $\pm 2^n$ | $\pm 0.0625$ | $\pm 0.03125$ | $\pm 0.015625$ | $\pm 0.007813$ | $\pm 0.003906$ | $\pm 0.001953$ | $\pm 0.000977$ | $\pm 0.000488$ |

Table 5

| n | -4 | -3 | -2 | -1 | 0 | 1 | 2 | 3 |
|---|---|---|---|---|---|---|---|---|
| $\pm 2^n$ | $\pm 16$ | $\pm 8$ | $\pm 4$ | $\pm 2$ | $\pm 1$ | $\pm 0.5$ | $\pm 0.25$ | $\pm 0.125$ |
| n | 4 | 5 | 6 | 7 | 8 | 9 | 10 | 11 |
| $\pm 2^n$ | $\pm 0.0625$ | $\pm 0.03125$ | $\pm 0.015625$ | $\pm 0.007813$ | $\pm 0.003906$ | $\pm 0.001953$ | $\pm 0.000977$ | $\pm 0.000488$ |
| n | 12 | 13 | 14 | 15 | 16 | 17 | 18 | 19 |
| $\pm 2^n$ | $\pm 0.000244$ | $\pm 0.000122$ | $\pm 6.10E-05$ | $\pm 3.05E-05$ | $\pm 1.53E-05$ | $\pm 7.63E-06$ | $\pm 3.81E-06$ | $\pm 1.91E-06$ |
| n | 20 | 21 | 22 | 23 | 24 | 25 | 26 | 27 |
| $\pm 2^n$ | $\pm 9.54E-07$ | $\pm 4.77E-07$ | $\pm 2.38E-07$ | $\pm 1.19E-07$ | $\pm 5.96E-08$ | $\pm 2.98E-08$ | $\pm 1.49E-08$ | $\pm 7.45E-09$ |

Next, data in a case where quantization is performed using p = 2, that is, the method according to the development example will be described. Here, 32 values (16 values $\times$ 2 $\pm$) of n = -6 to 9 were used in the quantization of the weight vector w. At this time, possible values of the quantized weight vector component $w_i = \pm(2^{-n/2})$ are as illustrated in Table 6 described below.

Table 6

| n | -6 | -5 | -4 | -3 | -2 | -1 | 0 | 1 |
|---|---|---|---|---|---|---|---|---|
| $\pm 2^{n/2}$ | ±8 | ±5.656854 | ±4 | ±2.828427 | ±2 | ±1.414214 | ±1 | ±0.707107 |
| n | 2 | 3 | 4 | 5 | 6 | 7 | 8 | 9 |
| $\pm 2^{n/2}$ | ±0.5 | ±0.353553 | ±0.25 | ±0.176777 | ±0.125 | ±0.088388 | ±0.0625 | ±0.044194 |

In addition, in the quantization of the input vector x, three different quantization: 16 values (8 values × 2 ±) of n = -8 to -1, 32 values (16 values × 2 ±) of n = -8 to 7, and 64 values (32 values × 2 ±) of n = -8 to 23 were performed before the input to a Relu block. At this time, possible values of the quantized input vector component $x_i = \pm(2^{-n/2})$ are as illustrated in Tables 7 to 9 described below.

Table 7

| n | -8 | -7 | -6 | -5 | -4 | -3 | -2 | -1 |
|---|---|---|---|---|---|---|---|---|
| $\pm 2^{n/2}$ | ±16 | ±11.31371 | ±8 | ±5.656854 | ±4 | ±2.828427 | ±2 | ±1.414214 |

Table 8

| n | -8 | -7 | -6 | -5 | -4 | -3 | -2 | -1 |
|---|---|---|---|---|---|---|---|---|
| $\pm 2^{n/2}$ | ±16 | ±11.31371 | ±8 | ±5.656854 | ±4 | ±2.828427 | ±2 | ±1.414214 |
| n | 0 | 1 | 2 | 3 | 4 | 5 | 6 | 7 |
| $\pm 2^{n/2}$ | ±1 | ±0.707107 | ±0.5 | ±0.353553 | ±0.25 | ±0.176777 | ±0.125 | ±0.088388 |

Table 9

| n | -8 | -7 | -6 | -5 | -4 | -3 | -2 | -1 |
|---|---|---|---|---|---|---|---|---|
| $\pm 2^{n/2}$ | ±16 | ±11.31371 | ±8 | ±5.656854 | ±4 | ±2.828427 | ±2 | ±1.414214 |
| n | 0 | 1 | 2 | 3 | 4 | 5 | 6 | 7 |
| $\pm 2^{n/2}$ | ±1 | ±0.707107 | ±0.5 | ±0.353553 | ±0.25 | ±0.176777 | ±0.125 | ±0.088388 |
| n | 8 | 9 | 10 | 11 | 12 | 13 | 14 | 15 |
| $\pm 2^{n/2}$ | ±0.0625 | ±0.044194 | ±0.03125 | ±0.022097 | ±0.015625 | ±0.011049 | ±0.007813 | ±0.005524 |
| n | 16 | 17 | 18 | 19 | 20 | 21 | 22 | 23 |
| $\pm 2^{n/2}$ | ±0.003906 | ±0.002762 | ±0.001953 | ±0.001381 | ±0.000977 | ±0.000691 | ±0.000488 | ±0.000345 |

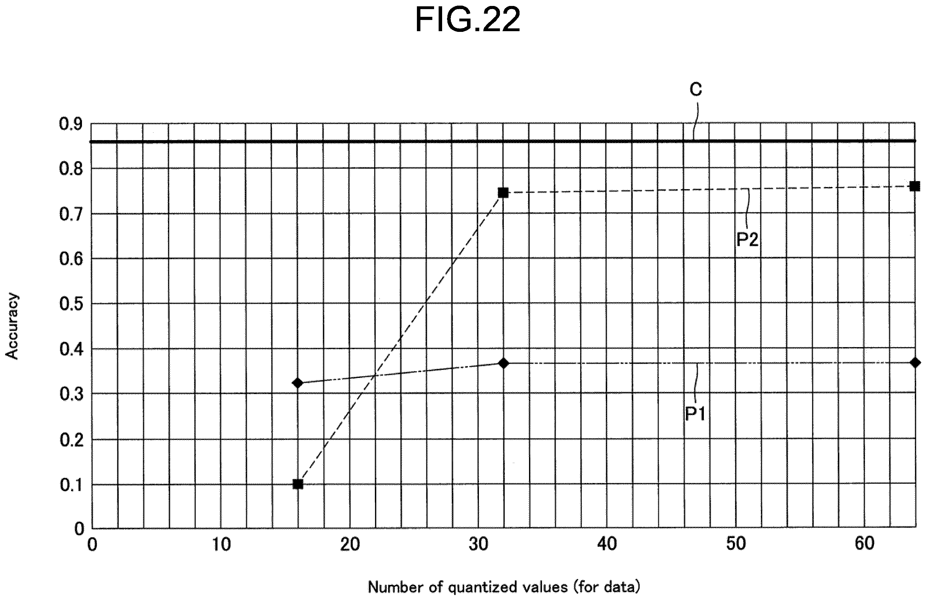

FIG. 22 illustrates a comparison result of the image recognition rate in a case where inference is performed without relearning by the quantization described above. In FIG. 22, the vertical axis represents the recognition accuracy, and the horizontal axis represents the quantization number (N value) of the input vector x. In addition, in FIG. 22, the recognition accuracy before quantization is indicated by a line segment C, the recognition accuracy in a case where quantization is performed with p = 1 is indicated by a line segment P1, and the recognition accuracy in a case where quantization is performed with p = 2 is indicated by a line segment P2.

Here, when the line segment P1 and the line segment P2 are compared, in a case where the quantization number of the input vector x is set to 32 values or 64 values, it can be seen that the recognition accuracy is significantly improved in a case where quantization is performed with p = 2 as compared with a case where quantization is performed with p = 1. In addition, it can be seen that no significant deterioration in recognition accuracy is observed even when the line segment P2 and the line segment C are compared. This indicates that, in a case where the quantization number of the input vector x is sufficient, it is possible to maintain high recognition accuracy even in a case where relearning is not performed by adopting the quantization method according to the development example.

As described above, by the quantization method according to the development example, it is possible to effectively reduce the processing load in the inner product operation and to maintain high performance of the learning device.

3. Conclusion

As described above, the information processing apparatus according to the base technology and its development example includes the product-sum operation circuit that executes the product-sum operation on the basis of a plurality of input values and a plurality of weigh coefficients quantized by the power expression corresponding to the respective input values. The exponent of the quantized weigh coefficient is expressed by a fraction having a predetermined divisor p in the denominator. In addition, the product-sum operation circuit performs a product-sum operation using different addition multipliers on the basis of a remainder determined from the divisor p. With such a configuration, it is possible to further reduce the processing load related to the inner product operation and guarantee the quantization granularity of the weigh coefficient.

4. First embodiment

Next, the first embodiment of the present disclosure will be described in detail below with reference to the drawings. Note that, in the description described below, the base technology and its development example are simply referred to as the base technology.

4.1 Problems of base technology

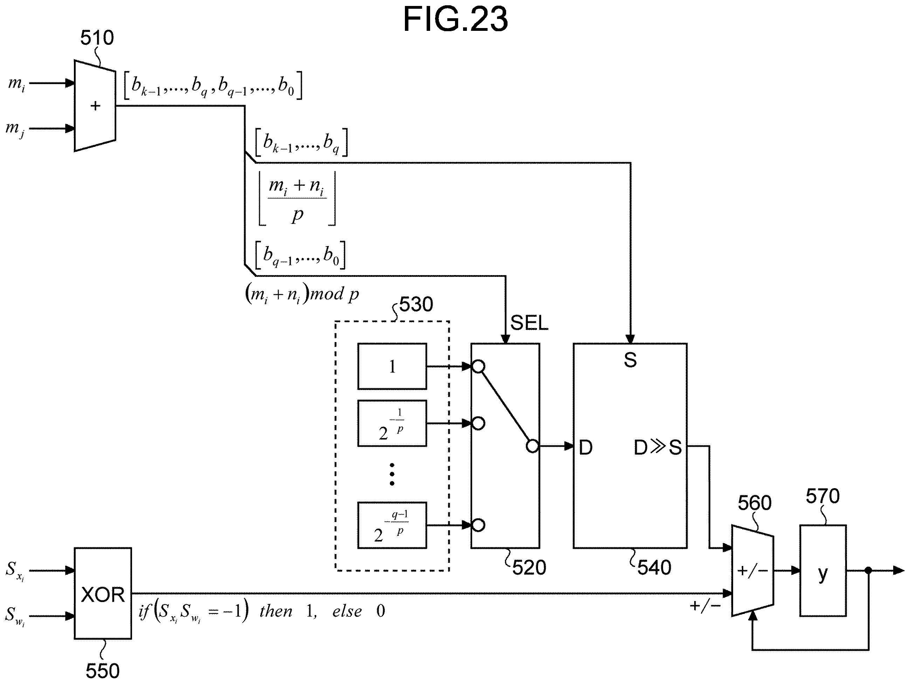

An example (corresponding to FIG. 18) of the product-sum operation circuit in a case where both the weight vector and the input vector according to according to the base technology are quantized is illustrated in FIG. 23 again. As illustrated in FIG. 23, the base technology exemplifies a method of realizing the product-sum operation by table lookup. Specifically, a table (storage circuit group 530) in which the number of entries and the value are determined by p indicating the granularity of quantization is provided, and the product-sum operation directed to the DNN/CNN inference processing is performed using the table.

Therefore, in the embodiment described below, the advantage of the storage circuit group 530 being a rewritable register is more clearly illustrated by exemplifying a configuration in which a plurality of tables is switched while exemplifying a table other than the value table formed by the power of a p-th root of 2.

4.2 Example of value table

As described above, the base technology proposes a new quantization method for the purpose of reducing the product-sum operation amount of a deep neural network (DNN) and a convolutional neural network (CNN). In general, the quantization in the information theory refers to approximate expression of an analog amount with a discrete value, but the quantization here is defined as expressing the accuracy with which an original value has been expressed with a smaller bit amount. For example, truncating a value originally represented by a 32-bit floating-point number to a 10-bit or 8-bit floating-point number or a fixed-point number, more extremely, truncating the value to 2 bits or 1 bit is referred to as the quantization.

In the base technology, a word length of a numerical value expressing a coefficient or a variable is shortened by quantizing the coefficient or the variable at the time of DNN/CNN inference. Thus, it is possible to achieve reduction in the memory capacity for storing the parameters, reduction in the amount of operation and operation energy at the time of product-sum operation, and the like.

Therefore, in the base technology, the variable is defined as x and the constant is defined as w, quantization as indicated in Formula (32) (corresponding to Formulae (20) and (21) described above) has been executed.

$$x_i = s_{x_i} 2^{-\frac{m_i}{p}}$$

$$w_i = s_{w_i} 2^{-\frac{n_i}{p}} \qquad\qquad (32)$$

Here, $x_i$ represents an i-th element of the input vector x, $w_i$ represents an i-th element of the coefficient vector w, s represents a positive/negative sign of the element, m represents an index (symbol) when the i-th element of the input vector x is quantized, n represents an index (symbol) when the i-th element of the coefficient vector w is quantized, and p represents the granularity of quantization.

In the base technology, as illustrated in FIG. 23, p indicating the granularity of quantization is used as a parameter, and a product-sum operation directed to DNN/CNN inference processing is performed using a table (storage circuit group 530) in which the number of entries and a value are determined by p. Specifically, p values along the function space of a power of 2 (more precisely, power of a p-th root of 2) are held as table values, and cumulative addition is performed while scaling according to the positive/negative sign and dynamic range of the variable and the coefficient is performed, thereby realizing the product-sum operation by the power of 2 method. Note that, in the base technology, Formula (33) described below is exemplified as the table value.

$$1, 2^{-\frac{1}{p}}, 2^{-\frac{2}{p}}, 2^{-\frac{3}{p}}, ..., 2^{-\frac{p-2}{p}}, 2^{-\frac{p-1}{p}} \tag{33}$$

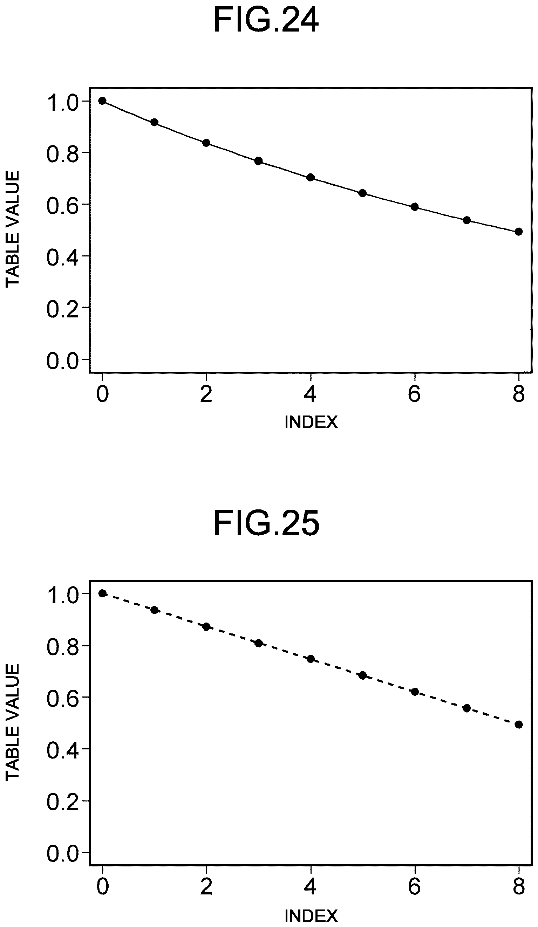

When the table value of Formula (33) is plotted on a graph, the relationship between the index and the table value is as illustrated in FIG. 24.

Here, another table value is considered. For example, a value along a linear function space is applied as the value of the table, instead of a value along the function space of a power of 2. In that case, quantization as illustrated in Formula (34) described below is performed.

$$x_i = s_{x_i}\left(1 - \frac{m_i}{p}\right)$$

$$w_i = s_{w_i}\left(1 - \frac{n_i}{p}\right) \tag{34}$$

In Formula (34), regarding each symbol, similarly to the case of the expression of the power of 2 indicated in Formula (32), $x_i$ represents an i-th element of the input vector x, $w_i$ represents an i-th element of the coefficient vector w, s represents a positive/negative sign of the element, m represents an index (symbol) when the i-th element of the input vector x is quantized, n represents an index (symbol) when the i-th element of the coefficient vector w is quantized, and p represents the granularity of quantization.

In the present embodiment, the table, the domain, and the range in the expression of the power of 2 of the base technology are combined, and p values along the linear function space are set as table values. Using these values, cumulative addition is performed while performing scaling according to the positive/negative sign and dynamic range of the variable and the coefficient, so that product-sum operation by a linear method can be realized. The circuit configuration in this case may be similar to the product-sum operation circuit illustrated in FIG. 23. However, the table value in the storage circuit group 530 is a value indicated by Formula (35) described below.

$$1, \left(1 - \frac{1}{p}\right), \left(1 - \frac{2}{p}\right), \left(1 - \frac{3}{p}\right), ..., \left(1 - \frac{p-2}{p}\right), \left(1 - \frac{p-1}{p}\right) \tag{35}$$

Note that Formula (35) can be simply indicated as Formula (36) described below.

$$1, \left(\frac{p-1}{p}\right), \left(\frac{p-2}{p}\right), \left(\frac{p-3}{p}\right), ..., \left(\frac{2}{p}\right), \left(\frac{1}{p}\right) \tag{36}$$

When the table value indicated by Formula (35) or Formula (36) is plotted on a graph, the relationship between the index and the table value is as illustrated in FIG. 25.

Although the expression has been described in the form of linear expression, the expression can also be applied to a floating-point number expression having a sign part, an exponent part, and a mantissa part by adopting the notation method exemplified in the third embodiment to be described later.

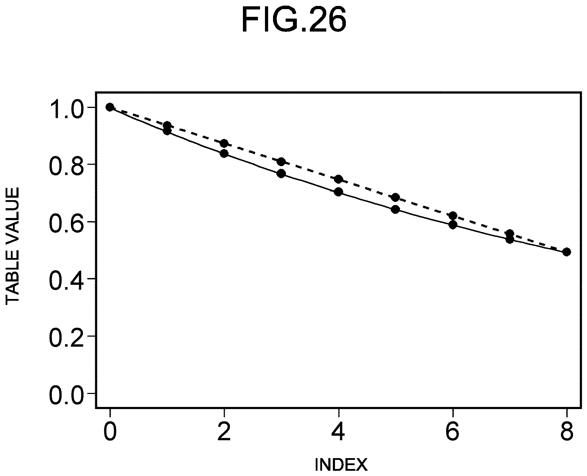

FIG. 26 is a diagram in which table values expressed by powers of 2 and table values in linear expression are plotted on the same graph. As illustrated in FIG. 26, the table value of the expression of the power of 2 has a downward protrusion shape with respect to the linear expression.

By changing the table value in this manner, it is possible to easily realize a product-sum operation circuit having another characteristic.

As an example of still another table, it is conceivable to convert the expression of the power of 2 to an upward protrusion relative to the value of the linear expression.

Furthermore, it is possible to create various tables suitable for CNN/DNN tasks by changing the function space, which is the base. However, due to the characteristics of the product-sum operation circuit, it is required to be monotonically decreased in this domain section.

Note that, as described in the base technology, each storage circuit included in the storage circuit group 530 may be a read-only circuit that holds the addition multiplier as a constant, or may be a rewritable register.

4.3 Specific example of product-sum operation circuit

Next, specific examples of the product-sum operation circuit according to the first embodiment will be described with reference to some examples.

4.3.1 First specific example

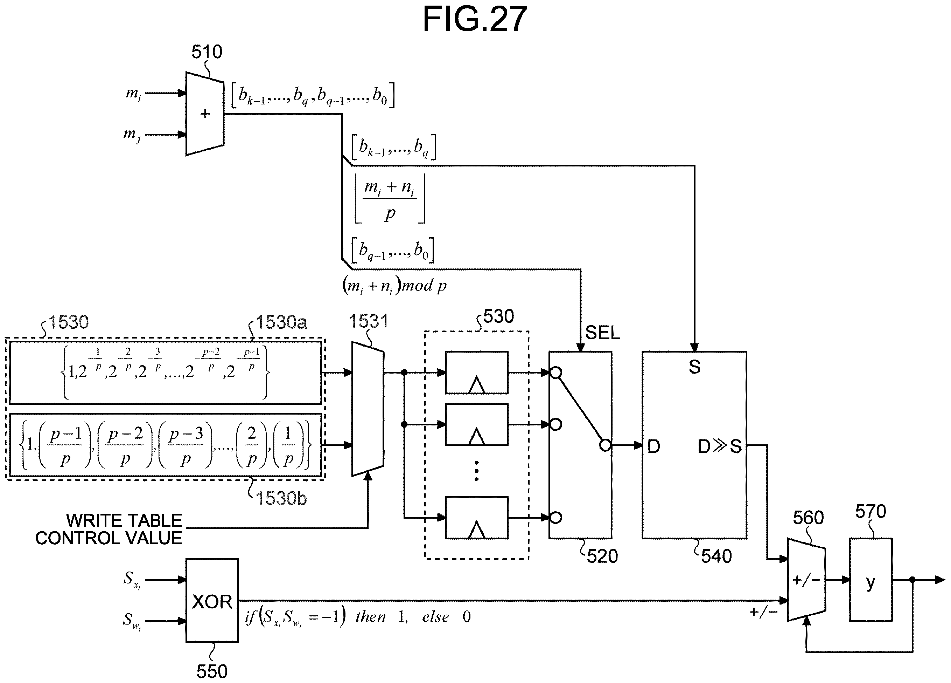

FIG. 27 is a circuit diagram illustrating a schematic configuration example of the product-sum operation circuit according to the first specific example. As illustrated in FIG. 27, similarly to the product-sum operation circuit illustrated in FIG. 23, the product-sum operation circuit according to the first specific example includes an integer adder (also simply referred to as an adder) 510, a selector 520, a storage circuit group 530, a shift operator 540, an XOR circuit 550, an adder-subtractor 560, and an accumulator 570.

(Integer adder 510)

The integer adder 510 adds input $m_i$ and $n_i$. At this time, the addition result of $m_i$ and $n_i$ can be expressed as bit array $[b_{k-1},..., b_q, b_{q-1},...,b_0]$ as illustrated in the drawing.

(Selector 520)

The selector 520 selects a storage circuit to which the circuit is connected among a plurality of storage circuits included in the storage circuit group 530 on the basis of the value of $[b_{q-1},...,b_0]$ corresponding to a low-order q bit.

(Storage circuit group 530)

The storage circuit group 530 includes a plurality of storage circuits each corresponding to the value of the remainder of $(m_i + n_i)$ mod p. In each storage circuit, an addition multiplier corresponding to each remainder is stored as a normalized number of a floating-point expression having an exponent part having 2 as a radix. Here, since the addition/subtraction multiplier described above stored in the storage circuit group 530 is in a range of greater than 0.5 and less than or equal to 1.0, it can be expressed by a normalized number by having a word length of 1 bit or more as an exponent part. Note that each storage circuit included in the storage circuit group 530 may be a read-only circuit that holds the addition multiplier as a constant, or may be a rewritable register. When the addition multiplier is stored as a constant in the read-only circuit, there is an advantage that the circuit configuration can be simplified and the power consumption can be reduced.

(Shift operator 540)

The shift operator 540 according to the present embodiment performs a right shift operation on the addition multiplier stored in the connected storage circuit by the value of the high-order bit corresponding to $[b_{k-1},...,b_q]$.

(XOR circuit 550)

The XOR circuit 550 outputs 1 or 0 on the basis of input $S_{xi}$ and $S_{wi}$.

(Adder-subtractor 560)

The adder-subtractor 560 repeatedly executes addition or subtraction on y held in the accumulator 570 on the basis of the input from the shift operator 540 and the input from the XOR circuit 550. When the input from the XOR circuit 550 is 0, addition is performed, and when the input is 1, subtraction is performed.

(Accumulator 570)

The accumulator 570 holds a result y of the product-sum operation.

In addition, the product-sum operation circuit according to the first specific example further includes, in addition to the above configuration, a memory 1530 that holds a plurality of different tables and a selector 1531 that selectively writes the table value in the memory 1530 to each storage circuit (register or memory) of the storage circuit group 530.

(Memory 1530)

The memory 1530 holds, for example, a table 1530a of the expression of the power of 2 and a table 1530b of the linear expression described above.

(Selector 1531)

The selector 1531 reads the table 1530a or 1530b from the memory 1530 according to a write table control value input from a high-order control unit or the like, and writes the read table 1530a/1530b to each storage circuit of the storage circuit group 530.

With the above configuration included, it is possible to switch a function space, which is the base, and thus, it is possible to execute the product-sum operation using an appropriate table according to the CNN/DNN task.

4.3.2 Second specific example

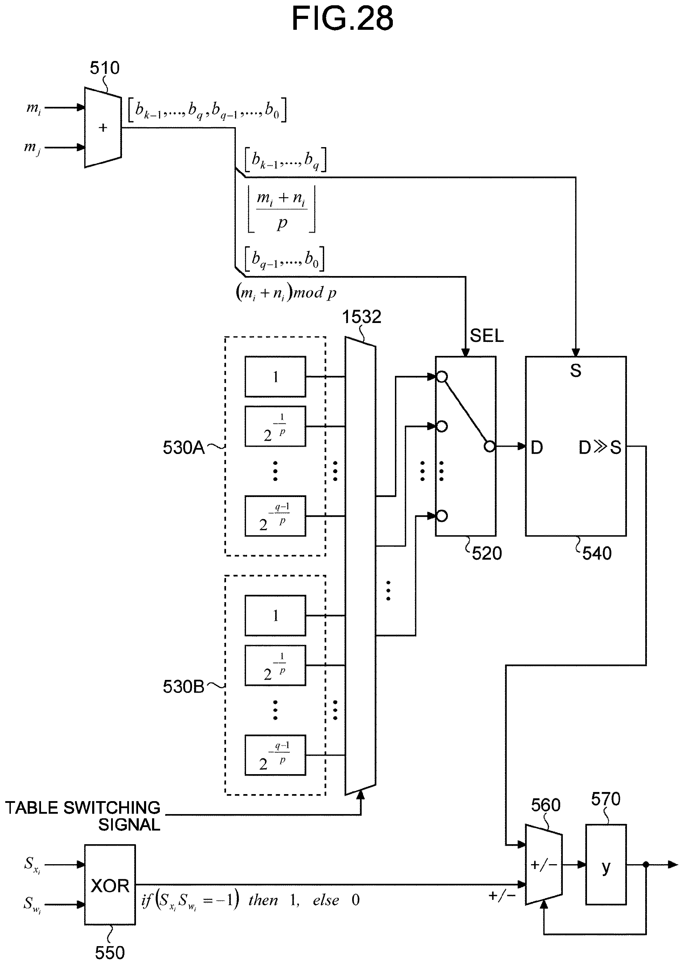

FIG. 28 is a circuit diagram illustrating a schematic configuration example of the product-sum operation circuit according to the second specific example. As illustrated in FIG. 28, in the product-sum operation circuit according to the second specific example, in the same configuration as the product-sum operation circuit illustrated in FIG. 23, the storage circuit group 530 is replaced with a plurality of (two in this example) storage circuit groups 530A and 530B holding a plurality of different tables, and the product-sum operation circuit further includes a selector 1532 that selectively switches connection between the storage circuit group 530A or 530B and the selector 520.

Similarly to FIG. 23, for example, the storage circuit group 530A includes a plurality of storage circuits that stores the value of the table of the expression of the power of 2 described above. On the other hand, the storage circuit group 530B includes, for example, a plurality of storage circuits that stores value of the table of the linear expression described above.

The selector 1532 switches the connection between the storage circuit group 530A/530B and the selector 520 according to a table switching signal input from the high-order control unit or the like.

With the above configuration included, similarly to the first specific example, it is possible to switch a function space, which is the base, and thus, it is possible to execute the product-sum operation using an appropriate table according to the CNN/DNN task.

4.4 Operations and effects

As described above, according to the present embodiment, by selecting an appropriate addition constant for the table (storage circuit group 530), for example, a linear floating-point number that is not the expression of the power of 2 can be selected without changing the configuration of the operation circuit part in a product-sum operation circuit 2100.

This makes it possible to select a table value corresponding to the DNN/CNN processing task without being limited to the expression of the power of 2, the linear expression, or the like.

In general, when an operation circuit system for DNN/CNN is implemented, in order to cope with various processing tasks, a large number of processor elements including a plurality of product-sum circuits, such as float32, float16, and short-word length float, and also including a product-sum circuit by the expression of the power of 2 of the base technology, is arranged. On the other hand, according to the present embodiment, it is possible to use exactly the same circuit for the product-sum circuit by the expression of the power of 2 and the short-word length float only by switching the table, so that it is possible to achieve a significant circuit reduction as a whole.

Other configurations, operations, and effects may be similar to those of the above-described base technology, and thus detailed description thereof will be omitted here.

### 5. Second embodiment

Next, the second embodiment will be described in detail with reference to the drawings.

### 5.1 Problems of base technology

In the base technology, it is necessary to find the minimum r satisfying Formula (29), but it is necessary to prepare a value obtained by further multiplying the power of a p-th root of 2 by a 2p-th root of 2 for value comparison in searching for the optimum r for implementation. Therefore, in a case where the existing table (storage circuit group 530) is used for the value search, an operation of multiplying by the 2p-th root of 2 is required each time, and the calculation cost becomes remarkably high. Alternatively, in a case where a table multiplied by the 2p-th root of 2 in advance is used, it is necessary to implement two tables: a table for product-sum operation and a table for quantization rounding in a system that realizes the base technology, and there is a problem that management tends to be complicated.

Therefore, in the present embodiment, a quantization circuit and a method capable of reducing the calculation cost while suppressing management complication will be described in conjunction with an example.

### 5.2 Specific example of quantization circuit

In the base technology, an input vector and a product-sum operation result in each layer (or feature map) need to be quantized into the expression of the power of 2 at runtime, and sent to subsequent processing or stored in the memory. Since the values of the coefficients of the DNN and the CNN do not change in the middle, it is possible to perform conversion into the expression of the power of 2 in advance and use it, but it is necessary to convert a numerical value appearing in the inference calculation into the expression of the power of 2. This processing is generally referred to as run-time quantization. In the present embodiment, a more developed form of rounding of the quantizer will be described.

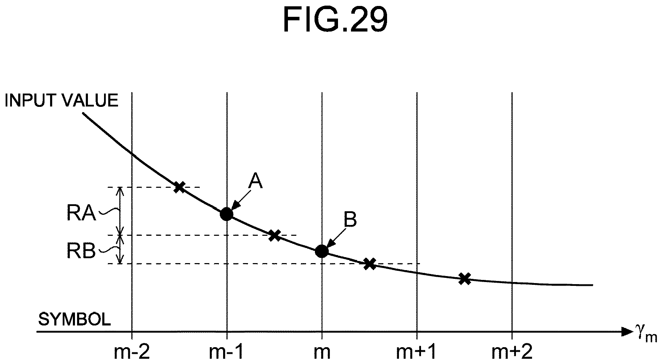

Since the rounding of the quantizer is quantization for reducing the amount of information, the amount of information in the output is smaller than that in the input to the quantizer. Specifically, a numerical value having a certain width of the input is represented by one value. That is, a numerical value in a certain range is rounded to one representative value. FIG. 29 is a diagram illustrating an example of rounding of the quantizer. As illustrated in FIG. 29, when a value included in a certain range RA is input to the quantizer, the value is rounded to A, and a symbol m-1 is assigned. On the other hand, when a value included in a range RB is input, the value is rounded to B, and a symbol m is assigned.

In the run-time quantization of the input vector x in the base technology, it is necessary to find the minimum r satisfying Formula (29) described above, but it is necessary to prepare a value obtained by further multiplying the power of a p-th root of 2 by a 2p-th root of 2 in searching for the optimum r for implementation. This corresponds to the portion surrounded by the solid line in Formula (37) (the same as Formula (29)).

$$d \geq 2^{-\frac{r}{p}\left(\frac{1}{2}\right)} \tag{37}$$

This means 0.5 rounding along the expression function of the expression of the power of 2, and the value of an intermediate point B in FIG. 29 is calculated. When the value excluding the item surrounded by the solid line in Formula (37) described above is arranged according to the value of r, it becomes the same as the value table (see Formula (33)) for the product-sum operation exemplified in the first embodiment.

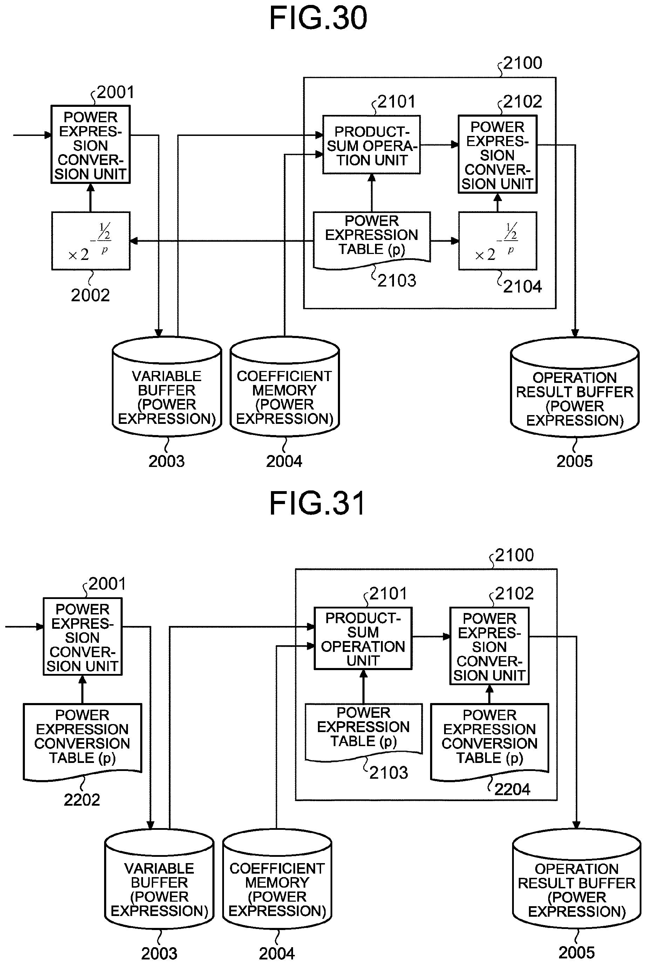

This means that, as illustrated in FIG. 30, the table (storage circuit group 530) described in the base technology can be used for value search at the time of run-time quantization. Note that FIG. 30 is a block diagram illustrating a schematic configuration example of a neural network circuit as a comparative example.

As illustrated in FIG. 30, the neural network circuit as the comparative example includes a power expression conversion unit 2001, a multiplication unit 2002, a variable buffer 2003, a coefficient memory 2004, an operation result buffer 2005, and a product-sum operation circuit 2100. The product-sum operation circuit 2100 includes a product-sum operation unit 2101, a power expression conversion unit 2102, a power expression table 2103, and a multiplication unit 2104.

(Multiplication unit 2002)

The multiplication unit 2002 executes 0.5 rounding along the expression function of the expression of the power of 2 by executing the multiplication indicated by Formula (38) described below on the table value read from the power expression table 2103 and inputs the obtained value to the power expression conversion unit 2001.

$$\times 2^{-\frac{1/2}{p}} \qquad (38)$$

(Power expression conversion unit 2001)

The power expression conversion unit 2001 converts the input value into the expression of the power of 2 using the value input from the multiplication unit 2002. The value obtained by the conversion is stored in the variable buffer 2003. Therefore, the variable of the expression of the power of 2 is stored in the variable buffer 2003.

(Product-sum operation unit 2101)

The product-sum operation unit 2101 executes a product-sum operation from the variables of the power expression stored in the variable buffer 2003 and the coefficients of the power expression stored in the coefficient memory 2004. At that time, the product-sum operation unit 2101 executes the product-sum operation using the table value stored in the power expression table 2103. The table stored in the power expression table 2103 is the value table indicated in Formula (33) described above.

(Multiplication unit 2104)

The multiplication unit 2104 executes 0.5 rounding along the expression function of the expression of the power of 2 by executing the multiplication indicated by Formula (38) described above on the table value read from the power expression table 2103 and inputs the obtained value to the power expression conversion unit 2001.

(Power expression conversion unit 2102)

The power expression conversion unit 2102 converts the value input from the product-sum operation unit 2101 into the expression of the power of 2 using the value input from the multiplication unit 2104. The value obtained by the conversion is stored in the operation result buffer 2005. Therefore, the variable of the expression of the power of 2 is stored in the operation result buffer 2005.

As described above, the power expression conversion units 2001 and 2102 as the run-time quantizers can be realized by multiplying the power of 2 expression table 2103 (parameter p) present in the product-sum operation circuit 2100 by the 2p-th root of 2.

However, in the above configuration, since multiplication occurs each time of the run-time quantization, the calculation cost is significantly high. Therefore, as illustrated in FIG. 31, it is also conceivable to prepare in advance tables (power expression conversion tables 2202 and 2204) obtained by multiplying the table value in the power expression table 2103 by the constant illustrated in Formula (38).

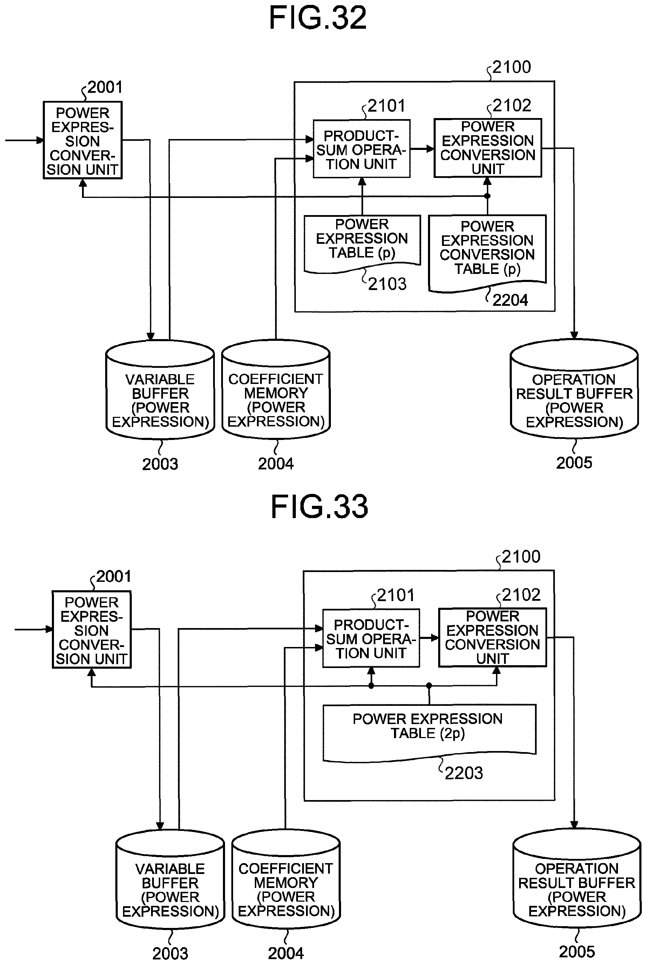

In addition, the run-time quantization is performed by quantization including quantization of external input data for DNN/CNN and rounding after product-sum. They are the same processing. Therefore, as illustrated in FIG. 32, the power expression conversion table 2204 is shared and used in a time division manner by the power expression conversion units 2001 and 2102, whereby the table holding amount of the entire system can be reduced.

Meanwhile, the power expression conversion tables 2202 and 2204 are obtained by multiplying the power of 2 expression table, which is the parameter p for determining the granularity of quantization, by the 2p-th root of 2. That is, when Conversion Formula (38) for deriving the power expression conversion tables 2202 and 2204 from the power expression table 2103 is modified, Formula (39) described below is obtained.

$$2^{-\frac{r+1/2}{p}} = 2^{-\frac{r}{p}} \cdot 2^{-\frac{1/2}{p}} = 2^{-\frac{r}{p}} \cdot 2^{-\frac{1}{2p}} = 2^{-\frac{2r+1}{2p}} \qquad (39)$$

This means an odd part subset of the power of 2 expression table, which is a parameter 2p. Therefore, the tables of even part subsets expressed by Formula (40) described below can be coupled, that is, the power expression table 2103 and the power expression conversion table 2202/2204 can be collectively treated as one table.

$$2^{-\frac{r}{p}} = 2^{-\frac{2r}{2p}} \tag{40}$$

FIG. 33 is a diagram illustrating a case where an even part subset and an odd part subset are combined into one table. As illustrated in FIG. 33, the power expression table 2203 including an even part subset and an odd part subset is shared by the product-sum operation unit 2101 and the power expression conversion units 2001 and 2102. The table values input to the product-sum operation unit 2101 and the power expression conversion units 2001 and 2102 can be allocated according to even and odd numbers of addresses of symbol indexes, for example.

In this way, by combining the two tables into one table, for example, in a case where the tables are stored in the read-only circuit as a constant, it is possible to greatly simplify the circuit configuration along with the logical compression and to obtain an advantage that the power consumption can be reduced.

5.3 Operations and effects

As described above, according to the present embodiment, when the run-time quantization is performed, the power of 2 expression table for the product-sum operation can be used to generate the value for comparison of the run-time quantization.

At this time, although multiplication frequently occurs in the base technology, by providing a table prepared in advance, it is possible to greatly reduce the operation cost at the time of the run-time quantization by eliminating multiplication each time.

Furthermore, by integrating the power of 2 expression table and a comparison value table, it is possible to combine the tables to be managed into one table. Thus, the circuit scale can be reduced and the power consumption can be reduced.

Other configurations, operations, and effects may be similar to those of the above-described base technology or embodiment, and thus detailed description thereof will be omitted here.

6. Third embodiment

Next, the third embodiment will be described in detail below with reference to the drawings.

6.1 Problems of base technology

In the base technology described above, new and improved information processing apparatus and information processing method capable of further reducing the processing load related to an inner product operation and guaranteeing the quantization granularity of the weigh coefficient are proposed.

However, in the method of the base technology, it is necessary to use a fixed-point expression as an internal numeric expression, and a long word length is required, leading to an increase in scale and an increase in power consumption.

For example, when a numeric expression other than the fixed-point expression is used, the shift operation is an operation of a power multiplication of 2, and thus, $y = x*2\wedge n$ is general. Thus, a power operator and a multiplier are required, leading to an increase in scale. Here, * is an operator of multiplication, and ^ is an operator of power.

In addition, in the base technology, only the quantization from the fixed-point expression is indicated for the quantization of the input vector, and a means for performing the quantization at low cost from other numeric expressions has not been indicated.

Using the method of the base technology, the required fixed-point expression word length is, for example, as described below. Note that, in the description below, the input vector component $x_i$ and the weight vector component $w_i$ are expressed by Formula (32) described above. In addition, in Formula (32), $S_{xi}, S_{wi} \in \{-1, 1\}$ and $n_i, m_i \in \{0, 1, 2,...\}$.

In addition, a numerator related to the exponent of the quantized input value is $m_i$, a predetermined divisor of the denominator is p, a numerator related to the exponent of the quantized weigh coefficient is $n_i$, and a predetermined divisor of the denominator is p.

The product-sum operation circuit according to the base technology described above with reference to FIG. 23 realizes an inner product operation on a smaller circuit scale by a single adder-subtractor 560 and a single accumulator 570. Here, for example, assuming that p = 16 and the word lengths of $m_i$ and $n_i$ are 8 bits, the maximum shift amount of the shift operator 540 is 32 bits. Then, for example, when the significant number is 6 digits, the word length of the addition/subtraction multiplier stored in the storage circuit group 530 is 20 bits, and thus the output word length of the shift operator 540 is 52 bits. Since the word length of the accumulator 570 depends on how many times addition is performed, for example, when the number of times of addition is set to a maximum of 255 times, the word length is 60 bits obtained by adding 8 bits to the output word length of the shift operator 540.

On the other hand, as a method of expressing a number by a floating point, one based on the IEEE 754 standard is known. According to this standard, a finite number having 2 or 10 as a radix is expressed by three integers: a sign, a mantissa, and an exponent. As a feature of this standard, in the binary floating-point form having 2 as a radix, the most significant bit of the normalized mantissa is always 1, and thus this is omitted and expressed. In addition, the exponent is 0 in the case of 0 or a non-normalized number and a bias expression obtained by adding a predetermined fixed value to the exponent in the case of a normalized number. These expression forms can be easily extended to an exponent part and a mantissa part of an arbitrary word length. Hereinafter, similarly to the IEEE 754 standard, a floating-point notation in which the most significant bit of the normalized number of the mantissa part is omitted, the exponent part is 0 in the case of 0 or a non-normalized number, and the bias expression is adopted in the case of a normalized number is referred to as IEEE 754 compliant.

Therefore, in the present embodiment, a product-sum operation circuit and a method thereof that enable a reduction in circuit scale and a reduction in power consumption will be described in conjunction with an example. According to the embodiment described below, it is also possible to achieve the identical effects of the base technology with a shorter word length, in other words, with a smaller circuit scale and power consumption.

6.2 Specific example of product-sum operation circuit

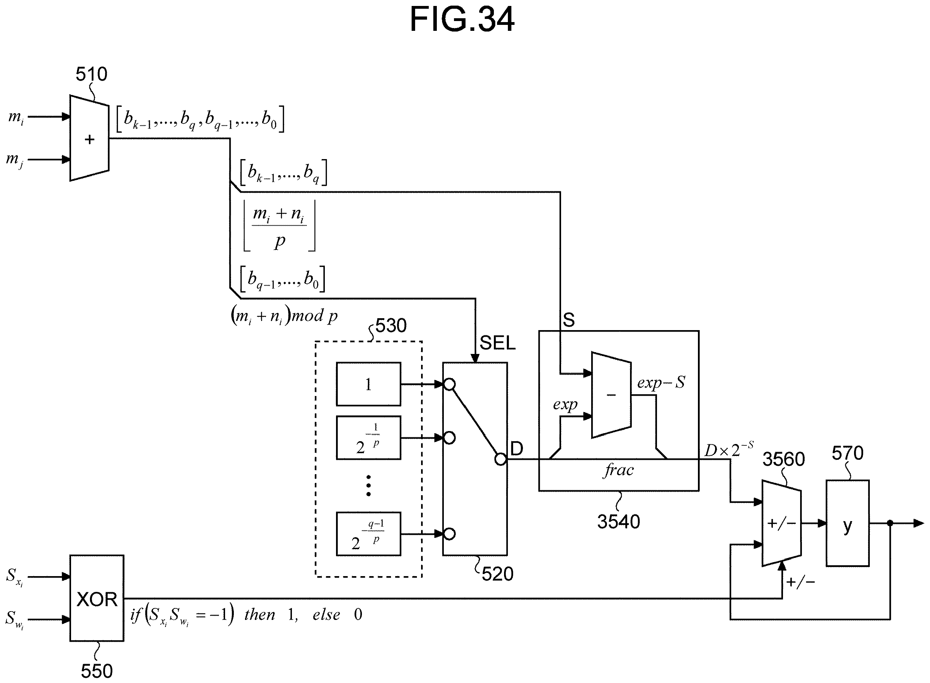

FIG. 34 is a circuit diagram illustrating a schematic configuration example of a product-sum operation circuit according to the third embodiment. As illustrated in FIG. 34, the product-sum operation circuit according to the third embodiment includes an integer adder 510, a selector 520, a storage circuit group 530, a power of 2 multiplication operator 3540, an XOR circuit 550, a floating-point adder-subtractor 3560, and an accumulator 570.

In the configuration illustrated in FIG. 34, the integer adder 510, the selector 520, the storage circuit group 530, the XOR circuit 550, and the accumulator 570 may be similar to the configuration described with reference to FIG. 27 in the first embodiment.

(Power of 2 multiplication operator 3540)

The power of 2 multiplication operator 3540 corresponds to the shift operator 540 in FIG. 27. Therefore, the operation executed by the power of 2 multiplication operator 3540 corresponds to the shift operation in the fixed-point expression.

The power of 2 multiplication operator 3540 performs an operation of a power of 2 with -S as an exponent, that is, $D*2^{-S}$ with respect to a value S of a high-order bit corresponding to $[b_{k-1},..., b_q]$ by the addition multiplier stored by the connected storage circuit. Here, $p = 2^q$ and the word length of the exponent part of the floating-point expression of an input D in the power of 2 multiplication operator 3540 is added to the word length of the exponent part in the storage circuit so as to be extended to a size in which the exponent of the minimum value of -S can be expressed, that is, extended to a size in which the exponent of $-(1+2^{(bw(m_i)-q)}+2^{(bw(n_i)-q)})$ can be expressed, this operation can be implemented only by an integer subtractor for the exponent part of the floating-point expression, and the operation result does not become a non-normalized number. Here, $bw(m_i)$ and $bw(n_i)$ are values representing the word lengths of $m_i$ and $n_i$, respectively.

(Floating-point adder-subtractor 3560)

Similarly to the adder-subtractor 560, the floating-point adder-subtractor 3560 repeatedly executes addition or subtraction on y held in the accumulator 570 on the basis of the input from the power of 2 multiplication operator 3540 and the input from the XOR circuit 550. When the input from the XOR circuit 550 is 0, addition is performed, and when the input is 1, subtraction is performed.

As an example, assuming that a storage value of the storage circuit group 530, the power of 2 multiplication operator 3540, the floating-point adder-subtractor 3560, and the accumulator 570 use a floating-point expression compliant with IEEE 754 and in the case of $p = 16$ and the word length of $m_i$ and $n_i$ is 8 bits, it is sufficient if the maximum value of S is 32 bits, and the exponent part of the floating point of the power of 2 multiplication operator 3540 is 7 bits (since the bias is 63, the range of $2^{63}$ to $2^{-62}$ can be expressed by a normalized number), and it is sufficient if the word length of the addition/subtraction multiplier stored in the storage circuit group 530 is, assuming that, for example, the significant number is 6 digits, a mantissa part 19 bits and an exponent part 1 bit, and the word lengths of the floating-point adder-subtractor 3560 and the accumulator 570 are, assuming that, for example, the number of times of addition is a maximum of 255, are not further extended from the word length of the exponent part determined from the maximum value of S and are a mantissa part 19 bits and an exponent part 7 bits.

6.3 Development to quantization method

As described above, according to the present embodiment, since the value of the floating-point expression is output as a result of the product-sum operation, it is also desired to be able to perform requantization at low cost. Quantization from a floating-point expression having a radix of 2 can be performed in the manner described below.

First, the floating-point expression $x_i$ is normalized such that the absolute value is 1.0 or less. This normalization may be similar to that in the base technology.

Next, when a numerator related to the exponent of a quantization value is $m_i$, a predetermined divisor of a denominator is p, a word length of $m_i$ is $bw(m_i)$, and $p = 2^q$, a floating-point expression having a word length of an exponent part that can be expressed with at least $2^{(-2^{(bw(m_i)-q)})}$ as a normalized number is used as a floating point of an input $|x_i| <= 1$. Accordingly, the quantization can be performed as described below.

When $x_i \neq 0$ and the exponent satisfies a condition of $-2^{(bw(m_i)-q)}$ or more,

L = - exponent (exponent with a radix of 2)
d = mantissa (treated as a fixed-point notation with a MSB of 0.5 digits)

and, similarly to the base technology, $r_{min}$ that is the minimum r satisfying $d \geq 2^{-((r+1/2)/p)}$ is obtained, and quantization is executed as $m_i = p(L-1)+r_{min}$. Since the input that meets the present condition is limited to the floating-point number of the normalized number, the "configuration of counting the number of bits L of consecutive 0 from msb of c", which is necessary in the base technology, can be omitted when the floating-point expression having a radix of 2 is used.

On the other hand, in a case where the above condition is not satisfied, that is, in a case where $x_i = 0$ or the exponent is less than $-2^{(bw(m_i)-q)}$ (including a non-normalized number), a quantization sign representing 0 is substituted. A value having an exponent of less than $-2^{(bw(m_i)-q)}$ is a value smaller than the minimum value that can be expressed by the quantization value, and thus can be treated as 0.

For example, assuming that the word length of $m_i$ after quantization is 8 bits and q = 4, it is sufficient if the exponent up to $-2^{(8-4)} = -16$ of the floating point of the input can be expressed as a normalized number. Therefore, when the floating-point expression compliant with IEEE 754 is used, it is sufficient if the exponent part is 6 bits. That is, it is sufficient if the bias is 31 and the range of $2^{31}$ to $2^{-30}$ can be expressed by the normalized number.

In addition, for example, assuming that the input is a floating-point expression compliant with IEEE 754, in other words, the exponent part exp is a bias expression, and the mantissa part frac is an expression in which 1 of the MSB is omitted, for $x_i \neq 0$ and $x_i$ with the exponent of $-2^{(bw(m_i)-q)}$ or more, the calculation can be performed as described below.

L-1 = (Ebias-1)-exp (where Ebias is a bias value of the exponent part)
d = {1, frac} (where {,} is a bit concatenation operator)

6.4 Specific example of quantization circuit

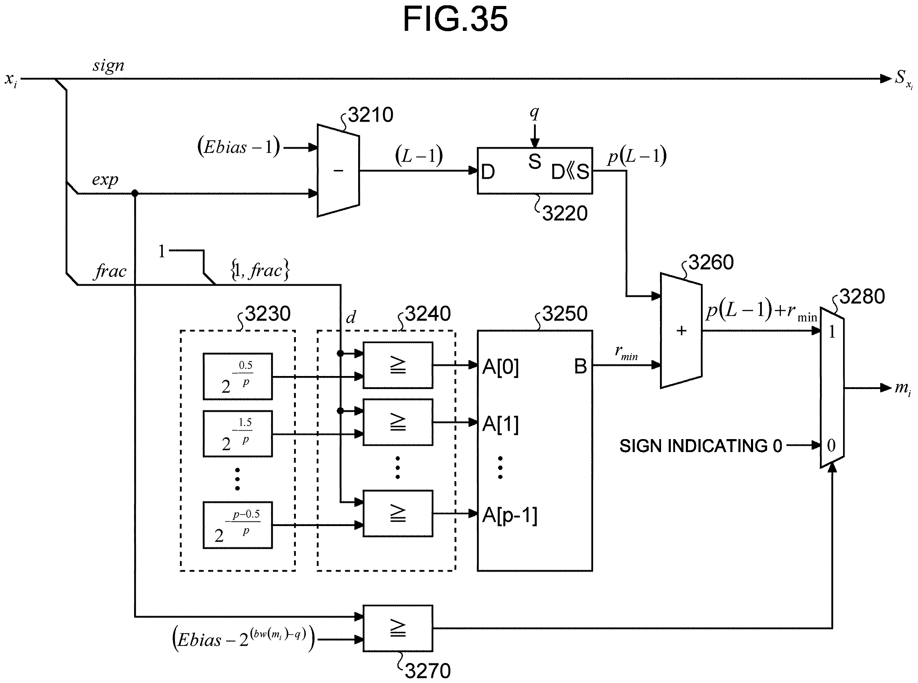

Next, a quantization circuit that realizes the above-described quantization method will be described. FIG. 35 is a circuit diagram illustrating a schematic configuration example of a quantization circuit according to the third embodiment.

As illustrated in FIG. 35, the quantization circuit according to the present embodiment includes an integer subtractor 3210, a shift operator 3220, a storage circuit group 3230, a comparator group 3240, a priority encoder 3250, an integer adder 3260, a comparator 3270, and a selector 3280.

(Integer subtractor 3210)

The integer subtractor 3210 calculates (L-1) = (Ebias-1)-exp by using the input exponent part exp of the floating-point expression compliant with IEEE 754.

(Shift operator 3220)

The shift operator 3220 calculates p(L-1) by multiplying the value of (L-1) calculated by the integer subtractor 3210 by p. Here, since $p = 2^q$, this multiplication can be realized by a q-bit left shift operation.

(Storage circuit group 3230)

The storage circuit group 3230 includes p storage circuits corresponding to $2^{-((r+1/2)/p)}$ and $r \in \{0,..., p-1\}$.

Each storage circuit included in the storage circuit group 3230 may be a read-only circuit that holds the value as a constant, or may be a rewritable register. When the constant is stored in the read-only circuit, there is an advantage that the circuit configuration can be simplified with the comparator group 3240 and the priority encoder 3250 to be described later and the power consumption can be reduced.

(Comparator group 3240)

The comparator group 3240 compares p values output from the storage circuit group with d = {1, frac} generated from the mantissa part of the floating-point expression of the input, and outputs 1 when d is equal to or greater than d, and 0 if this is not the case.

(Priority encoder 3250)

The priority encoder 3250 outputs a value corresponding to a position where 1 is input among p inputs in a range of 0 to p-1. In a case where there is a plurality of inputs of 1, a position with a smaller number is prioritized. In a case where both inputs are 0, p is output. Table 10 indicates the actuation of the priority encoder 3250 in a truth table.

Table 10

| Input | | | | | Output |
|---|---|---|---|---|---|
| A[0] | A[1] | A[2] | ... | A[p-1] | B |
| 1 | $\times$ | $\times$ | $\times$ | $\times$ | 0 |
| 0 | 1 | $\times$ | $\times$ | $\times$ | 1 |
| 0 | 0 | 1 | $\times$ | $\times$ | 2 |
| 0 | 0 | 0 | $\ddots$ | $\times$ | $\vdots$ |
| 0 | 0 | 0 | 0 | 1 | p-1 |
| 0 | 0 | 0 | 0 | 0 | p |

Assuming that the output of the priority encoder is $r_{min}$, $r_{min}$ that is the minimum r satisfying $d \geq 2^{-((r+1/2)/p)}$ is obtained by the storage circuit group 3230, the comparator group 3240, and the priority encoder 3250. In addition, in a case where the minimum r is not found, $r_{min} = p$.

(Integer adder 3260)

The integer adder 3260 adds p(L-1) value input from the shift operator 3220 and $r_{min}$ input from the priority encoder 3250 to obtain p(L-1) + $r_{min}$.

(Comparator 3270)

The comparator 3270 compares the exponent part exp of the input floating-point expression compliant with IEEE 754 and Ebias-$2^{(bw(m_i)-q)}$, and outputs 1 when exp and Ebias-$2^{(bw(m_i)-q)}$ are equal or exp is greater, and 0 if this is not the case. Thus, it is determined that $x_i \neq 0$ and the exponent is -$2^{(bw(m_i)-q)}$ or more. By using the floating-point expression compliant with IEEE 754 as the input, it is possible to determine whether or not the input is 0 only by comparison with the exponent part exp.

(Selector 3280)

The selector 3280 outputs p(L-1)+$r_{min}$ output from the integer adder 3260 or a sign representing 0 as $m_i$ on the basis of the output of the comparator 3270.

6.5 Operations and effects

As described above, according to the present embodiment, it is also possible to achieve the effects equivalent to those of the base technology with a shorter word length, in other words, with a smaller circuit scale and power consumption.

In addition, in a case where a plurality of operators according to the present embodiment is mounted, more operators can be mounted with the same resource (circuit scale, power), and the operation performance per the same resource can be improved.

Other configurations, operations, and effects may be similar to those of the above-described base technology or embodiment, and thus detailed description thereof will be omitted here.

6.6 Variation examples

In addition, the configuration according to the third embodiment described above can be modified as described below.

6.6.1 First variation example

Since the range of values stored in the storage circuit group 3230 of the product-sum operation circuit is limited to the range of more than 0.5 and 1.0 or less, the exponent of $D*2^{-S}$ is 0 or a negative value. Therefore, when the exponent part bias compliant with IEEE 754 is adopted, the MSB of the exponent part is fixed to a value of 0, and thus can be omitted. For example, assuming that $p = 16$ ($q = 4$), $m_i$ and $n_i$ have a word length of 8 bits, the range of exponent of $D*2^{-S}$ is $2^0$ to $2^{-33}$, and thus only low-order 6 bits of an exponent part 7 bits (bias is 63) are used. That is, a range of $2^0$ to $2^{-62}$ can be expressed. In this case, it is sufficient if the omitted MSB is extended and passed to the subsequent floating-point adder-subtractor 3560.

6.6.2 Second variation example

In addition, since the range of the value stored in the storage circuit group 3230 of the product-sum operation circuit is limited to the range of greater than 0.5 and less than or equal to 1.0, regarding the range of the exponent part, the positive maximum value is determined by the number of times of addition of the accumulator 570 and the negative maximum value is determined by the maximum value of S. Since these may not be symmetric, the bits of the exponent part can be reduced by setting the bias of the exponent part in the integer adder 510 and the accumulator 570 to a value shifted from $2^{\wedge}$ (word length of the exponent part -1) -1. For example, assuming that $p = 16$ ($q = 4$), $m_i$ and $n_i$ have a word length of 8 bits, a significant number of 6 digits, and the number of times of addition of accumulator is a maximum of 255, the range of exponent is $2^{-33}$ to $2^7$. Therefore, for example, assuming that the bias is 42, the exponent part can be 6 bits. In this example, $2^{-41}$ to $2^{20}$ can be expressed.

6.6.3 Third variation example

Furthermore, the negative maximum value of the exponent part of the product-sum operation circuit may be made smaller than the maximum value of S. In that case, when the exponent part exceeds the range that can be expressed as a result of subtraction, it is possible to correspond to the non-normalized number by corresponding by right shift of the mantissa part. With such a configuration, it is necessary to add a comparator and a shift circuit, but the bit length of the exponent part can be reduced.

6.6.4 Fourth variation example

Furthermore, in a case where the negative maximum value of the exponent part of the product-sum operation circuit is made smaller than the maximum value of S, when the exponent part exceeds the range that can be expressed as a result of subtraction, the exponent part may be set to zero. When degradation of accuracy due to this is negligible, the bit length of the exponent part can be reduced.

6.6.5 Fifth variation example

Furthermore, the calculation of $D*2^{-S}$ of the product-sum operation circuit may be realized by a floating-point operator (multiplier and power operator).

6.6.6 Sixth variation example

Furthermore, a part or the whole of the circuit configuration (product-sum operation circuit and/or quantization circuit) according to the third embodiment described above may be implemented by a program.

7. Fourth embodiment

Next, the fourth embodiment will be described in detail below with reference to the drawings.

7.1 Problems of base technology

As described above, in the base technology, a new quantization method for the purpose of reducing the product-sum operation amount of a deep neural network (DNN) and a convolutional neural network (CNN) is proposed.

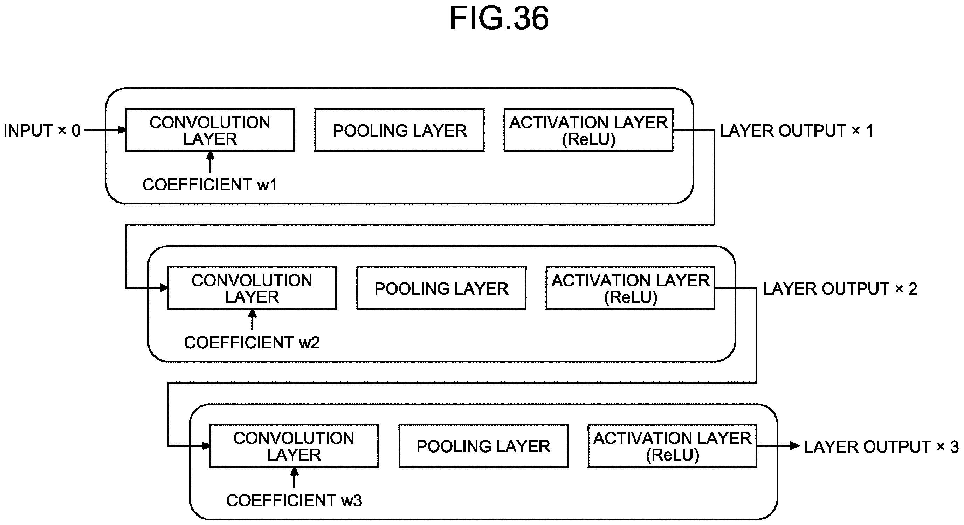

FIG. 36 is a schematic diagram for explaining actuation of general DNN and CNN. Note that FIG. 36 illustrates a three-layer convolutional neural network.

As illustrated in FIG. 36, in the actuation of the general DNN and CNN, processing such as convolution operation by product-sum operation (Convolution), pooling (Pooling), and activation function excitation (Activation) are sequentially performed for each layer. At this time, there is a situation in which the value range or distribution of the coefficient used in the operation of each layer or the variable appearing in the output of the layer is different for each layer. In addition, such a feature is not limited to each layer, and may appear as a feature that the distribution is different for each feature map.

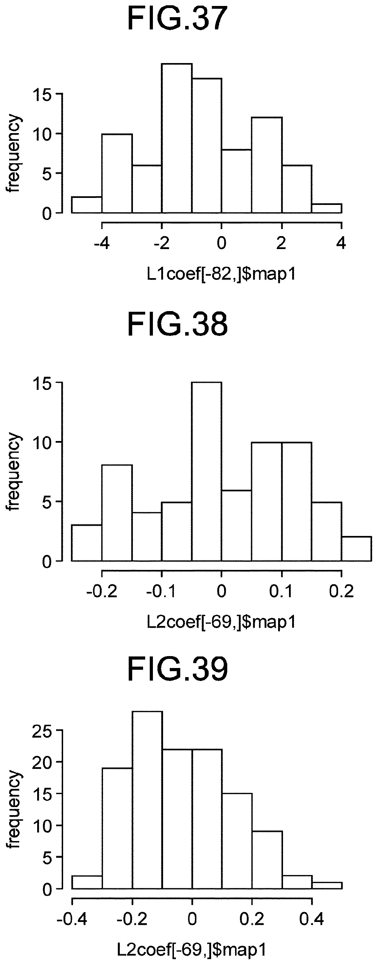

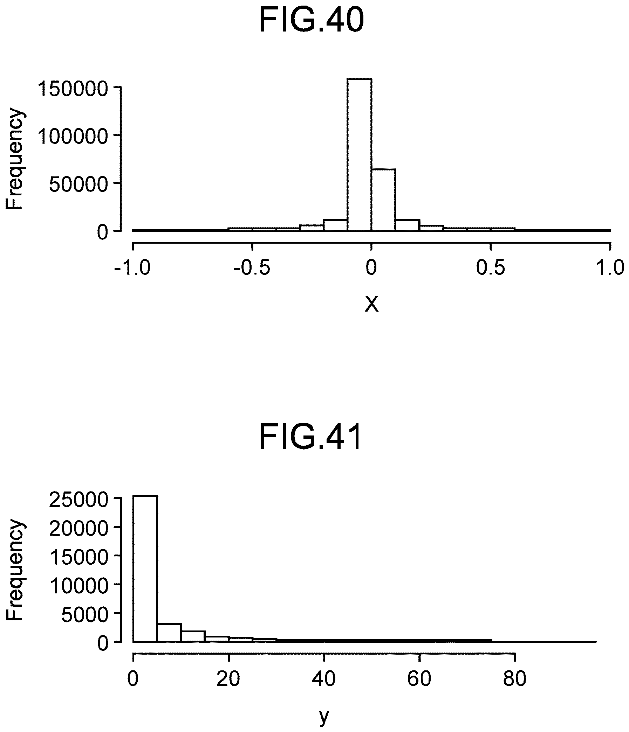

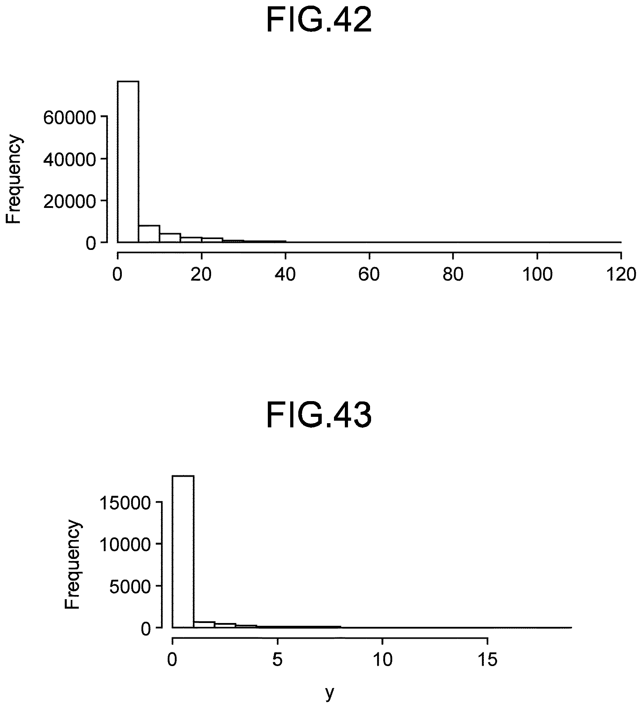

FIGS. 37 to 43 illustrate examples of input/output variables of each layer and coefficients used for convolution. FIG. 37 illustrates a coefficient w1 input to the convolution layer of the first layer in FIG. 36, FIG. 38 illustrates a coefficient w2 input to the convolution layer of the second layer in FIG. 36, and FIG. 39 illustrates a coefficient w3 input to the convolution layer of the first layer in FIG. 36. In addition, FIG. 40 illustrates an input (variable) x0 of the convolutional neural network in FIG. 36, FIG. 41 illustrates an output (variable) x1 from the first layer in FIG. 36, FIG. 42 illustrates an output (variable) x2 from the second layer in FIG. 36, and FIG. 43 illustrates an output (variable) x3 from the third layer in FIG. 36.

As can be seen from FIGS. 37 to 43, the range of values is different for each layer regarding both the coefficients and the variables. Specifically, regarding the coefficients, w1 has a value range distributed from approximately -5 to 4, w2 has a value range distributed from approximately -0.15 to 0.15, and w3 has a value range distributed from approximately -0.4 to 0.5 as illustrated in FIGS. 37 to 39. On the other hand, regarding the variables, x0 is distributed from approximately -1 to 1, x1 is distributed from approximately 0 to 90, x2 is distributed from approximately 0 to 120, and x3 is distributed from approximately 0 to 20 as illustrated in FIGS. 40 to 43.

It can be said that necessary and sufficient quantization (= bit amount reduction) setting should be performed for each layer (or for each feature map) to such an extent that the DNN/CNN inference task result is not affected, instead of unnecessarily reducing the number of expression bits for the above reason. In that case, the base technology is considered to have the problems described below.

- Management of numeric format and actual data is not considered.
- Expression regarding differentiation of quantization settings (accuracy setting, dynamic range setting) is not considered. Therefore, different quantization settings cannot be made for each layer (or each feature map).
- A numeric expression with positive/negative signs and a numeric expression without positive/negative signs are not distinguished.
- All numerical values are numerically expressed with positive/negative signs, and there is a waste in signs used when designating a specific layer (or feature map) (for example, x1, x2, and x3 in FIGS. 41 to 43) variable.
- Expression of a value 0 (zero) is not considered. Therefore, a numerical value 0 (zero) appearing in FIGS. 41 to 43 cannot be expressed.

Therefore, in order to solve the above problems, the present embodiment proposes numeric format information and a container capable of performing numeric expression by the expression of the power of 2. Furthermore, in the present embodiment, a byte stream format capable of holding and separating multiple quantization settings is also proposed.

7.2 Specific example of numeric format information

First, the numeric format information will be described in conjunction with a specific example.

7.2.1 s.e.m format

It is necessary to encode a numeric expression (Numeric Data) by the expression of the power of 2 that can flexibly select a word length into a positive/negative floating-point expression. In order to distinguish between a numeric expression with positive/negative signs and a numeric expression without positive/negative signs, it is necessary to be able to designate a setting for the presence or absence of positive/negative signs. In addition, in order to distinguish the quantization setting, it is necessary to be able to independently designate the setting regarding the accuracy and the setting regarding the dynamic range.

Therefore, in the present embodiment, a set of three elements described below is defined as an s.e.m format.

- Sign Information

The 's' in the s.e.m format indicates the number of bits assigned with respect to the presence or absence of positive/negative signs.

- Exponent Bit Width

The 'e' in the s.e.m format indicates the number of bits assigned with respect to the dynamic range.

- Mantissa Bit Width

The 'm' in the s.e.m format indicates the number of bits assigned with respect to the accuracy.

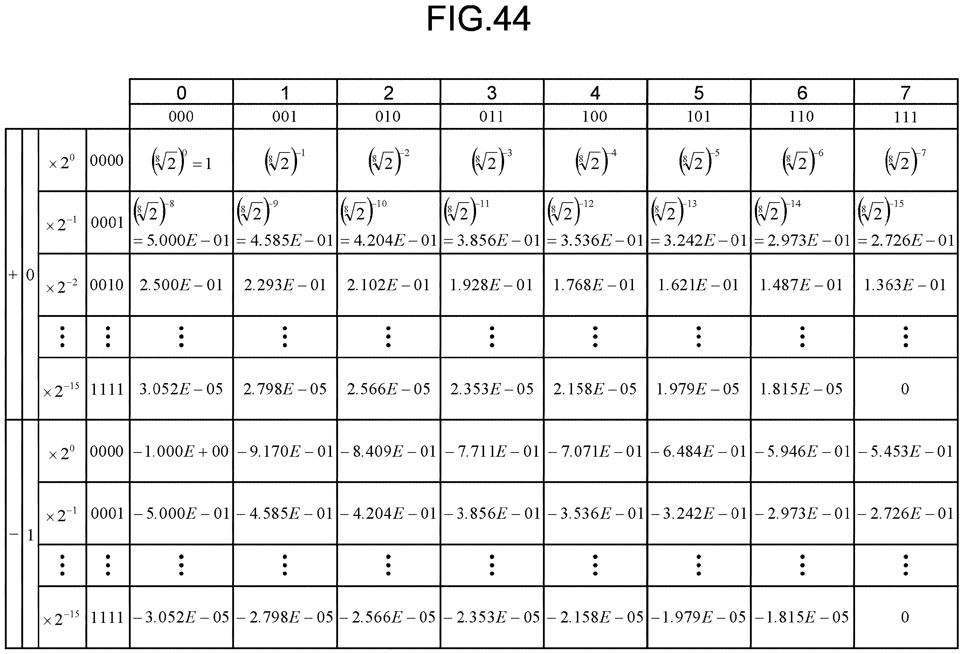

An example in which (s.e.m) = (1.4.3) (that is, sign 1 bit, dynamic range 4 bits, and accuracy 3 bits) are actually assigned in the power of 2 is indicated in the numerical table of FIG. 44. Note that, regarding m, a value of $2^m$ corresponds to the p value of the base technology.

Furthermore, it is necessary to consider an expression of a value 0 (zero) so that zero can be treated as a numeric expression. Therefore, in the present embodiment, when e and m are 1 in all bits, the value is defined as zero. By defining this place as the value 0, monotonic decreasing property (when the value of the index including a bit string in which {e, m} is combined increases within the same positive/negative sign, the expressed numerical value decreases) can be secured.

Note that the maximum value of this numeric expression (maximum value of absolute values) is 1.0, and all bits of e and m at that time are 0.

In the s.e.m format, the sum of s + e + m of the respective number of assigned bits indicates the data word length (Numeric Data Bit Width).

7.2.2 s.B.Q format

In the above-described s.e.m format, it is necessary to add the values of the s.e.m in order to confirm the word length of the numerical value and to extract the numerical value from the area, and thus, calculation is required every time the format is switched to the operation apparatus. Therefore, in the present embodiment, apart from the s.e.m format, an s.B.Q format obtained by developing the s.e.m format is defined so that the numeric format information itself is interleaved with the word length information and separation is performed without additional calculation. Note that the handling of the numerical value indicated by the s.B.Q format is completely equivalent to that of the s.e.m format. Elements of the s.B.Q format are indicated below.

- Sign Information

The 's' in the s.B.Q format indicates the number of bits assigned with respect to the presence or absence of positive/negative signs. This is synonymous with the s (Sign Information) of the s.e.m format.

- Numeric Data Bit Width

The 'B' in the s.B.Q format indicates the word length of Numeric Data. The e (Exponent Bit Width) of the s.e.m format can be derived by e = Numeric Data Bit Width-s-Q.

- Q

The 'Q' in the s.B.Q format indicates the number of bits assigned with respect to the accuracy. This is synonymous with the m (Mantissa Bit Width) of the s.e.m format.

7.3 Management method of actual data: relationship between container and numeric format information

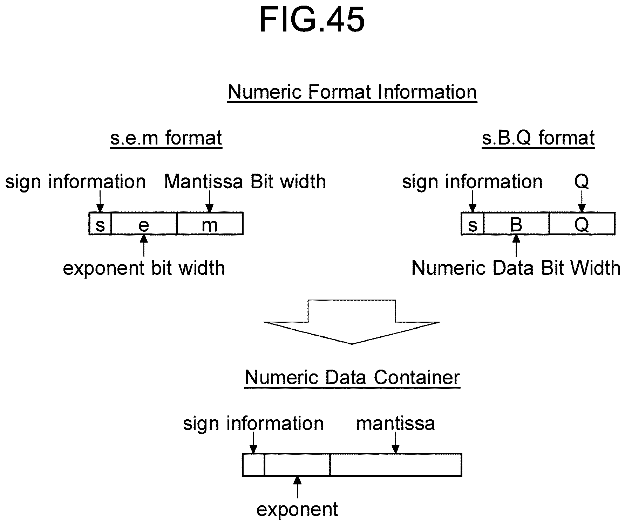

In the present embodiment, the s.e.m format and the s.B.Q format are referred to as numeric format information (Numeric Format Information). A container (Numeric Data Container) that stores actual data is expressed as illustrated in FIG. 45.

7.4 Byte stream

In order to use a plurality of numerical values indicated in the format of s.e.m or s.B.Q, the numeric format information corresponding to each numerical value needs to be clear. In the case of a single type, the word length can be cut out without changing even when the numerical value is consecutive. However, in the case of a plurality of types, the word length can be separated only after the change point is grasped and the word length is determined after each numeric format information is confirmed. When the numeric format information is imparted to all numerical values, the word length can be determined each time, but data compressed by quantization is enlarged.
Therefore, the present embodiment proposes the below-indicated three types of byte streams that can be expressed in a state in which they can be separated at a constant cost without imparting association between continuous numeric format information and numerical values to all. Note that the structures of the byte streams exemplified later are merely examples, and various modifications can be made.

- Byte stream by packet of basic structure and continuous structure
- Byte stream by packet of extended structure
- Payload variable length stream by packet header of custom extended structure

7.4.1 Byte stream by packets of basic structure (Basic Structure) and continuous structure (Continue Structure)

The head of the byte stream always starts with a basic structure (Basic Structure) aligned in units of a constant byte size. This data of a constant size is referred to as a packet. The header portion of the packet (hereinafter, referred to as a packet header) includes the elements described below.

- Continuation determination identifier (Continue)

The continuation determination identifier (Continue) is an identifier indicating whether or not the numeric format information designated immediately before is reused.

- Numeric format information (Numeric Format Information)

The numeric format information (Numeric Format Information) is information indicating which of the s.e.m format and the s.B.Q format the numeric format information is.

- Number of numeric data (Number)

The number of numeric data (Number) indicates the number of numeric data to be stored in the Payload.

- Payload area (Payload)

The payload area (Payload) indicates an area where the numeric data is stored. This payload area (Payload) is allowed not to exist within the byte size aligned depending on the other identifier.

- Numeric data (Numeric Data)

The numeric data (Numeric Data) is a body of a numerical value designated in the s.e.m format or the s.B.Q format. This numeric data (Numeric Data) is stored in the Payload, and the unused area is filled by Padding. Note that the area filled by Padding is not limited to the area immediately after the packet header. For example, numeric data (Numeric Data) may be continued immediately after the packet header, and the remaining area may be filled by Padding. The same applies to a byte stream exemplified later.

- Header skip identifier (Skip Header)

The header skip identifier (Skip Header) is an identifier for determining whether to handle next alignment data as the Payload without a header.

- Custom identifier (Custom)

The custom identifier (Custom) is an identifier indicating whether to handle the packet header as a custom format. When the custom identifier (Custom) is confirmed as a valid value, the packet interpretation method is switched according to the value.

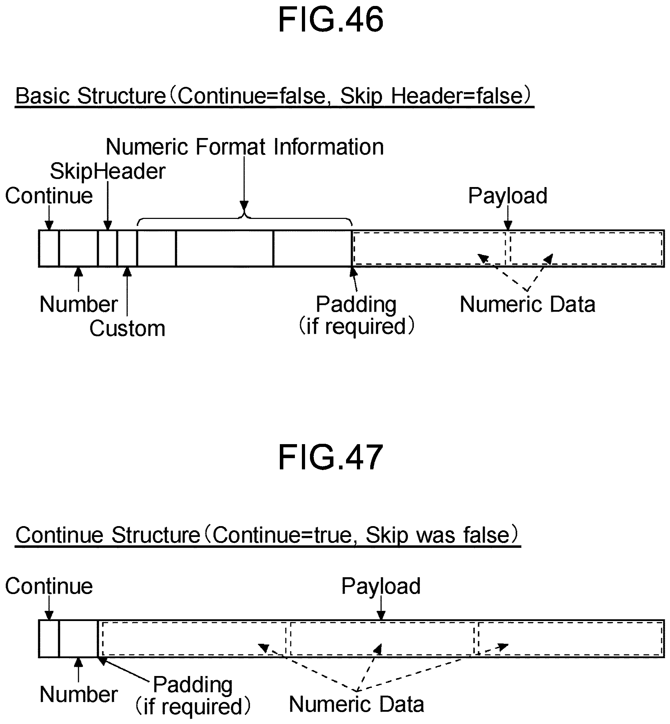

FIGS. 46 and 47 are diagrams illustrating two basic structure examples that can be realized by the basic structure (Basic Structure). Specifically, FIG. 46 illustrates a basic structure (Basic Structure) in which the continuation determination identifier is "not continuous", and FIG. 47 illustrates a continuous structure (Continue Structure) in which the continuation determination identifier is "continuous".

As illustrated in FIG. 46, in the basic structure (Basic Structure), in a case where the continuation determination identifier is "not continuous" and the header skip identifier indicates "not to skip", the number of numerical values designated by the numeric format information indicated by the number of numeric data is stored in the remaining payload area (Payload). Although the number of pieces of numeric data that can be stored in the packet itself is small, a packet header having a continuous structure is useful when the same format is held as subsequent consecutive numerical values.

As illustrated in FIG. 47, in the packet header of the continuous structure (Continue Structure) in which the continuation determination identifier is "continuous", it is possible to continuously store the numeric data in the Payload until the subsequent alignment only by inputting the number of numeric data.

When the format is switched, it is possible to switch to another format by designating the continuation determination identifier as "not continuous" and putting a packet of the basic structure. Thus, it is possible to separate the numeric data by performing processing in units of a constant byte size.

With the above structure, association can be performed without securing complicated byte stream parsing processing or a temporary holding area equal to or larger than the alignment size, and without imparting numeric format information to all numerical values.

7.4.2 Byte stream by packet of extended structure (Extended Structure)

In the byte stream by a packet of the extended structure (Extended Structure), when the continuation determination identifier is "not continuous" and the header skip identifier is designated to "to skip" in the packet header of the basic structure, the two elements described below are treated as the extension information, and the entire packet up to the byte size of the next alignment unit is treated as the payload area (Payload).

- Number of repetitions of Payload (Payload Recursive Number)

The number of repetitions of Payload (Payload Recursive Number) indicates how many times the Payload of the alignment unit is repeated when the next alignment unit is used as the Payload. Since the packet including the packet header is described again after the byte size of the designated number of alignment units, the format can be switched at this point.

- Reserved area (Reserved)

The Reserved area (Reserved) is a preliminary area.

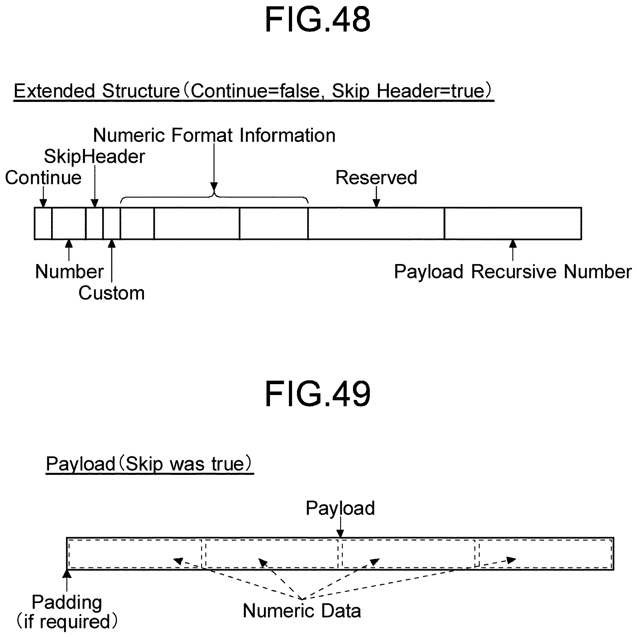

FIGS. 48 and 49 illustrate the structures of a packet of such an extended structure (Extended Structure) and a packet aligned only as the Payload. FIG. 48 illustrates the structure of a packet of the extended structure (Extended Structure), and FIG. 49 illustrates a structure of a packet aligned only as the Payload. As illustrated in FIG. 49, the packet with only the Payload and no header is useful in a case where the byte size of the entire Payload can be divided by the word length of the numeric data, a case where a large surplus area is left in the continuous structure, and the like.

By using the above structure, similarly to the basic structure (Basic Structure), it is possible to hold numeric data without securing complicated byte stream parsing processing or a temporary holding area equal to or larger than an alignment size, and without imparting numeric format information to all numerical values.

7.4.3 Payload variable length stream by packet header of custom extended structure (Custom Structure)

In the Payload variable length stream by a packet header of the custom extended structure (Custom Structure), similarly to the packet header of the extended structure, in a case where the continuation determination identifier is "not continuous", the header skip identifier is designated as "to skip", and the custom identifier is designated as "valid", a part of the packet header defined in the basic structure is allowed to be replaced, and only the three types of positions and meanings described below are treated equally to the packet header of the basic structure.

- Continuation determination identifier (Continue)

- Header skip identifier (Skip Header)
- Custom identifier (Custom)

In addition, in the custom extended structure (Custom Structure), the information described below is added in addition to the above.

- Version number (Version)

The version number (Version) is indicated by a numerical value and indicates a type of a custom extended structure (Custom Structure). The numerical value 0 holds information of the four elements described below as Payload size extension.

- Payload size (Payload Size)

The payload size (Payload Size) indicates the size of the Payload subsequent to the packet header. In the custom extended structure (Custom Structure), it is allowed that the size is not the same as the byte size of the packet header indicated in the previous structure.

- Numeric format information (Numeric Format Information)

The numeric format information (Numeric Format Information) may be equivalent to the numeric format information (Numeric Format Information) in the basic structure (Basic Structure).

- Number of numeric data (Number)

The number of numeric data (Number) may be equivalent to the number of numeric data (Number) in the basic structure (Basic Structure).

- Number of repetitions of Payload (Payload Recursive Number)

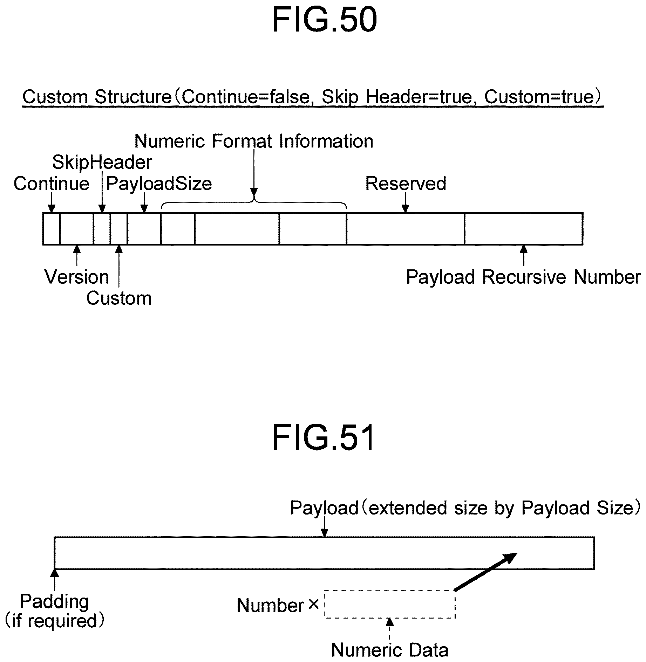

The number of repetitions of the Payload (Payload Recursive Number) may be the same as the number of repetitions of the payload (Payload Recursive Number) in the extended structure (Extended Structure).
Examples of the header and the Payload of this custom extended structure (Custom Structure) are illustrated in FIGS. 50 and 51. FIG. 50 illustrates an example of the header of the custom extended structure (Custom Structure), and FIG. 51 illustrates an example of the Payload of the custom extended structure (Custom Structure).
Unlike the basic structure (Basic Structure) and the extended structure (Extended Structure) described above, in the custom extended structure (Custom Structure), parsing processing for the byte stream becomes complicated, and it is necessary to increase a temporary holding area necessary before separating the Payload to a size indicated by the Payload size, but it is possible to hold the Payload with numerical values filled in the Payload more than in the extended structure.
This custom extended structure (Custom Structure) leaves room for storing information other than the numerical values in the Payload portion by changing the Version number and using it as a development example, and can also embed additional information such as a numerical operation method in the byte stream.

7.5 Implementation example of byte stream

Next, specific implementation examples of the three types of byte streams exemplified above will be described in detail below with reference to the drawings. Note that, in the description described below, an example of implementation in the s.B.Q format will be described.

7.5.1 Implementation example of byte stream of basic structure (Basic Structure) and continuous structure (Continue Structure)

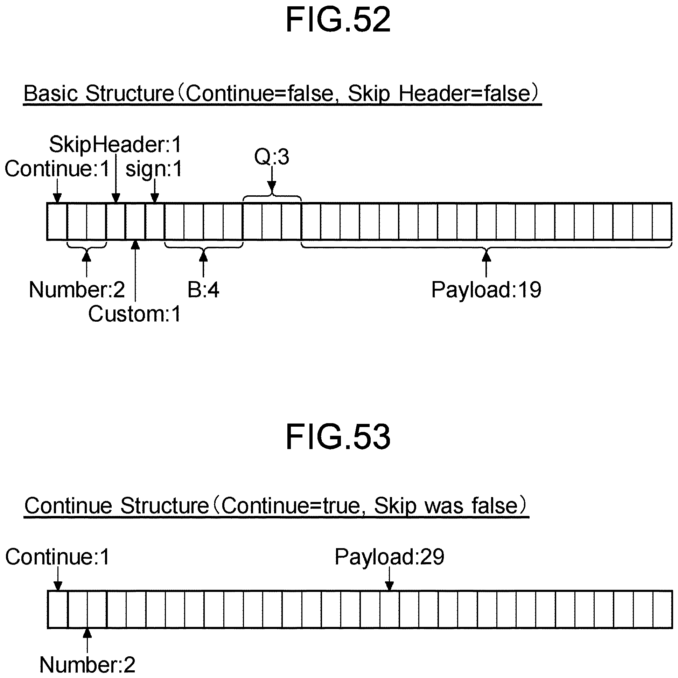

FIGS. 52 and 53 are diagrams illustrating byte stream implementation examples of the basic structure (Basic Structure). FIG. 52 illustrates a packet of the basic structure (Basic Structure), and FIG. 53 illustrates a packet of the continuous structure (Continue Structure).

As illustrated in FIG. 52, the packet of the basic structure (Basic Structure) includes, for example, in order from the left-end MSB (Most Significant Bit), 1-bit continuation determination identifier (in the drawing, expressed as 'Continue'), 2-bit number of numeric data (in the drawing, expressed as 'Number'), 1-bit header skip identifier (in the drawing, expressed as 'SkipHeader'), 1-bit custom identifier (in the drawing, expressed as 'Custom'), 1-bit s (Sign Information) (in the drawing, expressed as 'sign'), 4-bit B (Numeric Data Bit Width) (in the drawing, expressed as 'B'), 3-bit Q (in the drawing, expressed as 'Q'), and 19-bit payload area (Payload) (in the drawing, expressed as 'Payload').

For example, the 1-bit continuation determination identifier (Continue) indicates that a new format header is included in the packet when the value is '1', and indicates that the format header of the previous packet is used when the value is '0'.

For example, when the value of the 2-bit number of numeric data (Number) is '01', it indicates that one piece of numeric data is stored in the Payload area (Payload) of the packet, when the value is '10', it indicates that two pieces of numeric data are stored, and when the value is '11', it indicates that three pieces of numeric data are stored. Note that in the case of '00', it indicates that no numeric data is stored in the packet.

For example, in a case where the value of the 1-bit header skip identifier (Skip Header) is '1', it indicates that the next alignment data is treated as the Payload area (Payload) without a header, and when the value is '0', it indicates that the next alignment data is treated as a new packet that is not continuous.

For example, when the value of the 1-bit custom identifier (Custom) is '0', it indicates that the packet is treated as a packet in a normal format, and when the value is '1', it indicates that the packet is treated as a packet in a custom format. That is, when the custom identifier (Custom) is '1', the method for interpreting the packet is switched.

On the other hand, as illustrated in FIG. 53, the packet of the continuous structure (Continue Structure) includes, in order from the left-end MSB, 1-bit continuation determination identifier (in the drawing, expressed as 'Continue'), 2-bit number of numeric data (in the drawing, expressed as 'Number'), and 29-bit payload area (Payload) (in the drawing, expressed as 'Payload').

The continuation determination identifier (Continue), the number of numeric data (Number), and the payload area (Payload) may be similar to those described with reference to FIG. 53.

7.5.2 Implementation example of byte stream of extended structure (Extended Structure)

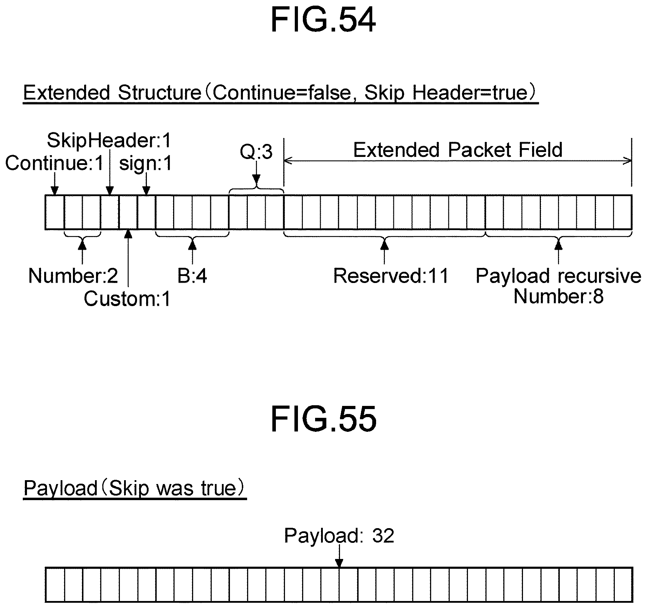

FIGS. 54 and 55 are diagrams illustrating byte stream implementation examples of the extended structure (Extended Structure). FIG. 54 illustrates a packet of the extended structure (Extended Structure), and FIG. 55 illustrates a packet of only the continuous payload area (Payload).

As illustrated in FIG. 54, in the packet of the extended structure (Extended Structure), for example, in a structure similar to that of the packet of the basic structure (Basic Structure) illustrated in FIG. 52, the 19-bit payload area (Payload) is replaced with 11-bit Reserved area (in the drawing, expressed as 'Reserved') and 8-bit number of repetitions of Payload (in the drawing, expressed as 'Payload Recursive Number'). In a case where the Reserved area (Reserved) is not used, for example, it may be filled by zero padding.

On the other hand, as illustrated in FIG. 55, the packet of only the payload area (Payload) includes, for example, 32-bit payload area (in the drawing, expressed as 'Payload').

7.5.3 Implementation example of byte stream of custom structure (Custom Structure)

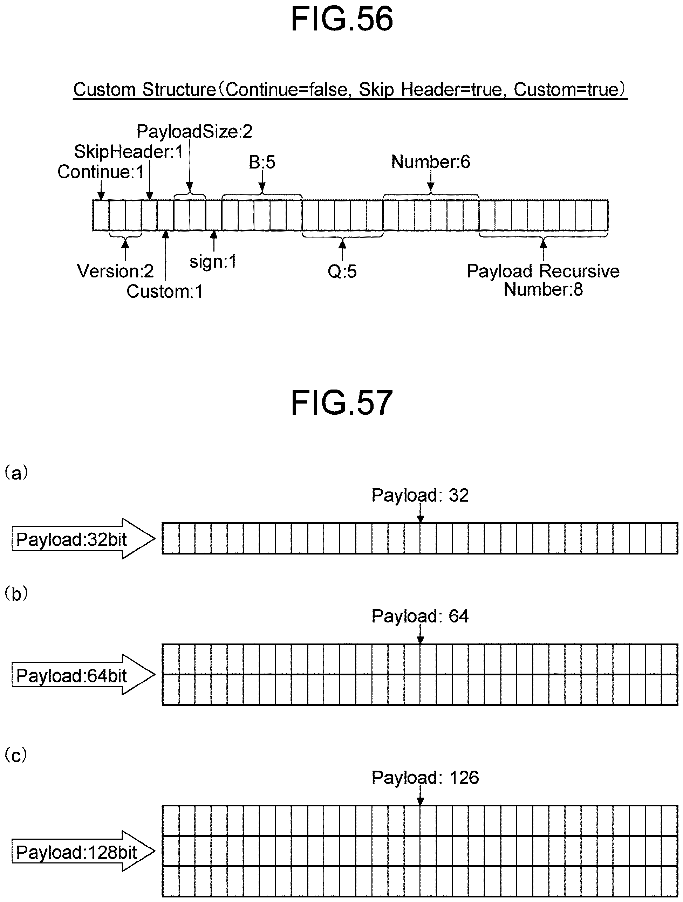

FIGS. 56 and 57 are diagrams illustrating byte stream implementation examples of the custom structure (Custom Structure). FIG. 56 illustrates a packet of the custom structure (Custom Structure), and (a) to (c) of FIG. 57 illustrate a packet of only the continuous payload area (Payload).

As illustrated in FIG. 56, the packet of the custom structure (Custom Structure) has, for example, in a structure similar to the packet of the basic structure (Basic Structure) illustrated in FIG. 52, a structure in which the number of numeric data (in the drawing, expressed as 'Number') is moved next to the s.B.Q format portion, instead, a version number (in the drawing, expressed as 'Version') is arranged between the continuation determination identifier (Continue) and the header skip identifier (SkipHeader), and a payload size (in the drawing, expressed as 'PayloadSize') is added between the custom identifier (Custom) and the s.B.Q format portion. In addition, the 19-bit payload area (Payload) is replaced with the above-described 6-bit number of numeric data ('Number') and 8-bit number of repetitions of Payload (in the drawing, expressed as 'Payload Recursive Number').

On the other hand, as illustrated in FIG. 57, for the packet of the custom structure (Custom Structure), the packet of only the payload area (Payload) continues for the size designated by the payload size (Payload Size). Thus, the payload variable length stream by the packet header of the custom extended structure is configured.

Other configurations, operations, and effects may be similar to those of the above-described base technology or embodiment, and thus detailed description thereof will be omitted here.

7.6 Configuration example of processing system of byte stream

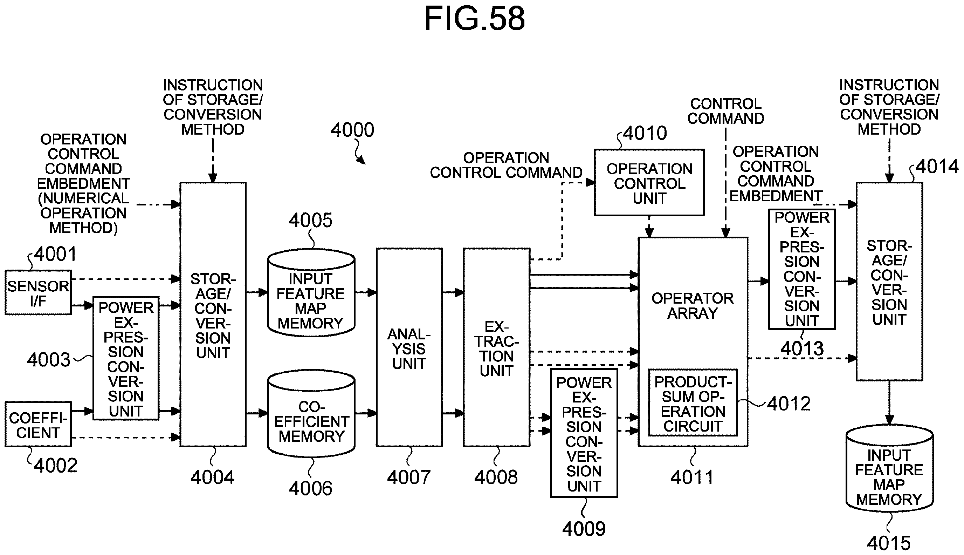

FIG. 58 is a block diagram illustrating a schematic configuration example of a system that processes a byte stream according to the present embodiment. Note that, in the drawings, the solid-line arrows indicate a data flow and a control command flow in the basic structure (Basic Structure), the continuous structure (Continue Structure), the extended structure (Extended Structure), and the custom structure (Custom Structure), and the dashed-line arrows indicate a data flow and a control command flow of an extended example that can be extended and handled in the custom structure (Custom Structure). In addition, the one-dot dashed arrows indicate an instruction or a command from the outside of the system, and the two-dot dashed arrows indicate an instruction or a command from the outside of the system of an extended example that can be extended and handled in the custom structure (Custom Structure).

As illustrated in FIG. 58, a processing system 4000 includes a power expression conversion unit 4003, a storage/conversion unit 4004, an input feature map memory 4005, a coefficient memory 4006, an analysis unit 4007, an extraction unit 4008, a power expression conversion unit 4009, an operation control unit 4010, an operator array 4011, a power expression conversion unit 4013, a storage/conversion unit 4014, and an output feature map memory 4015.

(Power expression conversion unit 4003)

The power expression conversion unit 4003 is, for example, a configuration corresponding to the power expression conversion units 2001 and 2102 in the above-described embodiment and converts a value input via a sensor I/F 4001 into the expression of the power of 2 using a coefficient 4002 input from the multiplication unit 2002/2104 or the like. Note that, as the sensor I/F 4001, for example, in addition to an image sensor, a time of flight (ToF) sensor, and the like, various sensors that acquire measurement values that can be converted into numeric data, such as a microphone, various sensors that measure weather information such as atmospheric pressure, temperature, humidity, and wind speed, and the like, can be applied.

(Storage/conversion unit 4004)

The storage/conversion unit 4004 is configured to store a value in a container or convert the value into a byte stream. The storage/conversion unit 4004 constructs a byte stream storing a numeric expression or an operation control command input from the sensor I/F 4001 or the power expression conversion unit 4003 according to the operation control command and an instruction of a storage/conversion method input from a high-order apparatus. Note that the constructed byte stream includes byte streams of the basic structure (Basic Structure), the continuous structure (Continue Structure), the extended structure (Extended Structure), and the custom structure (Custom Structure) described above. In addition, the operation control command may include, for example, designation of a value table to be used by a product-sum operation circuit 4012 of the operator array 4011 to be described later.

(Input feature map memory 4005) The input feature map memory 4005 is a configuration corresponding to the variable buffer 2003 in the above-described embodiment and stores the byte stream constructed by the storage/conversion unit 4004. Therefore, the variable of the expression of the power of 2 is stored in the input feature map memory 4005.

(Coefficient memory 4006)

The coefficient memory 4006 is a configuration corresponding to the coefficient memory 2004 in the above-described embodiment and stores the coefficient of the expression of the power of 2 input from the storage/conversion unit 4004.

(Analysis unit 4007)

The analysis unit 4007 parses (analyzes) the byte stream read from the input feature map memory 4005 and separates the payload area (Payload) from the other information.

(Extraction unit 4008)

The extraction unit 4008 extracts a combination of the actual data in the container. Specifically, numeric format information such as the s.e.m format and the s.B.Q format and numeric expression (Numeric Data) in the container are extracted from the container.

In addition, in a case where a predetermined version number (Version) is designated in the byte stream of the custom structure (Custom Structure), the extraction unit 4008 extracts a numerical value other than the power expression or a control command from the byte stream. For example, the extraction unit 4008 extracts a numerical operation method (operation control command), a type of a numerical value (a type of a floating point or the like), actual data of a numerical value, and the like.

(Power expression conversion unit 4009)

The power expression conversion unit 4009 is a configuration corresponding to the power expression conversion units 2001 and 2102 in the above-described embodiment and converts numerical values of other numeric expressions input from the extraction unit 4008 into numerical values of the power expression.

(Operation control unit 4010)

The operation control unit 4010 outputs a control command to the operator array 4011 on the basis of the operation control command embedded in the byte stream of the custom structure (Custom Structure) of a predetermined version number (Version).

(Operator array 4011)

The operator array 4011 is a configuration including, for example, the product-sum operation circuit 4012 in the above-described embodiment and executes predetermined operation processing on the input numerical value of the power expression, a numerical value of another numeric expression, or the like.

(Power expression conversion unit 4013)

The power expression conversion unit 4013 is a configuration corresponding to the power expression conversion units 2001 and 2102 in the above-described embodiment and converts the numerical value of the power expression input from the operator array 4011.

(Storage/conversion unit 4014)

Similarly to the storage/conversion unit 4004, the storage/conversion unit 4014 is a configuration that executes storage of a value in a container or conversion of a byte stream, and constructs a byte stream storing a numeric expression or an operation control command input from the power expression conversion unit 4013 or the operator array 4011 according to an operation control command input from the high-order apparatus or an instruction of a storage/conversion method. Note that the constructed byte stream includes byte streams of the basic structure (Basic Structure), the continuous structure (Continue Structure), the extended structure (Extended Structure), and the custom structure (Custom Structure) described above.

(Output feature map memory 4015)

The output feature map memory 4015 is a configuration corresponding to the operation result buffer 2005 in the above-described embodiment and stores the byte stream constructed by the storage/conversion unit 4014. Note that the output feature map stored in the output feature map memory 4015 can be re-input to the analysis unit 4007 as an input feature map.

Note that some or all of the units illustrated in FIG. 58 can be realized by hardware or software. In addition, in the configuration illustrated in FIG. 58, the output of each unit may be appropriately buffered.

7.7 Operations and effects

As described above, according to the present embodiment, it is possible to adopt different numeric expression settings for each layer and/or each map in application to CNN/DNN by the container and the numeric format information.

For example, it is possible to adopt a numeric expression in which positive/negative signs, accuracy, a dynamic range, and the like can be independently set for the expression of the power of 2 directed to DNN/CNN.

In addition, it is possible to adopt a combination of a container and numeric format information in units of numeric expression settings different for each certain unit (layer, map, or the like).

Furthermore, by incorporating the word length information into the format of the numeric expression, it is possible to omit calculation of word length acquisition, and thus it is possible to reduce the operation cost.

Furthermore, the use of the byte stream format makes it possible to adopt different numeric expression settings in finer units than for each layer and/or map of the DNN. For example, it is possible to realize a byte stream format that efficiently switches numeric expression settings in finer units such as line units and pixel units.

Other configurations, operations, and effects may be similar to those of the above-described base technology or embodiment, and thus detailed description thereof will be omitted here.


8. Application example to communication technology

Next, application of the quantization method according to the present disclosure to other fields will be described. In the above description, the case where the quantization method according to the present disclosure is applied to the inner product operation related to forward propagation of the neural network has been described. On the other hand, the quantization method according to the present disclosure is not limited to the above example, and can be applied to various technologies for performing an inner product operation.

For example, the quantization method according to the present disclosure may be applied to a convolution operation in a band-pass filter used in the field of communications technologies. A simulation result when the quantization method according to the present disclosure is applied to a band-pass filter will be described below.

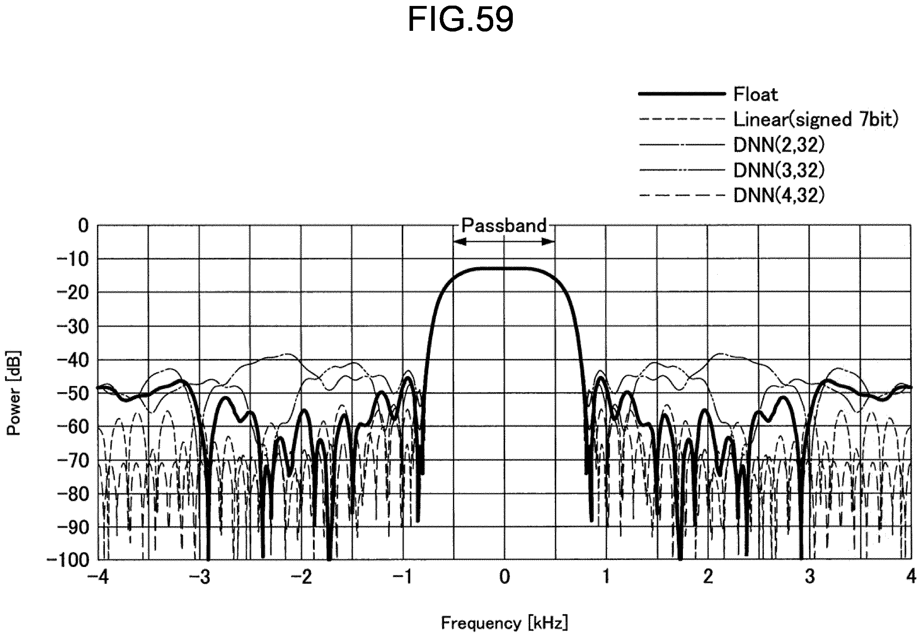

FIG. 59 is a diagram illustrating a simulation result regarding frequency characteristics (gain characteristics) when the quantization method according to the present disclosure is applied to a band-pass filter. Here, the coefficient (63 tap, rolloff 0.5) in a root-raised cosine (RRC) filter was quantized.

Note that, for the quantization, 32 values (0 to 31) were used with p = 2, 3, and 4. In the drawing, DNN (p, 32) is illustrated. In addition, as a comparison, simulation results in the case of using a floating point (Float) and an integer (Linear) are both illustrated.

Here, referring to FIG. 59, it can be seen that even when the quantization method according to the present disclosure is applied, the flatness characteristics in the band pass are not deteriorated. On the other hand, focusing on the side band, even in the case of DNN (2, 32), attenuation of about -25 dB is possible, and it can be seen that the effect of attenuation increases as p increases. Note that the influence of quantization is expected to be further reduced by, for example, a combination with a lowpass filter (LPF).

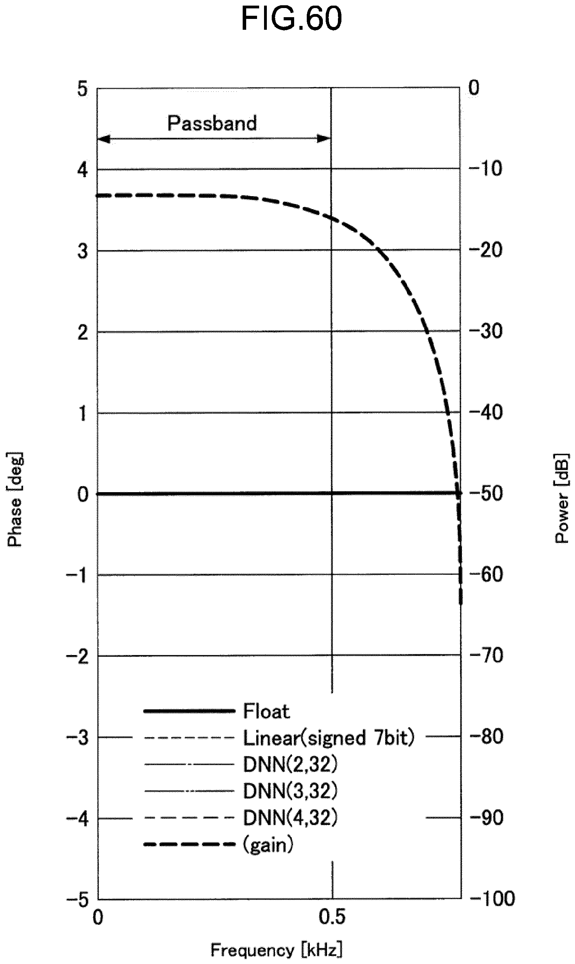

In addition, FIG. 60 is a diagram illustrating a simulation result regarding phase characteristics when the quantization method according to the present disclosure is applied to a band-pass filter. Referring to FIG. 60, it can be seen that even when the quantization method according to the present disclosure is applied, rotation of the phase in the passband, that is, deterioration of the phase characteristics is not confirmed. As described above, since the quantization method according to the present disclosure does not significantly deteriorate the frequency characteristics of the band-pass filter, it can be said that the quantization method according to the present disclosure is sufficiently applicable also in the field of communication technologies.

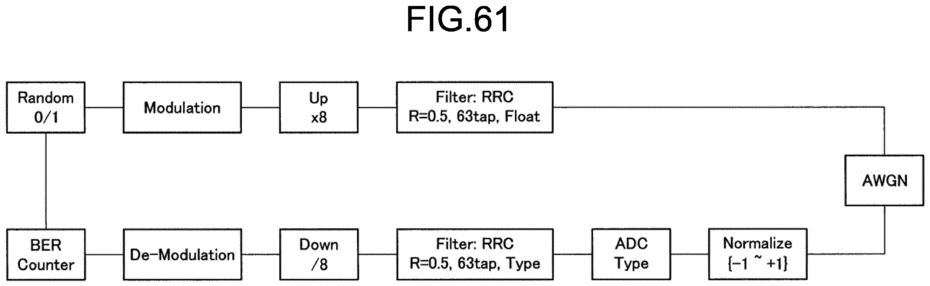

In addition, in order to further investigate the influence of the quantization method according to the present disclosure, evaluation was performed by a bit error rate (BER). FIG. 61 is a block diagram used for BER evaluation according to the present disclosure.

As illustrated in FIG. 61, in this evaluation, BER was measured by applying floating point, integer, and DNN (p, 32) in an analog to digital converter (ADC) and an RRC filter before demodulation. In addition, BPSK, QPSK, and 16QAM were used for modulation and demodulation methods.

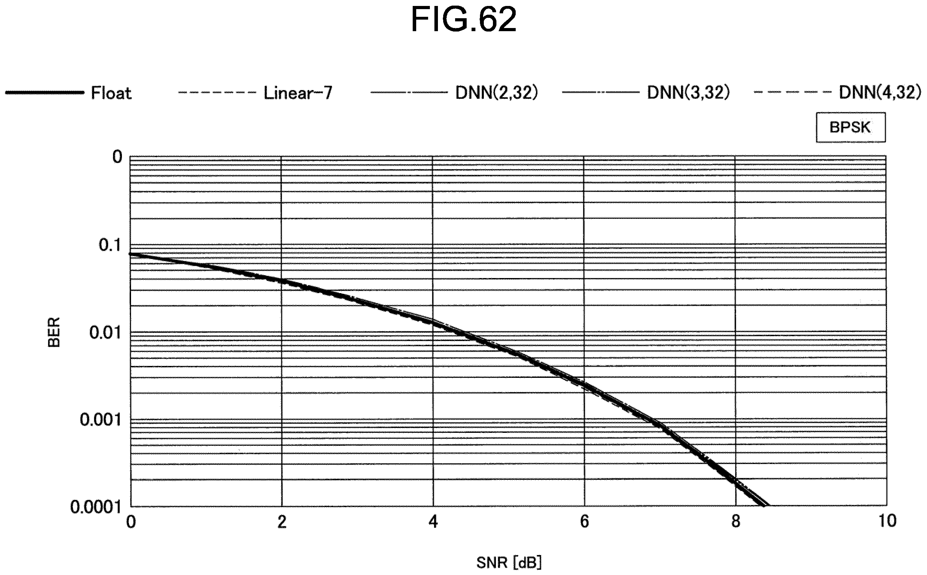

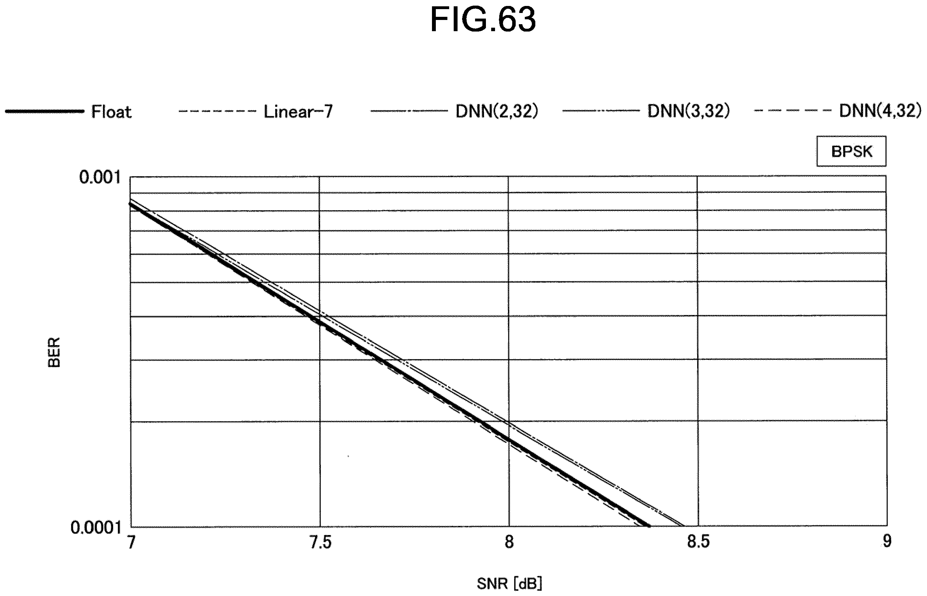

FIG. 62 is a diagram illustrating a BER evaluation result when BPSK is used for a modulation method. In addition, FIG. 63 is an enlarged diagram of data of SNR 7 to 9 dB in FIG. 62. Referring to FIGS. 62 and 63, it can be seen that when BPSK is used as the modulation method, deterioration of BER is not observed at all in the case of p = 4, and even in the case of p = 2 or 3, BER is not greatly affected.

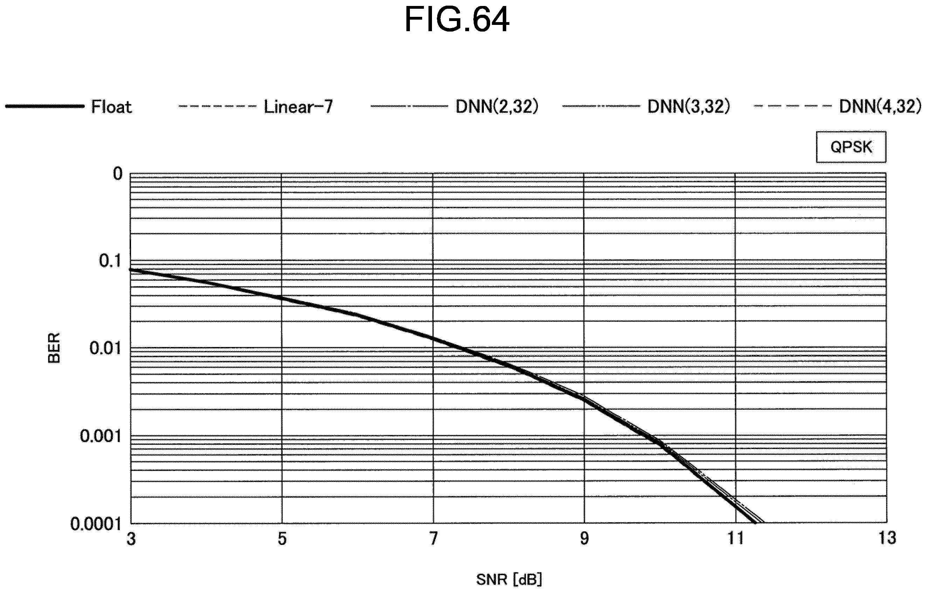

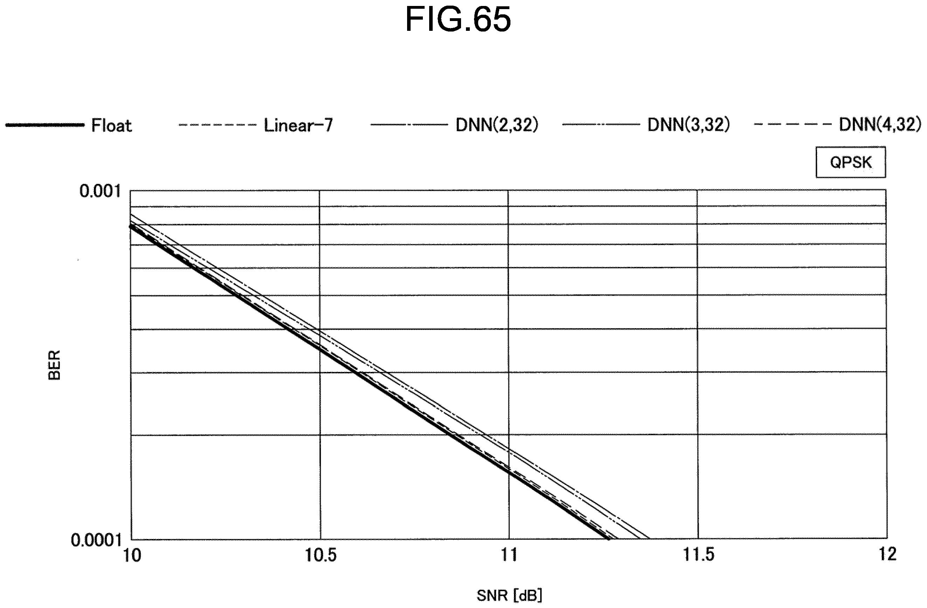

FIG. 64 is a diagram illustrating a BER evaluation result when QPSK is used for a modulation method. In addition, FIG. 65 is an enlarged diagram of data of SNR 10 to 12 dB in FIG. 64. Referring to FIGS. 64 and 65, it can be seen that also in the case of using QPSK as the modulation method, similarly to the case of using BPSK, quantization with p = 2 or 3 does not greatly affect the BER.

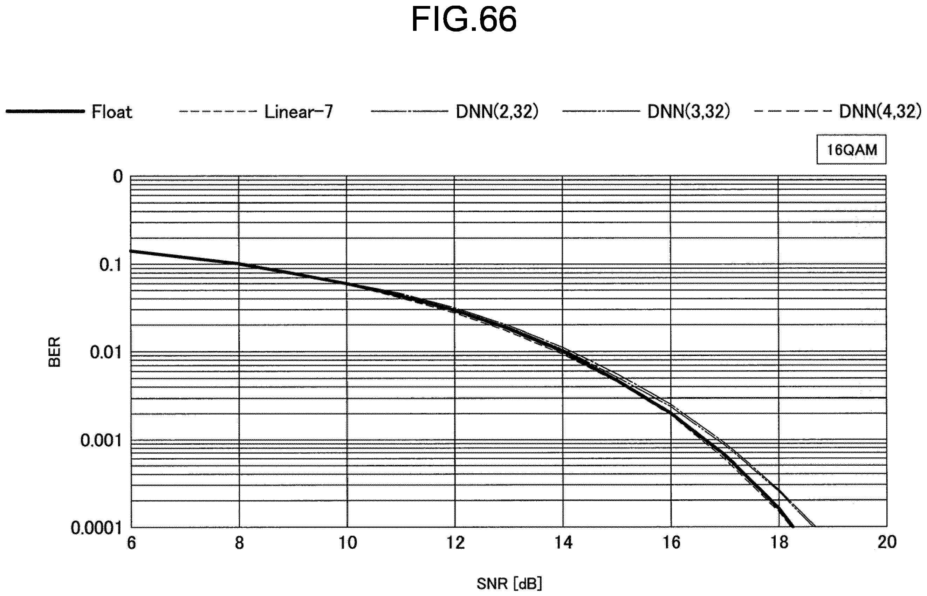

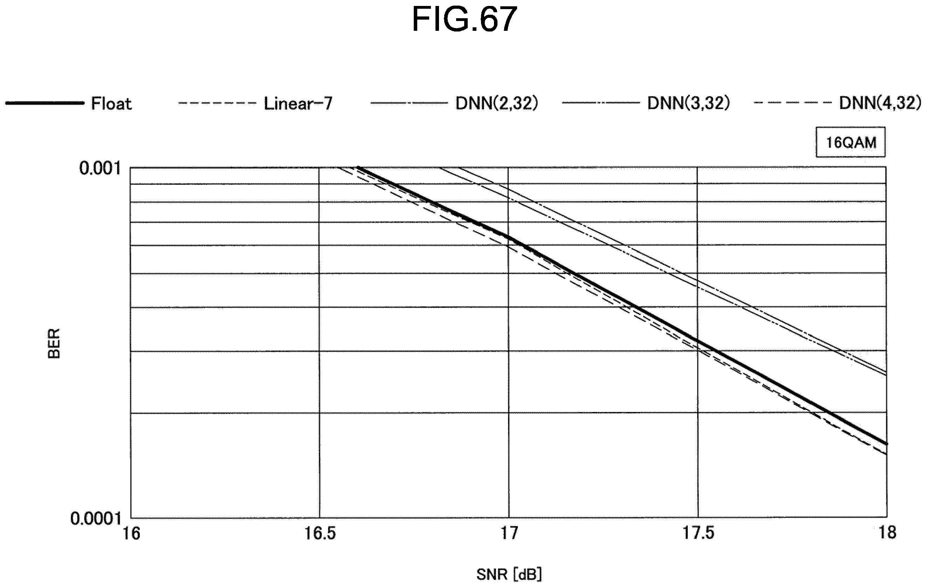

FIG. 66 is a diagram illustrating a BER evaluation result when 16QAM is used for a modulation method. In addition, FIG. 67 is an enlarged diagram of data of SNR 16 to 18 dB in FIG. 66. Referring to FIGS. 66 and 67, in a case where 16QAM is used as the modulation method, it can be seen that the BER increases in the quantization with p = 2 or 3, but the deterioration of the BER is not confirmed in the quantization with p = 4.

As described above, when BPSK or QPSK is used as the modulation method, it can be said that the quantization method according to the present disclosure is effective regardless of the value of p. In addition, when 16QAM is used as the modulation method, it is considered that the BER is not affected when $p \geq 4$.

As described above, the quantization method according to the present disclosure is also effective in the field of communications technologies, and can realize both maintenance of performance and a reduction in processing load.

9. Hardware configuration example

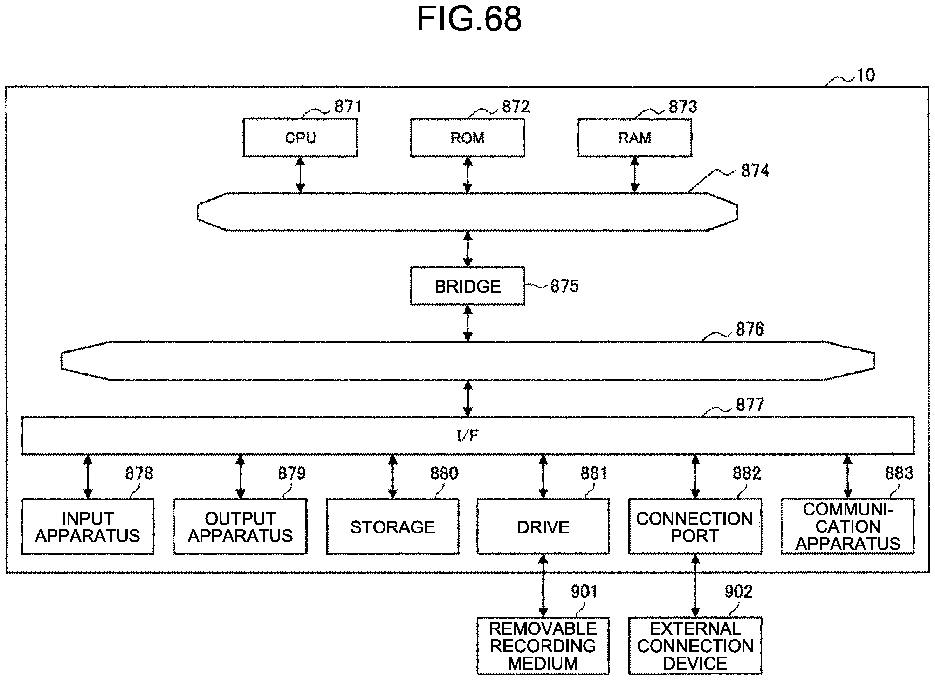

Next, a hardware configuration example of the information processing apparatus 10 according to an embodiment of the present disclosure will be described. FIG. 68 is a block diagram illustrating a hardware configuration example of the information processing apparatus 10 according to an embodiment of the present disclosure. Referring to FIG. 68, the information processing apparatus 10 includes, for example, a CPU 871, a ROM 872, a RAM 873, a host bus 874, a bridge 875, an external bus 876, an interface 877, an input apparatus 878, an output apparatus 879, a storage 880, a drive 881, a connection port 882, and a communication apparatus 883. Note that the hardware configuration illustrated here is an example, and some of the components may be omitted. In addition, components other than the components illustrated here may be further included.

(CPU871)

The CPU 871 functions as, for example, an operation processing apparatus or a control apparatus, and controls the overall operation of each component or a part thereof on the basis of various programs recorded in the ROM 872, the RAM 873, the storage 880, or a removable recording medium 901.

(ROM 872, RAM 873)

The ROM 872 is a means that stores a program read by the CPU 871, data used for operation, and the like. The RAM 873 temporarily or permanently stores, for example, a program read by the CPU 871, various parameters that appropriately change when the program is executed, and the like.

(Host bus 874, bridge 875, external bus 876, interface 877)

The CPU 871, the ROM 872, and the RAM 873 are mutually connected via, for example, the host bus 874 capable of high-speed data transmission. On the other hand, the host bus 874 is connected to the external bus 876 having a relatively low data transmission speed via the bridge 875, for example. In addition, the external bus 876 is connected to various components via the interface 877.

(Input apparatus 878)

As the input apparatus 878, for example, a mouse, a keyboard, a touch panel, a button, a switch, a lever, and the like are used. Furthermore, as the input apparatus 878, a remote controller capable of transmitting a control signal using infrared rays or other radio waves (hereinafter, remote controller) may be used. In addition, the input apparatus 878 includes a voice input apparatus such as a microphone.

(Output apparatus 879)

The output apparatus 879 is an apparatus capable of visually or audibly notifying the user of acquired information, such as a display apparatus such as a cathode ray tube (CRT), an LCD, or an organic EL, an audio output apparatus such as a speaker or a headphone, a printer, a mobile phone, or a facsimile. In addition, the output apparatus 879 according to the present disclosure includes various vibration devices capable of outputting tactile stimulation.

(Storage 880)

The storage 880 is an apparatus for storing various data. As the storage 880, for example, a magnetic storage device such as a hard disk drive (HDD), a semiconductor storage device, an optical storage device, a magneto-optical storage device, or the like is used.

(Drive 881)

The drive 881 is, for example, an apparatus that reads information recorded on the removable recording medium 901 such as a magnetic disk, an optical disk, a magneto-optical disk, or a semiconductor memory, or writes information to the removable recording medium 901.

(Removable recording medium 901)

The removable recording medium 901 is, for example, a DVD medium, a Blu-ray (registered trademark) medium, an HD DVD medium, various semiconductor storage media, or the like. Of course, the removable recording medium 901 may be, for example, an IC card on which a non-contact IC chip is mounted, an electronic device, or the like.

(Connection port 882)

The connection port 882 is a port for connecting an external connection device 902 such as a universal serial bus (USB) port, an IEEE 1394 port, a small computer system interface (SCSI), an RS-232C port, or an optical audio terminal.

(External connection device 902)

The external connection device 902 is, for example, a printer, a portable music player, a digital camera, a digital video camera, an IC recorder, or the like.

(Communication apparatus 883)

The communication apparatus 883 is a communication device for connecting to a network, and is, for example, a communication card for wired or wireless LAN, Bluetooth (registered trademark), or wireless USB (WUSB), a router for optical communication, a router for asymmetric digital subscriber line (ADSL), a modem for various communications, or the like.

Although the embodiments of the present disclosure have been described above, the technical scope of the present disclosure is not limited to the above-described embodiments as it is, and various modifications can be made without departing from the gist of the present disclosure. In addition, components of different embodiments and variation examples may be appropriately combined.

In addition, the effects of the embodiments described in the present specification are merely examples and are not limitative, and there may be other effects.

Note that the present technology can also have the following configurations.

(1) An information processing apparatus comprising:

a product-sum operation circuit configured to execute a product-sum operation on the basis of a plurality of input values quantized by power expression and a plurality of weigh coefficients quantized by power expression corresponding to the respective input values,
wherein an exponent of each of the input values is expressed by a fraction having a predetermined divisor in a denominator,
an exponent of each of the weigh coefficients is expressed by a fraction having the divisor in a denominator, the product-sum operation circuit executes the product-sum operation using a plurality of addition multipliers based on a remainder when a value obtained by adding a numerator related to the exponent of each of the input values and a numerator related to the exponent of each of the weigh coefficients is divided as a dividend, and each of the addition multipliers is a floating-point number with an exponent part having a radix of 2.

(2) The information processing apparatus according to (1), further comprising: a storage unit configured to hold the plurality of addition multipliers.
(3) The information processing apparatus according to (2), further comprising: an operator configured to perform an operation of a power of 2 on the addition multipliers stored in the storage unit on the basis of a value obtained by converting a quotient by the division into an integer.
(4) The information processing apparatus according to (3) or (4), wherein a word length of an exponent part of a floating-point number in the operator is determined on the basis of a word length of the numerator related to the exponent of each of the input values, a word length of the numerator related to the exponent of each of the weigh coefficients, and the predetermined divisor.

(5) The information processing apparatus according to (3) or (4), wherein the operator executes addition or subtraction with respect to the exponent part of the floating-point number having a radix of 2.

(6) The information processing apparatus according to (2), wherein
the storage unit includes:

a storage circuit group including a plurality of rewritable storage circuits;
a memory that holds a plurality of first addition multipliers and a plurality of second addition multipliers different from the plurality of first addition multipliers; and
a selector that selectively writes one of the plurality of first addition multipliers and the plurality of second addition multipliers held in the memory to the storage circuit group.

(7) The information processing apparatus according to (2), wherein
the storage unit includes:

a first storage circuit group that holds a plurality of first addition multipliers;
a second storage circuit group that holds a plurality of second addition multipliers different from the plurality of first addition multipliers; and
a selector that switches a storage circuit group connected to the product-sum operation circuit to one of the first storage circuit group and the second storage circuit group.

(8) The information processing apparatus according to (6) or (7), wherein

the plurality of first addition multipliers are values expressed by a power of 2, and
the plurality of second addition multipliers are linearly expressed values.

(9) The information processing apparatus according to (2), wherein the storage unit holds the plurality of addition multipliers and a value obtained by 0.5 rounding of each of the plurality of addition multipliers along an expression function of expression of a power of 2.

(10) An information processing system comprising:

an analysis unit configured to analyze a byte stream;
an operator array including a product-sum operation circuit that executes a product-sum operation on the basis of a plurality of input values quantized by power expression and a plurality of weigh coefficients quantized by power expression corresponding to the respective input values; and
an operation control unit configured to control the operator array on the basis of an analysis result by the analysis unit,
wherein the operator array further includes a storage unit that holds a plurality of addition multipliers,
the storage unit includes:

a first storage circuit group that holds a plurality of first addition multipliers;
a second storage circuit group that holds a plurality of second addition multipliers different from the plurality of first addition multipliers; and
a selector that switches a storage circuit group connected to the product-sum operation circuit to one of the first storage circuit group and the second storage circuit group,
the byte stream includes designation of a storage circuit group used in the product-sum operation,
the operation control unit controls the selector on the basis of the designation,
an exponent of each of the input values is expressed by a fraction having a predetermined divisor in a denominator,
an exponent of each of the weigh coefficients is expressed by a fraction having the divisor in a denominator,
the product-sum operation circuit executes the product-sum operation using a plurality of addition multipliers based on a remainder when a value obtained by adding a numerator related to the exponent of each of the input values and a numerator related to the exponent of each of the weigh coefficients is divided as a dividend, and
each of the addition multipliers is a floating-point number with an exponent part having a radix of 2.

(11) An information processing method executed by an information processing system including: an analysis unit configured to analyze a byte stream; an operator array including a product-sum operation circuit that executes a product-sum operation on the basis of a plurality of input values quantized by power expression and a plurality of weigh coefficients quantized by power expression corresponding to the respective input values; and an operation control unit configured to control the operator array on the basis of an analysis result by the analysis unit, in which the operator array further includes a storage unit that holds a plurality of addition multipliers, the storage unit includes: a first storage circuit group that holds a plurality of first addition multipliers; a second storage circuit group that holds a plurality of second addition multipliers different from the plurality of first addition multipliers; and a selector that switches a storage circuit group connected to the product-sum operation circuit to one of the first storage circuit group and the second storage circuit group, the product-sum operation circuit executing the product-sum operation using a plurality of addition multipliers based on a remainder when a value obtained by adding a numerator related to an exponent of each of the input values and a numerator related to the exponent of each of the weigh coefficients is divided as a dividend,

the method comprising:

specifying, by the analysis unit, designation of a storage circuit group used in the product-sum operation from the byte stream;

controlling, by the operation control unit, the selector on the basis of the designation; and

executing, by the product-sum operation circuit, the product-sum operation using the plurality of addition multipliers held in a storage circuit group connected via the selector,

wherein the exponent of each of the input values is expressed by a fraction having a predetermined divisor in a denominator,

the exponent of each of the weigh coefficients is expressed by a fraction having the divisor in a denominator, and

each of the addition multipliers is a floating-point number with an exponent part having a radix of 2. Reference Signs List

| | |
|---|---|
| 10 | INFORMATION PROCESSING APPARATUS |
| 110 | INPUT UNIT |
| 120 | OPERATION UNIT |
| 130 | STORAGE UNIT |
| 140 | OUTPUT UNIT |
| 200, 300, 400, 500 | PRODUCT-SUM OPERATION CIRCUIT |
| 530, 530A, 530B | STORAGE CIRCUIT GROUP |
| 1530 | MEMORY |
| 1530a, 1530b | TABLE |
| 1531, 1532 | SELECTOR |
| 2001, 2102 | POWER EXPRESSION CONVERSION UNIT |
| 2002, 2104 | MULTIPLICATION UNIT |
| 2003 | VARIABLE BUFFER |
| 2004 | COEFFICIENT MEMORY |
| 2005 | OPERATION RESULT BUFFER |
| 2100 | PRODUCT-SUM OPERATION CIRCUIT |
| 2101 | PRODUCT-SUM OPERATION UNIT |
| 2103 | POWER EXPRESSION TABLE |
| 2202, 2204 | POWER EXPRESSION CONVERSION TABLE |
| 2203 | POWER EXPRESSION TABLE |
| 3210 | INTEGER SUBTRACTOR |
| 3220 | SHIFT OPERATOR |
| 3230 | STORAGE CIRCUIT GROUP |
| 3240 | COMPARATOR GROUP |
| 3250 | PRIORITY ENCODER |
| 3260 | INTEGER ADDER |
| 3270 | COMPARATOR |
| 3280 | SELECTOR |
| 3540 | POWER OF 2 MULTIPLICATION OPERATOR |
| 3560 | FLOATING-POINT ADDER-SUBTRACTOR |
| 4001 | SENSOR I/F |
| 4002 | COEFFICIENT |

| 4003, 4009, 4013 | POWER EXPRESSION CONVERSION UNIT |
| 4004, 4014 | STORAGE/CONVERSION UNIT |
| 4005 | INPUT FEATURE MAP MEMORY |
| 4006 | COEFFICIENT MEMORY |
| 4007 | ANALYSIS UNIT |
| 4008 | EXTRACTION UNIT |
| 4010 | OPERATION CONTROL UNIT |
| 4011 | OPERATOR ARRAY |
| 4015 | OUTPUT FEATURE MAP MEMORY |

**Claims**

1. An information processing apparatus comprising:

   a product-sum operation circuit configured to execute a product-sum operation on the basis of a plurality of input values quantized by power expression and a plurality of weigh coefficients quantized by power expression corresponding to the respective input values,
   wherein an exponent of each of the input values is expressed by a fraction having a predetermined divisor in a denominator,
   an exponent of each of the weigh coefficients is expressed by a fraction having the divisor in a denominator,
   the product-sum operation circuit executes the product-sum operation using a plurality of addition multipliers based on a remainder when a value obtained by adding a numerator related to the exponent of each of the input values and a numerator related to the exponent of each of the weigh coefficients is divided as a dividend, and
   each of the addition multipliers is a floating-point number with an exponent part having a radix of 2.

2. The information processing apparatus according to claim 1, further comprising: a storage unit configured to hold the plurality of addition multipliers.

3. The information processing apparatus according to claim 2, further comprising: an operator configured to perform an operation of a power of 2 on the addition multipliers stored in the storage unit on the basis of a value obtained by converting a quotient by the division into an integer.

4. The information processing apparatus according to claim 3, wherein a word length of an exponent part of a floating-point number in the operator is determined on the basis of a word length of the numerator related to the exponent of each of the input values, a word length of the numerator related to the exponent of each of the weigh coefficients, and the predetermined divisor.

5. The information processing apparatus according to claim 3, wherein the operator executes addition or subtraction with respect to the exponent part of the floating-point number having a radix of 2.

6. The information processing apparatus according to claim 2, wherein
   the storage unit includes:

   a storage circuit group including a plurality of rewritable storage circuits;
   a memory that holds a plurality of first addition multipliers and a plurality of second addition multipliers different from the plurality of first addition multipliers; and
   a selector that selectively writes one of the plurality of first addition multipliers and the plurality of second addition multipliers held in the memory to the storage circuit group.

7. The information processing apparatus according to claim 2, wherein
   the storage unit includes:

   a first storage circuit group that holds a plurality of first addition multipliers;
   a second storage circuit group that holds a plurality of second addition multipliers different from the plurality of first addition multipliers; and
   a selector that switches a storage circuit group connected to the product-sum operation circuit to one of the first storage circuit group and the second storage circuit group.

8. The information processing apparatus according to claim 6, wherein

   the plurality of first addition multipliers are values expressed by a power of 2, and
   the plurality of second addition multipliers are linearly expressed values.

9. The information processing apparatus according to claim 2, wherein the storage unit holds the plurality of addition multipliers and a value obtained by 0.5 rounding of each of the plurality of addition multipliers along an expression function of expression of a power of 2.

10. An information processing system comprising:

    an analysis unit configured to analyze a byte stream;
    an operator array including a product-sum operation circuit that executes a product-sum operation on the basis of a plurality of input values quantized by power expression and a plurality of weigh coefficients quantized by power expression corresponding to the respective input values; and
    an operation control unit configured to control the operator array on the basis of an analysis result by the analysis unit,
    wherein the operator array further includes a storage unit that holds a plurality of addition multipliers,
    the storage unit includes:

    a first storage circuit group that holds a plurality of first addition multipliers;
    a second storage circuit group that holds a plurality of second addition multipliers different from the plurality of first addition multipliers; and
    a selector that switches a storage circuit group connected to the product-sum operation circuit to one of the first storage circuit group and the second storage circuit group,
    the byte stream includes designation of a storage circuit group used in the product-sum operation,
    the operation control unit controls the selector on the basis of the designation,
    an exponent of each of the input values is expressed by a fraction having a predetermined divisor in a denominator,
    an exponent of each of the weigh coefficients is expressed by a fraction having the divisor in a denominator,
    the product-sum operation circuit executes the product-sum operation using a plurality of addition multipliers based on a remainder when a value obtained by adding a numerator related to the exponent of each of the input values and a numerator related to the exponent of each of the weigh coefficients is divided as a dividend, and
    each of the addition multipliers is a floating-point number with an exponent part having a radix of 2.

11. An information processing method executed by an information processing system including: an analysis unit configured to analyze a byte stream; an operator array including a product-sum operation circuit that executes a product-sum operation on the basis of a plurality of input values quantized by power expression and a plurality of weigh coefficients quantized by power expression corresponding to the respective input values; and an operation control unit configured to control the operator array on the basis of an analysis result by the analysis unit, in which the operator array further includes a storage unit that holds a plurality of addition multipliers, the storage unit includes: a first storage circuit group that holds a plurality of first addition multipliers; a second storage circuit group that holds a plurality of second addition multipliers different from the plurality of first addition multipliers; and a selector that switches a storage circuit group connected to the product-sum operation circuit to one of the first storage circuit group and the second storage circuit group, the product-sum operation circuit executing the product-sum operation using a plurality of addition multipliers based on a remainder when a value obtained by adding a numerator related to an exponent of each of the input values and a numerator related to the exponent of each of the weigh coefficients is divided as a dividend,
    the method comprising:

    specifying, by the analysis unit, designation of a storage circuit group used in the product-sum operation from the byte stream;
    controlling, by the operation control unit, the selector on the basis of the designation; and
    executing, by the product-sum operation circuit, the product-sum operation using the plurality of addition multipliers held in a storage circuit group connected via the selector,
    wherein the exponent of each of the input values is expressed by a fraction having a predetermined divisor in a denominator,

the exponent of each of the weigh coefficients is expressed by a fraction having the divisor in a denominator, and each of the addition multipliers is a floating-point number with an exponent part having a radix of 2.

# FIG.1

# FIG.2

# FIG.3

# FIG.4

# FIG.5

# FIG.6

# FIG.7

10

INFORMATION PROCESSING APPARATUS

130

STORAGE UNIT

110

INPUT UNIT

120

OPERATION UNIT

140

OUTPUT UNIT

# FIG.8

EP 4 024 198 A1

# FIG.9

~WT

| | | |
|---|---|---|
| pointer TO Cell(j=1) | + | 1 |
| Offset = 1 | + | 0 |
| Offset = 2 | − | 0 |
| Offset = 1 | + | 0 |
| ⋮ | ⋮ | ⋮ |
| pointer TO Cell(j=N) | − | 1 |

# FIG.10

$q_3$

$(0, 0, s_3)$

$(s_1 \alpha^{n_1-n_3}, s_2 \alpha^{n_2-n_3}, s_3)$

$(s_1 \alpha^{n_1-n_3}, s_2 \alpha^{n_2-n_3}, 0)$

$(s_1 \alpha^{n_1-n_2}, 0, 0)$

$q_1$

$(0, s_2, 0)$

$(s_1 \alpha^{n_1-n_2}, s_2, 0)$

$q_2$

# FIG.11

$q_j$ AXIS

$$(...((s_1q_1\alpha^{n_1-n_2}+s_2q_2)\alpha^{n_2-n_3}+s_3q_3)\alpha^{n_3-n_4}+\cdots q_{j-1})\alpha^{n_{j-1}-n_j}+s_j q_j$$

1

$\Delta\theta_1$

$\Delta\theta_2$

AXIS OBTAINED BY PROJECTING WEIGHT VECTOR ONTO $q_1$, $q_2$, $q_{j-1}$ SPACE

$\alpha$ | 1 | 1 | 1/$\alpha$

# FIG.12

deg

$\alpha$

# FIG.13

$$\left(...\left(\left(s_1 q_1 \alpha^{n_1-n_2}+s_2 q_2\right) \alpha^{n_2-n_3}+s_3 q_3\right) \alpha^{n_3-n_4}+\cdots q_{N-1}\right) \alpha^{n_{N-1}}+s_N q_N$$

$q_N$ AXIS

$\Delta \theta$

1

$\alpha | 1$ | | $1/\alpha$

AXIS OBTAINED BY PROJECTING WEIGHT VECTOR ONTO $q_1$, $q_2$, $q_{N-1}$ SPACE

# FIG.14

# FIG.15

# FIG.16

# FIG.17

EP 4 024 198 A1

# FIG.18

# FIG.19

32

32 [ ]

- - - - - - 32x32x3

k=3x3x64

| Convolution |
| Batch Normalization |
| Relu |

- - - - - - 32x32x64

ResBlock
without Max Pooling

- - - - - - 32x32x64

ResBlock
with Max Pooling

- - - - - - 16x16x64

ResBlock
without Max Pooling

- - - - - - 16x16x64

k=4x4

k=1024x10

| Average Pooling |
| Affine |

- - - - - - 10

Softmax

# FIG.20

k=1x1x32
- Convolution
- Batch Normalization
- Relu

k=3x3x32
- Convolution
- Batch Normalization
- Relu

k=1x1x64
- Convolution
- Batch Normalization

ResBlock

Relu

# FIG.21

# FIG.22

# FIG.23

# FIG.24

# FIG.25

# FIG.26

# FIG.27

# FIG.28

# FIG.29

INPUT VALUE

RA

RB

A

B

SYMBOL

$\gamma_m$

m-2    m-1    m    m+1    m+2

# FIG.30

2001

POWER EXPRES- SION CONVER- SION UNIT

2002

$$\times 2^{-\frac{1}{2}^{p}}$$

2100

2101

PRODUCT- SUM OPERA- TION UNIT

2102

POWER EXPRES- SION CONVER- SION UNIT

POWER EXPRESSION TABLE (p)

2103

2104

$$\times 2^{-\frac{1}{2}^{p}}$$

VARIABLE BUFFER (POWER EXPRESSION)

2003

COEFFICIENT MEMORY (POWER EXPRESSION)

2004

OPERATION RESULT BUFFER (POWER EXPRESSION)

2005

# FIG.31

2001

POWER EXPRES- SION CONVER- SION UNIT

POWER EXPRESSION CONVERSION TABLE (p)

2202

2100

2101

PRODUCT- SUM OPERATION UNIT

2102

POWER EXPRES- SION CONVER- SION UNIT

POWER EXPRESSION TABLE (p)

2103

POWER EXPRESSION CONVERSION TABLE (p)

2204

VARIABLE BUFFER (POWER EXPRESSION)

2003

COEFFICIENT MEMORY (POWER EXPRESSION)

2004

OPERATION RESULT BUFFER (POWER EXPRESSION)

2005

# FIG.32

# FIG.33

# FIG.34

# FIG.35

# FIG.36

INPUT × 0 →

CONVOLUTION LAYER

↑
COEFFICIENT w1

POOLING LAYER

ACTIVATION LAYER (ReLU)

→ LAYER OUTPUT × 1

CONVOLUTION LAYER

↑
COEFFICIENT w2

POOLING LAYER

ACTIVATION LAYER (ReLU)

→ LAYER OUTPUT × 2

CONVOLUTION LAYER

↑
COEFFICIENT w3

POOLING LAYER

ACTIVATION LAYER (ReLU)

→ LAYER OUTPUT × 3

EP 4 024 198 A1

# FIG.37

L1coef[-82,]$map1

# FIG.38

L2coef[-69,]$map1

# FIG.39

L2coef[-69,]$map1

# FIG.40

# FIG.41

# FIG.42

# FIG.43

# FIG.44

| | | | | 0 | 1 | 2 | 3 | 4 | 5 | 6 | 7 |
|---|---|---|---|---|---|---|---|---|---|---|---|
| | | | | 000 | 001 | 010 | 011 | 100 | 101 | 110 | 111 |
| + | 0 | $\times 2^0$ | 0000 | $\left(\sqrt[8]{2}\right)^0 = 1$ | $\left(\sqrt[8]{2}\right)^{-1}$ | $\left(\sqrt[8]{2}\right)^{-2}$ | $\left(\sqrt[8]{2}\right)^{-3}$ | $\left(\sqrt[8]{2}\right)^{-4}$ | $\left(\sqrt[8]{2}\right)^{-5}$ | $\left(\sqrt[8]{2}\right)^{-6}$ | $\left(\sqrt[8]{2}\right)^{-7}$ |
| | | $\times 2^{-1}$ | 0001 | $\left(\sqrt[8]{2}\right)^{-8}$ $= 5.000E-01$ | $\left(\sqrt[8]{2}\right)^{-9}$ $= 4.585E-01$ | $\left(\sqrt[8]{2}\right)^{-10}$ $= 4.204E-01$ | $\left(\sqrt[8]{2}\right)^{-11}$ $= 3.856E-01$ | $\left(\sqrt[8]{2}\right)^{-12}$ $= 3.536E-01$ | $\left(\sqrt[8]{2}\right)^{-13}$ $= 3.242E-01$ | $\left(\sqrt[8]{2}\right)^{-14}$ $= 2.973E-01$ | $\left(\sqrt[8]{2}\right)^{-15}$ $= 2.726E-01$ |
| | | $\times 2^{-2}$ | 0010 | $2.500E-01$ | $2.293E-01$ | $2.102E-01$ | $1.928E-01$ | $1.768E-01$ | $1.621E-01$ | $1.487E-01$ | $1.363E-01$ |
| | | $\vdots$ | $\vdots$ | $\vdots$ | $\vdots$ | $\vdots$ | $\vdots$ | $\vdots$ | $\vdots$ | $\vdots$ | $\vdots$ |
| | | $\times 2^{-15}$ | 1111 | $3.052E-05$ | $2.798E-05$ | $2.566E-05$ | $2.353E-05$ | $2.158E-05$ | $1.979E-05$ | $1.815E-05$ | $0$ |
| − | 1 | $\times 2^0$ | 0000 | $-1.000E+00$ | $-9.170E-01$ | $-8.409E-01$ | $-7.711E-01$ | $-7.071E-01$ | $-6.484E-01$ | $-5.946E-01$ | $-5.453E-01$ |
| | | $\times 2^{-1}$ | 0001 | $-5.000E-01$ | $-4.585E-01$ | $-4.204E-01$ | $-3.856E-01$ | $-3.536E-01$ | $-3.242E-01$ | $-2.973E-01$ | $-2.726E-01$ |
| | | $\vdots$ | $\vdots$ | $\vdots$ | $\vdots$ | $\vdots$ | $\vdots$ | $\vdots$ | $\vdots$ | $\vdots$ | $\vdots$ |
| | | $\times 2^{-15}$ | 1111 | $-3.052E-05$ | $-2.798E-05$ | $-2.566E-05$ | $-2.353E-05$ | $-2.158E-05$ | $-1.979E-05$ | $-1.815E-05$ | $0$ |

# FIG.45

### Numeric Format Information

**s.e.m format**

sign information    Mantissa Bit width

| s | e | m |
|---|---|---|

exponent bit width

**s.B.Q format**

sign information     Q

| s | B | Q |
|---|---|---|

Numeric Data Bit Width

### Numeric Data Container

sign information     mantissa

exponent

# FIG.46

Basic Structure (Continue=false, Skip Header=false)

Numeric Format Information

SkipHeader

Continue

Number

Custom

Padding
(if required)

Payload

Numeric Data

# FIG.47

Continue Structure (Continue=true, Skip was false)

Continue

Payload

Number

Padding
(if required)

Numeric Data

# FIG.48

Extended Structure(Continue=false, Skip Header=true)

Numeric Format Information

SkipHeader

Continue

Reserved

Number

Custom

Payload Recursive Number

# FIG.49

Payload(Skip was true)

Payload

Padding
(if required)

Numeric Data

# FIG.50

Custom Structure(Continue=false, Skip Header=true, Custom=true)

# FIG.51

# FIG.52

Basic Structure（Continue=false, Skip Header=false）

SkipHeader:1
Continue:1 │ sign:1
Q:3

Number:2 │ B:4 Payload:19
Custom:1

# FIG.53

Continue Structure（Continue=true, Skip was false）

Continue:1 Payload:29

Number:2

# FIG.54

Extended Structure (Continue=false, Skip Header=true)

SkipHeader:1
Continue:1 sign:1    Q:3    Extended Packet Field

Number:2    B:4    Reserved:11    Payload recursive
Custom:1                   Number:8

# FIG.55

Payload (Skip was true)

Payload: 32

# FIG.56

Custom Structure (Continue=false, Skip Header=true, Custom=true)

PayloadSize:2
SkipHeader:1
Continue:1
B:5
Number:6

Version:2
sign:1
Q:5
Payload Recursive
Number:8
Custom:1

# FIG.57

(a)

Payload: 32

Payload:32bit

(b)

Payload: 64

Payload:64bit

(c)

Payload: 126

Payload:128bit

# FIG.58

EP 4 024 198 A1

FIG.59

# FIG.60

# FIG.61

```
Random          Modulation        Up         Filter: RRC
0/1                                x8         R=0.5, 63tap, Float
```

```
BER             De-Modulation     Down       Filter: RRC          ADC        Normalize
Counter                           /8         R=0.5, 63tap, Type    Type       {-1 ~ +1}
```

```
                                                                              AWGN
```

# FIG.62

EP 4 024 198 A1

# FIG.63

———— Float    — — — Linear—7    ———— DNN(2,32)    ———— DNN(3,32)    — – — – DNN(4,32)

BPSK

BER

SNR [dB]

# FIG.64

Legend: Float — Linear-7 — DNN(2,32) — DNN(3,32) — DNN(4,32)

QPSK

BER vs SNR [dB]

# FIG.65

Legend: Float — Linear-7 — DNN(2,32) — DNN(3,32) — DNN(4,32)

QPSK

BER vs SNR [dB]

EP 4 024 198 A1

# FIG.66

# FIG.67

EP 4 024 198 A1

—— Float    ----- Linear-7    —·—· DNN(2,32)    ——— DNN(3,32)    ----- DNN(4,32)

16QAM

# FIG.68

## INTERNATIONAL SEARCH REPORT

| International application No. |
|---|
| PCT/JP2020/027324 |

A. CLASSIFICATION OF SUBJECT MATTER

G06F 7/483(2006.01)i; G06N 3/063(2006.01)i; G06F 17/10(2006.01)i; G06F 17/16(2006.01)i

FI: G06F17/16 M; G06F7/483; G06F17/10 S; G06N3/063

According to International Patent Classification (IPC) or to both national classification and IPC

B. FIELDS SEARCHED

Minimum documentation searched (classification system followed by classification symbols)

G06F7/483; G06N3/063; G06F17/10; G06F17/16

Documentation searched other than minimum documentation to the extent that such documents are included in the fields searched

| | |
|---|---|
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2019/064774 A1 (SONY CORP.) 04.04.2019 (2019-04-04) paragraphs [0075]-[0119], [0178], fig. 16-17 | 1-9 |
| A | | 10-11 |
| A | TANG, Chuan Zhang et al., "Multilayer feedforward neural networks with single powers-of-two weights", IEEE Transactions on Signal Processing, August 1993, vol. 41, issue: 8, pp. 2724-2727, whole document | 1-11 |
| A | JP 4-51384 A (CANON INC.) 19.02.1992 (1992-02-19) page 2, upper right column, line 5 to lower left column, line 15 | 1-11 |

☒ Further documents are listed in the continuation of Box C.     ☒ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 12 October 2020 (12.10.2020) | 20 October 2020 (20.10.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

# EP 4 024 198 A1

**INTERNATIONAL SEARCH REPORT**

| International application No. |
| --- |
| PCT/JP2020/027324 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | MIYASHITA, Daisuke et al., "Convolutional Neural Networks using Logarithmic Data Representation", [online], v2, arXiv, 17 May 2016, pp. 1-10, [retrieved on 12 October 2020], Retrieved from the internet: <URL:https://arxiv.org/pdf/1603.01025.pdf>, whole document | 1-11 |

Form PCT/ISA/210 (continuation of second sheet) (January 2015)

| | | International application No. |
|---|---|---|
| | | PCT/JP2020/027324 |

| Patent Documents referred in the Report | Publication Date | Patent Family | Publication Date |
|---|---|---|---|
| WO 2019/064774 A1 | 04 Apr. 2019 | EP 3543873 A1<br>paragraphs [0066]-[0104], fig. 16-17<br>CN 110036384 A | |
| JP 4-51384 A | 19 Feb. 1992 | US 5719955 A<br>column 7, line 33 to column 8, line 10<br>DE 69130656 T2 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **MATTHIEU COURBARIAUX.** *BinaryConnect: Training Deep Neural Networks with binary weights during propagations,* 02 November 2015, https://arxiv.org/pdf/1511.00363.pdf

- **DAISUKE MIYASHITA.** *Convolutional Neural Networks using Logarithmic Data Representation,* 03 March 2016, https://arxiv.org/pdf/1603.01025.pdf